(19) Europäisches Patentamt / European Patent Office / Office européen des brevets

(11) **EP 2 438 707 B1**

(12) **EUROPÄISCHE PATENTSCHRIFT**

(45) Veröffentlichungstag und Bekanntmachung des Hinweises auf die Patenterteilung:
**03.04.2013   Patentblatt 2013/14**

(21) Anmeldenummer: **10730461.0**

(22) Anmeldetag: **07.07.2010**

(51) Int Cl.:
**H04L 9/32** *(2006.01)*    **H04L 29/06** *(2006.01)*

(86) Internationale Anmeldenummer:
**PCT/EP2010/059755**

(87) Internationale Veröffentlichungsnummer:
**WO 2011/003953 (13.01.2011 Gazette 2011/02)**

(54) **PSEUDONYMISIERTE AUTHENTIFIZIERUNG**

PSEUDONYMOUS AUTHENTICATION

AUTHENTIFICATION PSEUDONYMISÉE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **07.07.2009   DE 102009032043**

(43) Veröffentlichungstag der Anmeldung:
**11.04.2012   Patentblatt 2012/15**

(73) Patentinhaber: **Fraunhofer-Gesellschaft zur Förderung der angewandten Forschung e.V.
80686 München (DE)**

(72) Erfinder:
• **AICHROTH, Patrick**
  **99084 Erfurt (DE)**
• **MANN, Sebastian**
  **98527 Stuhl (DE)**
• **GRUSCHWITZ, Michael**
  **99099 Erfurt (DE)**
• **HASSELBACH, Jens**
  **99084 Erfurt (DE)**

(74) Vertreter: **Hersina, Günter et al
Schoppe, Zimmermann, Stoeckeler & Zinkler
Postfach 246
82043 Pullach (DE)**

(56) Entgegenhaltungen:
**US-A1- 2006 031 301**

• **BO GYEONG KANG ET AL: "A Model for Privacy Preserving Metering Service", ELECTRICAL ENGINEERING, 2008. ICEE 2008. SECOND INTERNATIONAL CONFERENCE ON, IEEE, PISCATAWAY, NJ, USA, 25. März 2008 (2008-03-25), Seiten 1-2, XP031295271, ISBN: 978-1-4244-2292-0**
• **CHEN L: "ACCESS WITH PSEUDONYMS", CRYPTOGRAPHY: POLICY AND ALGORITHMS. INTERNATIONAL CONFERENCE, XX, XX, 3. Juli 1995 (1995-07-03), Seiten 232-243, XP001097325,**
• **DAVID MOLNAR ET AL: "A Scalable, Delegatable Pseudonym Protocol Enabling Ownership Transfer of RFID Tags", 1. Januar 2006 (2006-01-01), SELECTED AREAS IN CRYPTOGRAPHY LECTURE NOTES IN COMPUTER SCIENCE;;LNCS, SPRINGER, BERLIN, DE, PAGE(S) 276 - 290, XP019029546, ISBN: 978-3-540-33108-7 das ganze Dokument**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**EP 2 438 707 B1**

**Beschreibung**

Die vorliegende Erfindung bezieht sich auf eine Möglichkeit zur pseudonymisierten Authentifizierung einer Nutzerentität.

In sehr vielen Anwendungsbereichen ist eine Authentifizierung von Nutzern erforderlich, um den Zugriff auf Dienste und Ressourcen zu kontrollieren und ggf. die Authentizität der von den Nutzern bereitgestellten Informationen zu überprüfen. Typischerweise werden hierfür häufig Verfahren zur "Authentifizierung durch Identifikation" eingesetzt. Diese überprüfen nach erfolgter Registrierung (bei der die reale Identität mehr oder weniger gewissenhaft überprüft und an einen Anmeldenamen geknüpft wird) die Identität des Nutzers über die Anmeldung. Sie erlauben über den Einsatz von kryptographischen Standardverfahren, v.a. digitalen Signaturen, auch eine Authentifizierung von Informationen.

Zentrales Problem dieser Verfahren ist allerdings, dass von den Anmelde- und Nutzungsdaten grundsätzlich immer wieder auf die realen Identitäten der Nutzer geschlossen werden kann. Wie spektakuläre Fälle der jüngeren Vergangenheit immer wieder gezeigt haben, kann dieser Fall nicht nur durch Absicht, sondern auch durch die Entwendung von Informationen entstehen. Da Menge und Wertigkeit von Anmelde-, Nutzer- und Nutzungsdaten laufend wachsen und die Informationserhebung auch immer mehr sensitive Bereiche erfasst, nehmen auch die Fälle der unerlaubten Verwendung und kriminellen Entwendung solcher Informationen zu. Gefragt sind daher zunehmend auch technische Verfahren, die einen nachweisbaren Schutz dieser empfindlichen Informationen ermöglichen, d.h. Verfahren, die einen Rückschluss auf die realen Identitäten auch bei einer für den Nutzer ungünstigen Interessenlage der anderen Akteure in den entsprechenden Systemen nicht ermöglichen.

Solche Verfahren zur Anonymisierung existieren bereits in vielen Formen und Varianten, z.B. in Form von sog. Verfahren zur "Authentifizierung ohne Identifikation" (vgl. Lysyanskaya, [Lys07]). Auch [US2006/0031301] offenbart ein proxy-basiertes System zur Verwaltung von Benutzerpseudonymen. [Bo08] schlägt unter anderem die Anwendung des Oblivious-Transfer-Protokolls für die Implementierung eines auf Pseudonymen basierendes DRM (Digital Rights Management) Verwaltungssystems vor. Allerdings haben sie einen entscheidenden Nachteil: Sie verhindern nicht nur den Rückschluss auf die reale Identität, sondern auch die Differenzierung von Nutzern. Diese ist aber für viele Anwendungsfälle unentbehrlich, u.a. für Data Mining, Collaborative Filtering, Abstimmungsverfahren und viele andere Anwendungen.

Wünschenswert wäre vielmehr eine **Differenzierung und Authentifizierung von Nutzern** und den durch sie generierten Daten bei gleichzeitigem **Schutz der Privatsphäre** selbst dann, wenn andere Akteure ein Interesse am Missbrauch der Nutzerdaten haben. Interessant wäre dies insbesondere für zwei Anwendungsbereiche: Einerseits für solche Anwendungsbereiche, bei denen aufgrund der oben beschriebenen Problematik auf die Authentifizierbarkeit (sprich, Zuverlässigkeit) von Informationen zugunsten des Datenschutzes verzichtet wird, z.B. bei Data Mining wo über Kontextinformationen nur indirekt zwischen Nutzern differenziert wird. In diesen Fällen ließe sich durch eine Möglichkeit zur pseudonymen Identifikation v.a. die Zuverlässigkeit der Daten verbessern (und nebenbei auch der Datenschutz, denn oft wird die Privatsphäre nur unzureichend geschützt). Andererseits für Anwendungsbereiche, bei denen aufgrund der oben beschriebenen Problematik auf den Datenschutz im o.g. Sinne verzichtet wird oder verzichtet werden muss, weil eine Authentifizierung unbedingt erforderlich ist. In diesen Fällen ließen sich mittels pseudonymer Identifikation die Erfordernisse erreichen, bei gleichzeitiger und nachweisbarer Gewährleistung von Datenschutz. Dies kann sinnvoll sein um die Attraktivität von Anwendungen für Nutzer zu erhöhen, oder schlicht erforderlich, um gesetzliche Bestimmungen einzuhalten.

Wünschenswert sind im o.g. Sinne also folgende **drei Ziele:**

1. Authentifizierung von Nutzern (und ggf. der von ihnen erzeugten Daten),
2. Möglichkeit zur zuverlässigen Differenzierung zwischen Nutzern (und ggf. der von ihnen erzeugten Daten) z.B. für Personalisierungszwecke, Data Mining, Voting, Zuordnung von Nutzern zu Gruppen, zielgerichtete Autorisierung des Zugriffs auf Dienste und Ressourcen, usw.
3. Schutz der Privatsphäre (auch unter der Annahme, dass Daten bei Systemakteuren absichtlich oder unabsichtlich "abhanden" kommen und so von interessierter Stelle kombiniert und missbraucht werden können) i.S. einer Verhinderung von Rückschlüssen auf die reale Identität eines Nutzers.

Mit aktuellen Verfahren sind diese Ziele nicht gleichzeitig zu erreichen:

- Bei den gängigen Nutzerauthentifizierungsverfahren auf Basis von "Authentifizierung durch Identifikation" lassen sich zwar die Punkte (1) und (2) erfüllen. Allerdings bestehen hier erhebliche Probleme bzw. Risiken im Bereich des Datenschutzes, da sich die realen Identitäten von Nutzern ermitteln lassen: Entweder direkt, oder - im Fall von organisatorischen Schutzmaßnahmen - im durchaus realistischen Fall des Datendiebstahls durch Dritte oder Datenverkaufs bei Systemakteuren.
- Andererseits existieren Verfahren, die eine völlig anonyme Nutzerauthentifizierung ermöglichen (vgl. ZK-Verfahren), und damit (1) und (3) erfüllen, die aber keine Differenzierung zwischen Nutzern mehr erlauben und damit für viele

2

Anwendungsfälle nicht verwendbar sind.

- Letztlich gibt es für die genannten Anwendungsfälle (z.B. Data Mining) wiederum Verfahren, die über "Hilfskonstruktionen" und Kontextinformationen (z.B. IP-Adressen) eine Differenzierung zwischen Nutzern ermöglichen und dabei die Privatsphäre mehr oder weniger befriedigend schützen, also (2) und - allerdings oft eingeschränkt - (3) erfüllen, die aber keine Authentifizierung von Nutzern und deren Daten ermöglichen und insofern für bestimmte Anwendungsfälle nicht oder nur eingeschränkt nutzbar sind.

Ziel des beschriebenen Verfahrens ist im gegensatz hierzu, die genannten Ziele gleichzeitig zu erfüllen. Für die weitere Darstellung werden insofern hierfür folgenden **zwingende Anforderungen** formuliert:

a) Authentifizierung: Ein Dienst kann bei Anmeldung prüfen, ob der Nutzer derjenige ist, der er vorgibt zu sein (und hierfür im Vorfeld einen Identifikationsnachweis erbracht hat).
b) Schutz der Privatsphäre: Kein Systemakteur außer dem Nutzer, insbesondere nicht der Dienst, bei dem sich der Nutzer anmeldet, kann Rückschlüsse auf die reale Identität des Nutzers machen.
c) Pseudonymisierung: Dem Nutzer kann bei Anmeldung ein eindeutiges Pseudonym (ID) zugeordnet werden, das zur Differenzierung zwischen Nutzern und zur Autorisierung bestimmter Aktionen verwendet werden kann. Niemandem außer dem Nutzer soll (siehe oben) möglich sein, eine Verbindung zwischen realer Identität und dem Pseudonym herzustellen.

Darüber hinaus ist es grundsätzlich sinnvoll, wenn das Verfahren folgende **optionale Anforderungen** adressiert:

d) Wiederverwertung existierender Standardverfahren zur Authentifizierung, z.B. qualifizierter Zertifikate.
e) Wiederverwertbarkeit der Autorisierungsinformationen: Eine einmalige Registrierung soll eine Anmeldung bei mehreren verschiedenen Diensten ermöglichen.

In anderen Worten ausgedrückt, wäre ein Verfahren zur Generierung und Verwendung eindeutiger Pseudonyme zu Authentifizierungszwecken wünschenswert, welches einerseits nachweislich an reale Identitäten (von Nutzern, Geräten oder Software) gebunden ist, andererseits aber keine nachträgliche Rückschlüsse auf die realen Identitäten ermöglicht.
Die Aufgabe der vorliegenden Erfindung besteht deshalb darin, ein Schema zur pseudonymisierten Anmeldung zu schaffen, das die obigen Anforderungen an Authentifizierung, Nutzerdifferenzierung und Privatsphärenschutz erfüllt. Diese Aufgabe wird durch Vorrichtungen gemäß Anspruch 1, 3, 10, oder 16 und Verfahren gemäß einem der Ansprüche 17 bis 20 gelöst.
Ein Kerngedanke der vorliegenden Erfindung besteht darin, erkannt zu haben, dass ein OT- bzw. Oblivious Transfer-Protokoll dazu verwendet werden kann, ein Pseudonym-Token aus einer Liste von Pseudonym-Tokens an Nutzerentitäten, wie z.B. Personen, Geräte bzw. Softwareprodukte, auszugeben, so dass es möglich ist, durch vorhergehende Identifikation der jeweiligen Nutzerentitäten und Markierung von Pseudonym-Tokens als benutzt, sobald sie nach Ausgabe mittels des OT-Protokolls zur Authentifizierung verwendet werden, die obigen Ziele zu erreichen.
Bevorzugte Ausführungsbeispiele der vorliegenden Erfindung werden nachfolgend Bezug nehmend auf die beiliegenden **Zeichnungen** näher erläutert. Es zeigen:

Fig. 1    ein Blockschaltbild eines Szenarios mit einem System zur pseudonymisierten Anmeldung von Nutzern und einer Benutzeranmeldeschnittstelle gemäß einem Ausführungsbeispiel;

Fig. 2    ein schematisches Ablaufprotokoll, bei dem das Szenario in Fig. 1 gemäß einem Ausführungsbeispiel durchgeführt wird;

Fig. 3    ein weiteres Ablaufprotokoll, bei dem das Szenario von Fig. 1 gemäß einem Ausführungsbeispiel ausgeführt wird;

Fig. 4    ein Sequenzdiagramm der ersten Variante der Vorbereitungsphase eines Authentifizierungsprotokolls (Authentifizierungsprotokoll 1) gemäß einem Ausführungsbeispiel;

Fig. 5    ein Sequenzdiagramm eines Authentifizierungsprotokolls (Authentifizierungsprotokoll 1 mit der "zweiten Variante" der Vorbereitungsphase, siehe unten) gemäß einem Ausführungsbeispiel;

Fig. 6    ein Sequenzdiagramm eines Authentifizierungsprotokolls (Authentifizierungsprotokoll 1 mit der "ersten Variante" der Vorbereitungsphase, siehe unten) gemäß einem Ausführungsbeispiel;

Fig. 7    ein Sequenzdiagramm zum sog. *Revenue Sharing* gemäß einem Ausführungsbeispiel;

Fig. 8    ein Sequenzdiagramm der Stimmabgabe zum *Revenue Sharing* gemäß einem Ausführungsbeispiel;

Fig.9    ein Sequenzdiagramm eines *Ohta-Okamoto-Zero-Knowledge-Protokolls* gemäß einem Ausführungsbeispiel; und

Fig. 10    ein Sequenzdiagramm eines *Oblivious Transfer* Protokolls gemäß einem Ausführungsbeispiel.

**Systemübersicht und Akteure**

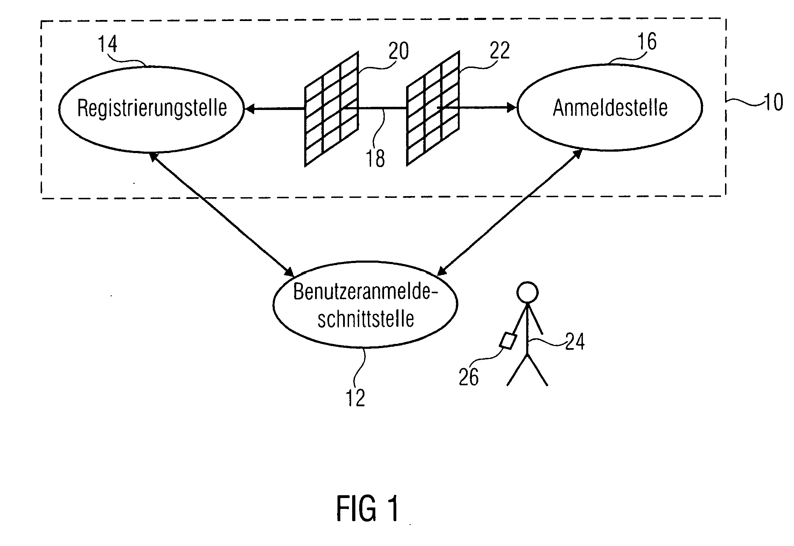

Fig. 1 zeigt ein Szenario bzw. eine Umgebung zur pseudonymisierten Anmeldung von Nutzern gemäß einem Ausführungsbeispiel der vorliegenden Anmeldung. Das System ist allgemein mit dem Bezugszeichen 10 angezeigt. Das System 10 ist dazu vorgesehen, dass sich ihm gegenüber Nutzer pseudonymisiert anmelden können, d.h. unter Wahrung ihrer Privatsphäre bzw. wahren Identität, bei gleichzeitig aber der Beibehaltung der NutzerAuthentifizierung und Bewahrung der Möglichkeit der zuverlässigen Nutzerdifferenzierung. Nutzer nutzen zur Authentifizierung bzw. Anmeldung gegenüber dem System 10 eine Benutzerschnittstelle 12. Der Übersichtlichkeit halber ist in Fig. 1 nur eine Benutzerschnittstelle 12 dargestellt.
Das System 10 umfasst beispielsweise einen oder mehrere Computer, wie z.B. ein Computemetzwerk, sowie ein entsprechendes Programm, das die Funktionalitäten des Systems 10 implementiert, die im Folgenden noch näher erörtert werden. Insbesondere können die Funktionalitäten und Aufgaben des Systems 10 auf zwei Entitäten aufgeteilt sein, wie es ebenfalls im Folgenden noch näher erörtert werden wird, nämlich eine Registrierungsstelle 14 und eine Anmeldestelle 16. Letztere können ihrerseits jeweils wiederum einen oder mehrere Computer oder aber ein Computernetzwerk aufweisen, auf denen ein jeweiliges Programm abläuft, das den jeweiligen Teil der Funktionalitäten des Systems 10 übernimmt. Registrierungsstelle 14 und Anmeldestelle 16 sind miteinander kommunikativ über eine Kommunikationsschnittstelle 18 verbunden. Aufgrund der im folgenden noch näher erläuterten unterschiedlichen Aufgaben von Registrierungsstelle 14 und Anmeldestelle 16. und der möglicherweise vorhandenen "trust boundaries" zwischen denselben kann eine mehr oder weniger starke organisatorische und auch technische Trennung bzw. Entkopplung zwischen Registrierungsstelle 14 und Anmeldestelle 16 existieren, die sich z. B. in Form von einer oder mehreren Firewalls 20 bzw. 22 manifestieren kann, wobei es sich bei der Firewall 20 beispielsweise um die Firewall der Registrierungsstelle 14 und bei der Firewall 22 um die Firewall der Anmeldestelle 16 handeln kann. Ebenso kann es sich bei der Benutzeranmeldeschnittstelle 12 um einen Computer oder ein Computernetzwerk handeln, auf dem ein entsprechendes Programm mit entsprechenden Funktionalitäten abläuft. Die Benutzeranmeldestelle 12 kann kommunikativ mit dem System 10 bzw. der Registrierungsstelle 14 und Anmeldestelle 16 verbunden sein, und zwar wiederum exemplarisch über eine oder mehrere Firewalls, die aber in Fig. 1 der Übersichtlichkeit halber nicht dargestellt sind.
Insbesondere handelt es sich bei der Benutzeranmeldeschnittstelle 12 beispielsweise um den Personalcomputer des Nutzers in dem Fall, dass es sich bei dem Nutzer um eine Person handelt, wie es in Fig. 1 angedeutet ist. Ganz allgemein ist das Ausführungsbeispiel von Fig. 1 sowie der nachfolgenden Ausführungsbeispiele aber auch auf andere Nutzerentitäten übertragbar, wie z.B. Geräte oder Softwareprodukte, in welchem Fall es sich bei der Benutzeranmeldeschnittstelle 12 auch um einen Prozessor der Nutzerentität handeln kann, Der Einfachheit halber wird aber im Folgenden exemplarisch häufig vom dem Fall einer Person als Nutzerentität ausgegangen, aber wie gesagt, Alternativen hierzu sind ohne weiteres aus der folgenden Beschreibung herleitbar und werden im Folgenden auch manchmal explizit angesprochen
Das System 10 ist, wie bereits erwähnt, dazu ausgelegt, dass sich Nutzer bei ihm pseudonymisiert anmelden können. Das bedeutet, dass einerseits ein Identifikationnachweis der Nutzer erbracht werden soll bzw. die Nutzer eindeutig identifiziert werden sollen, die sich beim System 10 anmelden wollen, dass aber andererseits ermöglicht werden soll, dass sich ein Nutzer, welcher einen solchen erfolgreichen Identitätsnachweis erbracht hat, mit einem Pseudonym beim System 10 anmeldet, so dass derselbe von anderen Nutzern zuverlässig unterscheidbar ist und seine Privatsphäre geschützt ist, nämlich dahin gehend, dass es auch keinem unbefugten Dritten möglich ist, aus Spuren, die der Nutzer bei dem System 10 unter dem Pseudonym hinterlässt, auf Eigenschaften des Nutzers rückzuschließen bzw. diese Tätigkeiten in den Zusammenhang mit dem bestimmten Nutzer zu bringen.
Hierzu ist das System 10 ausgebildet, um den Nutzer eindeutig zu identifizieren, in dem Fall eines erfolgreichen Identifikationsnachweises des Nutzers ein Pseudonym aus einem Anteil unverbrauchter Pseudonym-Tokens aus einer Vielzahl von Pseudonym-Tokens an den Nutzer mittels eines OT-Protokolls auszugeben, einen Anmeldevorgang des Nutzers mit dem an ihn ausgegebenen Pseudonym-Token durchzuführen, und auf den Anmeldevorgang des Nutzers mit dem Pseudonym-Token hin das Pseudonym-Token als verbraucht zu markieren, so dass sich der Anteil unverbrauchter Pseudonym-Tokens um das Pseudonym-Token verkleinert.

Für die Erbringung des Identifikationsnachweises des Nutzers, der in Fig. 1 examplarisch mit dem Bezugszeichen 24 als eine Person veranschaulicht ist, existieren verschiedenste Möglichkeiten. Der Identifikationsnachweis kann automatisch, halbautomatisch oder rein personell erfolgen. Das heißt, der Nutzer 24 kann sich an der Benutzeranmeldeschnittstelle 12 beispielsweise persönlich vorstellig machen. Eventuell weist sich der Nutzer 24 über die Benutzeranmeldeschnittstelle 12 dem System 10 gegenüber durch einen Ausweis bzw. eine elektrische Schaltung 26 aus. Der Identifikationsnachweis des Nutzers 24 kann somit insbesondere auch mittelbar darüber erbracht werden, dass eine dem Nutzer 24 eindeutig zugeordnete Entität von dem System 10 überprüft wird. Dem Nutzer 24 kann beispielsweise ein elektronischer Ausweis 26 eindeutig zugeordnet sein, oder ein geheimer privater Schlüssel oder dergleichen. Mischungen der vorerwähnten Möglichkeiten sind ebenfalls denkbar, wie z.B. Aushändigung vorerwähnter eindeutig zugeordneter Entität an den Nutzer auf die Erbringung eines persönlichen Identifikationsnachweises des Nutzers 24 hin, mit anschließendem Identifikationsnachweis des Nutzers 24 mittelbar über seine so ausgehändigte eindeutig zugeordnete Entität, wie z. B. den elektronischen Ausweis 26. Im Folgenden werden hierzu noch weitere Ausführungsbeispiele geliefert.

Das System 10 kann dazu ausgebildet sein, in dem Fall einer fehlgeschlagenen Identifikation des Nutzers 24 die Kommunikation mit dem Nutzer 24 abzubrechen oder zumindest die im Folgenden beschriebenen Schritte zur Aushändigung eines Pseudonyms an den Nutzer 24 nicht auszuführen, so dass der Nutzer 24 nicht an ein Pseudonym gelangt. Das Fehlschlagen der Identifikation kann verschiedene Gründe haben. Die Gründe können technischer Natur sein, d.h. der elektronische Ausweis ist abgelaufen oder dergleichen. Es kann auch sein, dass die Registrierungsstelle 14 nur eine vorbestimmte Gruppe von Nutzern eindeutig identifizieren bzw. nur für eine solche eine Identitätsnachweisüberprüfung durchführen kann. Beispielsweise lässt die Registrierungsstelle 14 nur eine eindeutige Identifikation bzw. einen Identitätsnachweis von erwachsenen Personen zu, so dass ein Nutzer 24, der noch nicht erwachsen ist, die Identifikation gegenüber dem System 10 nicht erfolgreich abschließen kann.

Wie es jedoch im Vorhergehenden beschrieben worden ist, ist das System 10 ausgebildet, um in dem Fall einer erfolgreichen eindeutigen Identifikation des Nutzers 24 ein Pseudonym-Token aus einem Anteil unverbrauchter Pseudonym-Token aus einer Vielzahl von Pseudonym-Token dem Nutzer 24 mittels eines OT-Protokolls auszugeben. In anderen Worten ausgedrückt, ist das System 10 im Besitz einer Vielzahl von Pseudonym-Token, d. h. einer Pseudonym-Token-Liste, die beispielsweise in einem Speicher (nicht gezeigt) des Systems 10 gespeichert ist. Wie später noch erläutert werden wird, können die Pseudonym-Token, die im Folgenden auch manchmal nur als Tokens bezeichnet werden, signiert sein. Die Pseudonym-Token können auch in einer Form vorliegen, die nicht nur für das OT-Protokoll geeignet ist, sondern auch für das optional im Anschluss durchgeführte Zero-Knowledge-Protokoll, auf das im Folgenden noch eingegangen wird. In der Pseudonym-Token-Liste können einige Pseudonym-Token bereits als verbraucht markiert sein. In diesem Fall wird das OT-Protokoll nur noch bezüglich des Anteils unverbrauchter Pseudonym-Token aus der Pseudonym-Token-Liste durchgeführt. Dieser Anteil ist somit eine Teilmenge der gesamten Vielzahl der Pseudonym-Token. Wie es dem OT-Protokoll eigen ist, erlangt das System 10 keine Kenntnis darüber, in Besitz welchen Pseudonym-Tokens die Benutzeranmeldeschnittstelle 12 bzw. der Nutzer 24 aus dem Anteil unverbrauchter Pseudonym-Tokens gelangt. Details hierzu werden im Folgenden noch näher beschrieben.

Das System 10 ist ferner ausgebildet, einen Authentifizierungsvorgang des Nutzers 24 durchzuführen. Für diesen Authentifizierungsvorgang sollte der Nutzer 24 ein Pseudonym-Token verwenden, das ihn von dem System 10 mittels des OT-Protokolls ausgegeben worden ist. Das System 10 ist ausgebildet, um bei Durchführung des Authentifizierungsvorgangs zu überprüfen, ob der Pseudonym-Token, mit welchem sich der Nutzer 24 anmeldet, zu der Pseudonym-Token-Liste gehört, und zwar zu dem unmarkierten Teil derselben. Gehört der von dem Nutzer 24 bei dem Anmeldevorgang vorgelegte Pseudonym-Token nicht zu der Pseudonym-Liste, oder ist er bereits als verbraucht markiert, bricht das System 10 den Authentifizierungsvorgang ab. In dem Fall allerdings, dass bestimmt wird, dass sich der Nutzer 24 im Rahmen des Authentifizierungsvorgangs mit einem zur Pseudonym-Token-Liste gehörenden unverbrauchten Pseudonym-Token anmeldet, schließt das System 10 den Authentifizierungsvorgang erfolgreich ab und markiert den von dem Nutzer 24 vorgelegte Pseudonym-Token als verbraucht, so dass sich der Anteil unverbrauchter Pseudonym-Token für zukünftige Pseudonym-Token-Ausgaben um den jeweilige Pseudonym-Token verkleinert.

Verschiedene Abweichungen können zu der vorhergehenden Beschreibung vorgenommen werden, und viele davon werden im Folgenden auch explizit angesprochen. Beispielsweise kann der Nutzer 24 von dem System 10 mehr als nur ein Pseudonym-Token erhalten. Die Kommunikationen zwischen System 10 und Benutzeranmeldeschnittstelle 12 bzw. Nutzer 24 können verschlüsselt sein, um gegenüber unbefugten Dritten abhörsicher zu sein. Darüber hinaus kann der Einsatz von Anonymisierungsdiensten, -netzwerken und -werkzeugen (z.B. TOR, JAP, entsprechende Browserplugins) sinnvoll sein. Diese sind nicht zu verwechseln mit dem Einsatz von Anonymisierungsverfahren zur Authentifizierung ohne Identifikation, sondern hierbei geht es ausschließlich darum, das unabsichtliche Hinterlassen eventueller "Spuren" bei der Kommunikation zwischen Akteuren zu vermeiden, die - völlig unabhängig vom Authentfizierungsverfahren! - möglicherweise indirekte Rückschlüsse auf die reale Identität ermöglichen könnten. Dies gilt insbesondere für die Kommunikation zwischen Anmeldestelle 16 und der Benutzeranmeldeschnittstelle 12 bzw. Nutzer 24. Insbesondere kann die Kommunikation zwischen Benutzeranmeldeschnittstelle 12 und Anmeldestelle 16 über einen Proxy Server bzw. Anonymisierungsdienste laufen.

Wie es im Vorhergehenden beschrieben worden ist, weiß das System 10 aufgrund der Verwendung des OT-Protokolls nicht, welchen Pseudonym-Token dem Nutzer 24 während des OT-Protokolls ausgehändigt worden ist. Wenn der Nutzer 24 sich im Rahmen des Authentifizierungsvorgangs dann beim System 10 anmeldet und damit dem System 10 seinen ausgehändigten Pseudonym-Token mitteilt, hängt der Grad der Anonymisierung natürlich davon ab, wie viele Pseudonym-Token das System 10 in der Zwischenzeit zwischen der Ausgabe des Pseudonym-Tokens und der Anmeldung des Nutzers 24 mit dem Pseudonym-Token an andere Nutzer ausgegeben hat. Um diesen zeitlichen Versatz zu steuern, können verschiedene Mechanismen vorgesehen sein, wie z.B., dass dem Nutzer 24 bei Aushändigung des Pseudonym-Tokens mitgeteilt wird, dass er mit der Anmeldung unter Verwendung dieses Pseudonym-Tokens bei dem System 10 eine vorbestimmte Mindestzeitdauer warten soll, die von der erwarteten mittleren Pseudonym-Token-Ausgaberate abhängt. Eine andere Möglichkeit bestünde darin, dass das System 10 die letzte Ausgabe gemäß dem OT-Protokoll, mit welcher Nutzer 24 in Besitz ihres Pseudonym-Tokens gelangen, von dem das System 10 nicht weiß, welches es ist, für eine vorbestimmte Mindestanzahl an Nutzern oder über eine vorbestimmte Mindestzeitdauer hinweg, die der oben genannten entsprechen kann, aufschiebt bzw. bündelt, um dann diese letzte Ausgabe gemäß dem OT-Protokoll für die genannten Nutzer auf einmal vorzunehmen, so dass sich daran anschlie-βende Anmelde- bzw. Authentifizierungsvorgänge mit diesen Pseudonym-Token nicht mehr den Identifikationsvorgängen zuordnen lassen, die zu den ausgegebenen Pseudonym-Token geführt haben.

Eine wiederum weitere Möglichkeit zur Unterbrechung der Zuordnungsmöglichkeit zwischen OT-Protokoll-basierter Ausgabe und Protokollierung der Verwendung von Pseudonym-Token bei Anmeldungen im Anschluss an die Pseudonym-Token-Ausgabe besteht in der Unterteilung des Systems 10 in die zwei Entitäten, nämlich die Registrierungsstelle 14 auf der einen und die Anmeldestelle 16 auf der anderen Seite, wie es im Folgenden noch anhand von Ausführungsbeispielen beschrieben wird. Die Registrierungsstelle 14 kann dabei vor allem die Aufgabe der pro Nutzerentität beispielsweise nur einmaligen Identitätsnachweisprüfung übernehmen, und die Anmeldestelle 16 die Aufgabe der pro Nutzerentität beispielsweise mehrmalig auftretenden Authentifizierung bzw. Anmeldung für einen bestimmten Dienst, der auf Basis dieser Authentifizierung bzw. Anmeldung dann z.B. Zugriff auf Ressourcen und Funktionalitäten gewährt. In der Praxis kann die Anmeldestelle 16 dadurch eng mit den entsprechenden Diensten verbunden oder sogar voll in deren Systeme integriert sein. Mit Hinblick auf eine effiziente Arbeitsteilung (vergleichsweise auf wändige Identitätsnachweisprüfung versus vergleichsweise wenig aufwändige nachgelagerte Anmeldung bzw. Authentifizierung) können, wie es detaillierter im folgenden beschrieben wird, zu einer Registrierungsstelle 14 viele Anmeldestellen 16 existieren. Zwischen Registrierungsstelle 14 und Anmeldestelle 16 kann eine sog. "Trust Boundary" bzw. Vertrauensgrenze verlaufen - ein Begriff aus der Security Analyse zur Abgrenzung von Systemen oder Systemteilen, die durch unterschiedliche Grade von Vertrauen gekennzeichnet sind: Der Nutzer muss der Registrierungsstelle 14 zwangsläufig Daten zur Identitätsnachweisprüfung vorlegen, hat aber gleichzeitig meist ein starkes Interesse daran, dass die Anmeldestelle 16 diese Daten eben nicht erhält bzw. nicht mit der Nutzerentität verknüpfen kann. Als ein Anzeichen für die Existenz von "trust boundaries" bzw. Grenzen können Firewalls vorhanden sein, wie es in Fig. 1 auch angedeutet ist, aber es können auch Grenzen verlaufen, ohne dass Firewalls existieren. Die in Fig.1 gezeigten Firewalls stehen als Symbol für Bereiche unterschiedlichen Vertrauens (vor allem aus Sicht der Nutzerentität), die oft mit einer mehr oder weniger starken organisatorischen und technischen Entkopplung von Bereichen verbunden ist.

Bisher ist nicht besonders darauf eingegangen worden, um was es sich bei den "Pseudonym-Tokens" eigentlich handelt. Diese Tokens können Zahlen bzw. Symbol/Bitsequenzen sein, die entweder zufällig oder deterministisch aus einer vorbestimmten Definitionsmenge ausgewählt worden sind, die ihrerseits wiederum durch bestimmte Nebenbedingungen eingeschränkt ist, wie zunächst einmal die Bedingung, dass die Tokens für das OT-Protokoll geeignet sein müssen, und optional, dass dieselben für das Zero-Knowledge-Verfahren geeignet sind, das ggf. dazu verwendet wird, dass der Nutzer 24 gegenüber dem System 10 bei der Anmeldung nachweist, dass er im Besitz eines von dem System 10 ausgegebenen Tokens ist.

Im Folgenden wird auf das Ausführungsbeispiel eingegangen, bei welchem sich das System 10 in die Registrierungsstelle 14 einerseits und die Anmeldestelle 16 andererseits aufgliedert. In diesem Fall existieren drei Akteure in dem Szenario von Fig. 1, nämlich die Registrierungsstelle 14, die als eine zentrale Registrierungsinstanz fungieren kann, die Anmeldestelle 16, die als eine nachgelagerte Anmelde- bzw. Registrierungsstelle fungieren kann, und schließlich die Benutzeranmeldeschnittstelle 12 des Nutzers bzw. Endnutzers 24. Die zentrale Registrierungsinstanz ist für die im Vorhergehenden erwähnte Identitätsprüfung zuständig, wie z.B. via Personalausweis 26, biometrische Merkmale, ein qualifiziertes Zertifikat etc., wobei in dem letztgenannten Fall die Identität wie gesagt nicht direkt, sondern indirekt nachgewiesen wird. Die nachgelagerte Anmelde- bzw. Registrierungsstelle 16 nimmt die Registrierung und Anmeldung bzw. Authentifizierung der Nutzer 24 für bestimmte Anwendungszwecke vor, wie z.B. einen bestimmten Dienst, der Nutzern angeboten wird. In einem solchen Szenario können mehrere Anmeldestellen 16 zu der Registrierungsstelle 14 gehören bzw. mit ihr kooperieren, und wiederum mehrere Nutzer zu der Anmeldestelle 16 gehören bzw. mit ihr kooperieren.

Die Aufteilung des Systems 10 in die Registrierungsstelle 14 und die Anmeldestelle 16 hat verschiedene Vorteile. Zunächst einmal sind die Aufgaben, für die die Registrierungsstelle 14 zuständig ist, worauf im Folgenden noch näher eingegangen werden wird, ungleich aufwendiger als die Aufgaben, für die die Anmeldestelle 16 zuständig ist, weshalb es vorteilhaft ist, wenn die Registrierungsstelle 14 für mehrere Anmeldestellen 16 verwertbar ist. Außerdem sorgt die Aufteilung der Aufgaben des Systems 10 auf die Registrierungsstelle 14 und die Anmeldestelle 16 dafür, dass die Registrierungsstelle 14 vertrauenswürdiger sein sollte als die Anmeldestelle 16, nämlich zumindest insofern, als sichergestellt sein sollte, dass die Registrierungsstelle 14 die ihr zugedachten Aufgaben wie gedacht einsetzt und beispielsweise nicht Tokens manipuliert oder nur vorgibt, ein OT-Protokoll auszuführen, aber es nicht tut. Eine entsprechende Überprüfung der korrekten Ausführung der Aufgaben sicherzustellen, ist aber ungleich realistischer bei einer zentralen Stelle zu realisieren als bei vielen Einzelanbietern. Durch eine organisatorische Trennung der Registrierungsstelle 14 von der Anmeldestelle 16 lässt sich jedenfalls bei der Anmeldestelle 16 auch technisch durchaus sicherstellen, dass keine "unzulässigen Kommunikationswege" zu der Registrierungsstelle 14 existieren, wie z. B. durch entsprechende Isolation und ggf. staatliche usw. Kontrolle. Die Firewall 20 gehört zu einer solchen möglichen Maßnahme. Eine organisatorische Trennung entspricht auch den praktischen Gepflogenheiten, denn die Aufteilung in aufwendigere Prozesse für die Registrierungsstelle 14 und weniger aufwendige Prozesse für die Anmeldestelle 16 entspricht beispielsweise der Trennung in "harte" bzw. "aufwendige" Identitätsnachweise bei Postfilialen gegenüber "einfachen Registrierungen" bei Email oder dergleichen. Die Aufteilung ist damit integrationsfreundlicher bei vielen Anwendungen.

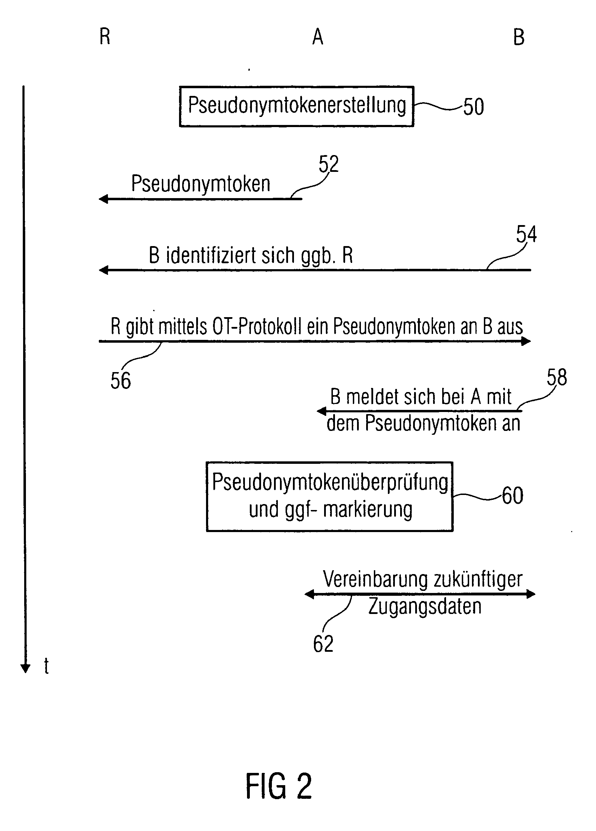

Im Folgenden wird Bezug nehmend auf Fig. 2 ein Ablauf einer pseudonymisierten Anmeldung im Rahmen des Szenarios von Fig. 1 gemäß einem Ausführungsbeispiel für den Fall beschrieben, dass das System 10 in Registrierungsstelle 14 einerseits und Anmeldestelle 16 andererseits aufgeteilt ist. In Fig. 2 sind Maßnahmen, die bei der Registrierungsstelle R, der Anmeldestelle A oder der Benutzeranmeldeschnittstelle bzw. dem Nutzer/Benutzer B durchgeführt werden, in Blöcken dargestellt, und zwar je nachdem, wo sie durchgeführt werden, links für die Registrierungsstelle R, in der Mitte für die Anmeldestelle A und rechts für den Benutzer B. Pfeile deuten eine Kommunikation zwischen zwei Parteien der drei Parteien 12, 14 und 16 an, und weisen gemäß der Kommunikationsrichtung von dem jeweiligen Sender zu dem jeweiligen Empfänger. Die zeitliche Abfolge der Kommunikationen und Aktionen ist in chronologischer Reihenfolge von oben nach unten dargestellt. In anderen Worten ausgedrückt, verläuft die Zeitachse t von oben nach unten.

Die pseudonymisierte Authentifizierung gemäß Fig. 2 beginnt mit einer Pseudonymtokenerstellung 50 in der Anmeldestelle 16. Wie bereits erwähnt, wird die Pseudonymtokenerstellung 50 derart durchgeführt, dass die Pseudonym-Token-Liste bestimmten Kriterien genügt, die durch das OT-Protokoll und ggf. - optional - durch weitere Protokolle, wie z.B. das Zero-Knowledge-Protokoll, auferlegt werden.

Die Anmeldestelle 16 informiert die Registrierungsstelle 14 über die Pseudonym-Token bzw. gibt die Vielzahl von Pseudonym-Token in einer Kommunikation 52 an die Registrierungsstelle 14 aus bzw. macht sie ihr zugänglich. Die Kommunikation 52 findet über den Kommunikationskanal 18 statt. Es kann sein, dass die Registrierungsstelle 14 die Vielzahl von Pseudonym-Token von der Anmeldestelle 16 noch modifiziert, worauf in den folgenden detaillierteren Ausführungsbeispielen noch eingegangen wird. Es kann beispielsweise sein, dass die Registrierungsstelle 14 die Pseudonym-Token unter Verwendung einer modularen Multiplikation mit einer Zufallszahl für ein Zero-Knowledge-Verfahren vorbereitet.

Zu einem beliebigen Zeitpunkt nach den vorbereitenden Maßnahmen 50 und 52 identifiziert sich der Nutzer 24 gegenüber der Registrierungsstelle 14, d.h. die Registrierungsstelle 14 führt die vorerwähnte eindeutige Identifikation des Benutzers 24 durch, was in Fig. 2 durch eine Kommunikation 54 von dem Benutzer 24 zu der Registrierungsstelle 14 dargestellt ist. In dem Fall, dass die Identifikation 54 erfolgreich ist, gibt die Registrierungsstelle 14 mittels des OT-Protokolls ein Pseudonym-Token an den Nutzer 24 durch eine Kommunikation 56 aus, wobei die Ausgabe 56 mit einem einfachen Pfeil von R nach B dargestellt ist, obwohl das OT-Protokoll mehrere Hin- und Rück-Kommunikationen zwischen R und B erfordert.

Sollte die Identifikation 54 von B gegenüber R nicht erfolgreich gewesen sein, sorgt die Registrierungsstelle 14 dafür, dass das OT-Protokoll 56 entweder überhaupt nicht begonnen wird, oder nicht zu einer Ausgabe eines Pseudonym-Tokens an den Benutzer 24 führt.

Zu einem beliebigen Zeitpunkt, nachdem der Nutzer 24 den Pseudonym-Token per OT-Protokoll von der Registrierungsstelle 14 erhalten hat, meldet sich der Nutzer 24 mit dem Pseudonym-Token bei der Anmeldestelle 16 an, was mit dem Kommunikationspfeil 58 dargestellt ist. Die Anmeldestelle 16 überprüft, ob ders von dem Nutzer 24 in der Kommunikation 58 mitgeteilte Pseudonym-Token zu den Pseudonym-Tokenen gehört, die in Schritt 50 erstellt worden sind, und überprüft ferner, ob der Pseudonym-Token auch noch unverbraucht ist, und markiert, falls die Überprüfung beider Kriterien positiv ausfällt, den Pseudonym-Token als nunmehr verbraucht, welche Verarbeitung in Fig. 2 mit dem Bezugszeichen 60 angezeigt ist. Nur in dem Fall der positiven Überprüfung, dass der Pseudonym-Token des Nutzers B zu dem unverbrauchten Anteil der Pseudonym-Token aus der Pseudonymtokenerstellung 50 gehört, vereinbaren die Anmeldestelle 16 und der Benutzer 24 bzw. die Benutzeranmeldeschnittstelle 12 in einer darauffolgenden Kommunikation 62 zukünftige Zugangsdaten für evetnuelle zukünftige Anmeldungen des Benutzers 24 bei der Anmeldestelle 16. Diese Zugangsdaten können beispielsweise einen Benutzernamen und ein zugeordnetes Passwort für den Benutzer 24 aufweisen, wobei der Nutzer 24 bei Wahl des Benutzernamens natürlich von sich aus Vorsicht walten lassen sollte, dass der gewählte Benutzername keine Rückschlüsse auf seine tatsächliche Person zulässt. Lässt er an dieser Stelle genügend Vorsicht walten, führt das beschriebene Verfahren nach Fig. 2 dazu, dass der Nutzer 24 sich bei der Anmeldestelle 16 zukünftig anonym anmelden kann, wobei aber umgekehrt die Anmeldestelle 16 sicher sein kann, dass die bei ihr auf diese Weise angemeldeten Benutzer unterschiedliche durch die Registrierungsstelle 14 identifizierte Personen sind, die ggf. Kriterien an Alter oder dergleichen genügen, deren Erfüllung durch die Registrierungsstelle 14 überprüft worden ist. Darüber hinaus findet eine Trennung des Wissens über die Zeitpunkte statt, an denen Pseudonym-Token an Nutzer ausgehändigt worden sind, und Zeitpunkte, an denen Pseudonym-Token verwendet worden sind, um sich im Rahmen von Kommunikationen 58 an der Anmeldestelle anzumelden, denn erstere Zeitpunkte sind nur der Registrierungsstelle 14 und letztere Zeitpunkte nur der Anmeldestelle 16 bekannt. Auf diese Weise ist es weder der Registrierungsstelle 14 noch der Anmeldestelle 16 möglich, von ihrem Wissen allein Vermutungen darüber anzustellen, welchen Pseudonym-Token welcher Benutzeridentität mit welcher Wahrscheinlichkeit zuordbar sein könnte.

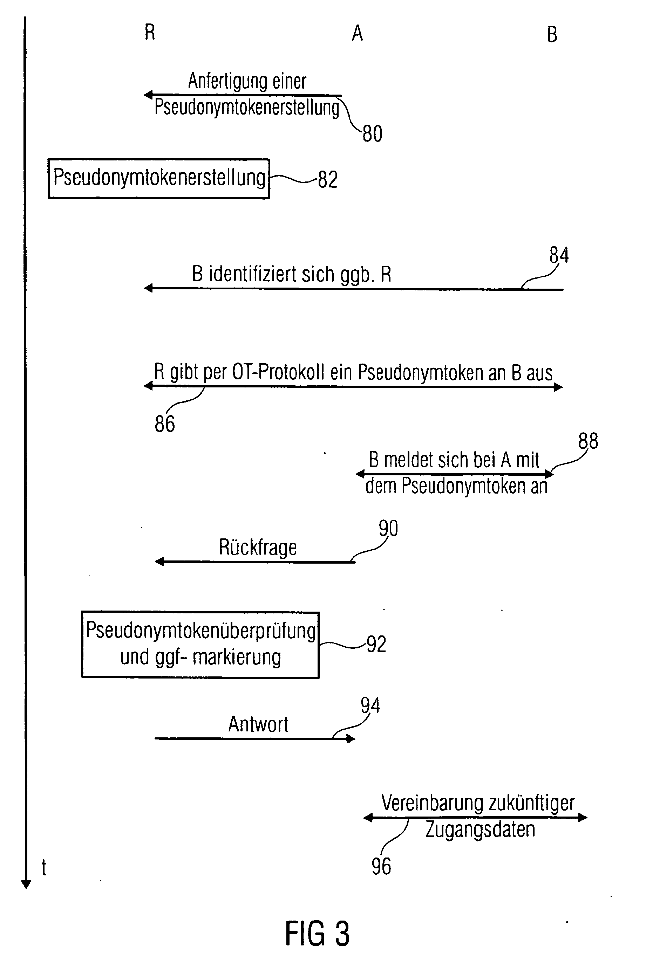

Fig. 3 zeigt einen alternativen Ablauf einer pseudonymisierten Authentifizierung in dem Szenario von Fig. 1. Gemäß Fig. 3 beginnt das Verfahren mit einer Anforderung 80 von der Anmeldestelle 16 an die Registrierungsstelle 14, eine Pseudonym-Token-Erstellung vorzunehmen, welche ihrerseits diese Pseudonym-Token-Erstellung 82 ansprechend darauf durchführt. Die Pseudonym-Token-Erstellung 82 kann der Pseudonym-Token-Erstellung 50 von Fig. 2 entsprechen.

Zu einem geeigneten Zeitpunkt nach der Pseudonym-Token-Erstellung 82 identifiziert sich der Nutzer 24 gegenüber der Registrierungsstelle 14 bzw. identifiziert die Registrierungsstelle 14 den Nutzer 24, was in Fig. 3 mit dem Pfeil 84 angedeutet ist. In dem Fall einer positiven Identifikation gibt die Registrierungsstelle 14 per OT-Protokoll ein Pseudonym-Token aus der Pseudonym-Token-Erstellung 82 an den Nutzer 24 aus. Daraufhin meldet sich der Nutzer 24 bei der Anmeldestelle 16 mit dem Pseudonym-Token bei 88 an. Die Kommunikationen 84-88 entsprechen den Kommunikationen 54-58 aus Fig. 2. Die Anmeldestelle 16 fragt daraufhin bei der Registrierungsstelle 14 im Rahmen einer Kommunikation 90 zurück, ob es sich bei dem Pseudonym-Token von dem Nutzer 24 um ein unbenutztes aus der Pseudonym-Erstellung 82 handelt. Dies überprüft die Registrierungsstelle 14 im Anschluss daran bei 92, um im positiven Fall den Pseudonym-Token entsprechend als verwendet zu markieren und eine entsprechende Antwort 94 an die Anmeldestelle 16 auszugeben, die daraufhin entsprechend der Kommunikation 62 aus Fig. 2 mit dem Nutzer 24 zukünftige Zugangsdaten in einer Kommunikation 96 vereinbart.

Gegenüber dem Ausführungsbeispiel von Fig. 2 besitzt das Vorgehen nach Fig. 3 den Nachteil, dass die Registrierungsstelle 14 die vorerwähnten Zeitpunkte der Pseudonym-Token-Ausgabe 86 und Pseudonym-Token-Verwendung 90 miteinander in Verbindung bringen könnte, um Rückschlüsse auf die potenzielle Identität des Nutzers 24 zu erhalten. Der Umweg des Rückpfades des Pseudonym-Tokens von dem Nutzer 24 zu der Registrierungsstelle 14 über die Anmeldestelle 16 könnte allerdings dazu verwendet werden, die vorerwähnte Zeitdekorrelation zu vergrößern.

Schließlich wird darauf hingewiesen, dass obige Vorgehensweisen auch kombiniert werden könnten. Beispielsweise könnten die Schritte 80 und 82 anstelle des Schrittes 50 von Fig. 2 durchgeführt werden, um die Pseudonym-Token-Erstellung auf Anfrage durch die Anmeldestelle 16 bei der Registrierungsstelle 14 durchzuführen, wobei die Pseudonym-Token in dem Schritt 52 dann von der Registrierungsstelle 14 aus der Anmeldestelle 16 mitgeteilt würden und nicht umgekehrt. Alle anderen Schritte von Fig. 2 blieben dieselben. Weitere mögliche Modifikationen gehen aus der nachfolgenden Beschreibung ohne Weiteres hervor.

Die obigen Ausführungsbeispiele noch einmal zusammenfassend kann also die Registrierungsstelle 14 dazu ausgebildet sein, zur Ausgabe eines Pseudonym-Tokens für einen Nutzer 24 den Nutzer 24 eindeutig zu identifizieren bzw. einen Idnentiätsnachweis desselben zu überprüfen 54; 84 und in dem Fall einer erfolgreichen eindeutigen Identifikation des Benutzers 24 bzw. Identitäsnawcheisprüfung ein Pseudonym-Token aus einem Anteil unverbrauchter Pseudonym-Token aus einer Vielzahl von Pseudonym-Token an den Nutzer 24 mittels eines OT-Protokolls auszugeben. Die Identitätsnachweisprüfung 54; 84 kann dabei das Durchführen kryptographischer Protokolle umfassen, bei der sich der Nutzer 24 gegenüber der Registrierungsstelle 14 mittels einer elektronischen Schaltung 26, wie z.B. einer SmartCard, die dem Nutzer 24 eindeutig zugeordnet ist, authentifiziert. Die eindeutige Authentifizierung 54; 84 kann insbesondere ein Nachschlagen in einer Benutzerdatenbank (nicht gezeigt) umfassen, in welcher eindeutig voneinander unterscheidbare Einträge zu einer Vielzahl von zugelassenen Nutzern gespeichert sind, und das Überprüfen, ob der Nutzer 24 zu der Vielzahl von zugelassenen Benutzern gehört, in welchem Fall die eindeutige Identifikation bzw. die Identitätsnachweisprüfung erfolgreich ist und sonst nicht. Die Registrierungsstelle 14 kann insbesondere auch dazu ausgebildet sein, die Vielzahl von Pseudonym-Token von der Anmeldestelle 16 über eine Firewall 20 oder 22 zu erhalten, wobei auch die weiteren Kommunikationen der Registrierungsstelle 14 darüber laufen können. Die Registrierungsstelle 14 kann auch ausgebildet sein, um auf eine Aufforderung 80 seitens der Anmeldestelle 16 die Vielzahl von Pseudonym-Token zu erstellen (82) und an die Anmeldestelle 16 zu senden (52 in umgekehrter Richtung). In dem Fall der Erstellung der Vielzahl von Pseudonym-Token durch die Registrierungsstelle 14 kann dieselbe ausgebildet sein, um die Vielzahl von Pseudonymen einzeln mit einer jeweiligen Signatur der Registrierungsstelle 14 zu versehen, so dass dieselben durch die Anmeldestelle auf Ihre korrekte Signatur hin überprüfbar sind. Ferner kann die Regsitrierungsstelle 14 ausgebildet seind, um auf eine Anfrage der Anmeldestelle 16 ein vorbestimmtes, in der Anfrage enthaltenes Pseudonym einer Echtheitsprüfung zu unterziehen und gemäß dem Ergebnis dieser Echtheitsüberprüfung der Anmeldestelle 16 zu antworten. Die Entheitsprüfung kann ermöglicht werden, indem jedes Token gemäß einem nur für die Regisertierungsstelle bekanntes Geheimnis gebildet worden ist, so dass ein zufälliges Erraten eines echten Tokens belibig unwahrscheinlich ist. Letztere Kommunikation zwischen Anmeldestelle 16 und Registrierungsstelle 14 kann beispielsweise auf den Schritt 58 hin als zusätzliche Voraussetzung für die Ausführung der Vereinbarung 62 der zukünftigen Zugangsdaten stattfmden.

Die Anmeldestelle 16 kann ausgebildet sein, um eine für das OT-Protokoll geeignete Vielzahl von Pseudonym-Token entweder zu erstellen (50) und an die Registrierungsstelle 14 weiterzuleiten (52) oder von der Registrierungsstelle 14 anzufordern (80) und zu empfangen (52 in umgekehrter Richtung). Die Anmeldestelle 16 könnte weiter ausgebildet sein, im Rahmen eines Authentifizierungsvorgangs eines Nutzers mit einem vorbestimmten Pseudonym-Token zu überprüfen (60), ob der vorbestimmte Pseudonym-Token zu einem Anteil von unverbrauchten Pseudonym-Token der Vielzahl von Pseudonym-Token gehört, und, falls die Überprüfung ergibt, dass der vorbestimmte Pseudonym-Token zu diesem Anteil nicht gehört, den Authentifizierungsvorgang nicht (erfolgreich) abzuschließen, und, falls die Überprüfung ergibt, das der vorbestimmte Pseudonym-Token zu diesem Anteil gehört, den Authentifizierungsvorgang (erfolgreich) abzuschließen und den Pseudonym-Token als verbraucht zu markieren (60), so dass sich der Anteil von unverbrauchten Pseudonym-Token aus der Vielzahl von Pseudonym-Token verkleinert. Die Anmeldestelle 16 könnte dabei ausgebildet sein, um mittels eines Zero-Knowledge-Verfahrens zu überprüfen, ob das vorbestimmte Pseudonym-Token zu dem Anteil der unverbrauchten Pseudonym-Token gehört. Die Anmeldestelle 16 könnte ferner dazu ausgebildet sein, um zum Abschluss des Vorgangs mit dem Nutzer Zugangsdaten für zukünftige Anrneldevorgänge zwischen dem Nutzer 24 und der Anmeldestelle 16 zu vereinbaren, ggf. unter Verwendung eines verschlüsselten Kanals, wobei darauf hingewiesen wird, dass es je nach Anwendung evtl. keiner zukünftiger Anmeldungen bedarf. Die Vielzahl von Pseudonym-Token könnten einzeln mit einer jeweiligen Signatur der Registrierungsstele 14 versehen sein, und die Anmeldestelle 16 könnte ausgebdilet sein, um im Rahmen des Authentifizierungsvorgangs den vorbestimmten Pseudonym-Token daraufhin überprüfen, ob er mit der korrekten Signatur versehen ist, und, falls dies nicht der Fall ist, den Authentifizierungsvorgang nicht (erfolgreich) abschließen. Eine Anfrage bei der Registrierungsstelle 14 mit Anforderung einer Echtheitsprüfung wäre aber ebenfalls möglich. Die Anmeldestelle könnte auch eine Firewall 22 aufweisen und ausgebildet sein, über die Firewall 22 die Vielzahl von Pseudonym-Token an die Registrierungsstelle 14 weiterzuleiten (52).

Die Benutzeranmeldeschnittstelle 12 zur pseudonymisierten Authentifizierung des Nutzers 24 bei der Anmeldestelle 16 kann dazu ausgebildet sein, den Nutzer 24 gegenüber dem System 10 oder gegenüber der Registrierungsstelle 14 zu identifizieren und ein OT-Protokoll mit dem System 10 oder der Registrierungsstelle 14 auszuführen, um ein Pseudonym-Token zu erhalten, sowie einen Authentifizierungsvorgang gegenüber dem System 10 bzw. gegenüber der Anmeldestelle durchzuführen, bei dem der Pseudonym-Token verwendet wird, wobei letztere Vorgang über einen Proxy Server bzw. Anonymisierungsdienste stattfinden kann zur zusätzlichen Erschwerung einer Rückverfolgungsmöglichkeit für die Anmeldestelle 16.

Obige Ausführungsbeispiele schaffen es folglich, geeignet zu sein für Anwendungsfälle zur Authentifizierung von Nutzern, die die Existenz eindeutiger Pseudonyme bzw. Tokens voraussetzen, dabei aber dennoch eine Rückführung auf persönliche Identitäten der Nutzer zu verhindern, es sei denn, der Nutzer gibt seine Identität durch entsprechende Aktionen selbst preis. An dieser Stelle soll dabei nochmals darauf hingewiesen werden, dass es sich bei den Nutzern 24 nicht nur um Personen handeln muss, sondern dass unter Nutzer auch ein Gerät oder eine bestimmte Software verstanden werden soll.

Ferner wird darauf hingewiesen, dass bei obigen Ausführungsbeispielen, bei denen das System 10 in eine Registrierungsstelle 14 und eine Anmeldestelle 16 aufgegliedert ist, die Anonymisierung auch standhält, wenn Daten zwischen Registrierungsinstanz und Anmeldestelle bzw. Serviceanbieter ausgetauscht werden, auch wenn dies eigentlich nicht "erlaubt" sein sollte, oder sogar wenn Daten von Registrierungsinstanz 14 und Anmeldestelle 16 in Hände Dritter gelangen, wie z. B. durch Datendiebstahl. Obige Ausführungsbeispiele sind somit auch "integrationsfreundlich" implementierbar, nämlich insofern, als sie existierende Methoden zur Authentifizierung und Autorisierung weitestgehend unangetastet lassen bzw. maximale Freiheiten ermöglichen.

Die obigen Ausführungsbeispiele können dies realisieren durch:

- Verwendung existierender Authentifizierungsverfahren, um zu gewährleisten, dass Nutzer 24 einen definierten und für einen Serviceanbieter / eine Anmeldesstelle 16 vertrauenswürdigen Prozess 54; 84 zum Legitimitätsnachweis durchlaufen müssen

- Verwendung 58; 88 von geeigneten Tokens als Legitimationsnachweis, inkl. Erzeugung 50; 82 von für die anderen Schritte geeigneten Tokens und verfahren zu "Sperrung" 60; 92 von Tokens, ohne die Datenschutzziele zu verletzen

- Verwendung von Oblivious Transfer 56; 86 zur Übertragung von Tokens, um eine Entkopplung der "natürlichen" Identität von den später bei den jeweiligen Anmeldestellen (=Serviceanbietern) 16 verwendeten Identitäten / Pseudonymen zu gewährleisten

Es wird darauf hingewiesen, dass zusätzlich zu den beschriebenen Schritten während der pseudonymisierten Anmeldung, wie z. B. zusätzlich zu den Schritten aus Fig. 2 und 3, zur Herstellung der Übertragungssicherheit etc. weitere Security-Standardverfahren vor allem zum Zweck der Übertragungssicherheit eingesetzt werden können, wie z. B. asymmetrische Verschlüsselungen, symmetrische Verschlüsselungen, Signaturen, Hashing sowie Zertifikate. Vor allem sollten die Nutzer 24 eine Rückführung auf ihre Identität durch IP-Adresse etc. bei der Kommunikation durch Verwendung entsprechender Dienste/Proxies etc. vermeiden.

**Zusätzliche Bemerkungen**

Im Folgenden werden Ausführungsbeispiele der vorliegenden Anmeldung noch etwas detaillierter beschrieben, wobei immer wieder ein Bezug zu den Ausführungsbeispielen der Figuren 1 bis 3 hergestellt wird. Zum Beispiel kann gemäß einem weiteren Ausführungsbeispiel das mögliche Protokoll bzw. Ablaufdiagramm zur pseudonymisierten Authentifizierung von Nutzern auch folgendermaßen beschrieben werden.

In dieser ersten Phase der Vorbereitung und Tokenerzeugung/-übertragung können insbesondere folgende Schritte durchgeführt werden:

- Anmeldestelle 16 und Registrierungsstelle 14 währen (50; 80) die nötigen Werte, welche für die Durchführung des Oblivious Transfers und des optionalen Zero-Knowledge Protokolls notwendig sind. Diese Werte können, je nach Verwendungsart zufällig (über jede Art von Zufallsgenerator) oder mittels eines geeigneten Algorithmus, bzw. selbst festgesetzter Regeln gewählt werden. Die für das Protokoll benötigten Primzahlen werden mittels geeigneter Primzahlgeneratoren erzeugt.

- Weiterhin können in diesem Schritt (50) die (zufälligen) Tokens durch die Anmeldestelle 16 generiert werden - genauer gesagt kann durch die Anmeldestelle 16 ein Pool von Tokens generiert werden, der an die Registrierungsstelle 14 übertragen wird (52). Die Tokens müssen für das OT Verfahren (siehe unten) geeignet sein, und der Pool sollte groß genug sein, um die Wahrscheinlichkeit von zufälligen Mehrfachauslieferungen von Pseudonymen extrem gering zu halten, damit die Anmeldestelle bei Wahrnehmen eines "falschen" Tokens davon ausgehen darf, dass es sich um die Anmeldung eines böswilligen Unbefugten handelt. Im Fall der optionalen und weiter unten beschriebenen Verwendung von Zero Knowledge (ZK) für den Schritt der Anmeldung mit dem Pseudonym (58) zur zusätzlichen Verbesserung des Datenschutzes wird der Definitionsbereich für die Tokens darüber hinaus vom jeweiligen ZK-Verfahren eingeschränkt. Es können verschiedenste ZK-Verfahren verwendet werden, wie z.B. das Otha-Okamoto Zero Knowledge Protokoll.

- Signierung der generierten Tokens mit dem privaten Schlüssel der jeweiligen Anmeldestelle 16 zum Zweck der Authentizitäts-/Integritätsprüfung der Tokens nach Übertragung z.B. bei Bedarf durch den Nutzer 24 und die Registrierungsstelle 14.

Im Folgenden wird diese Phase der Vorbereitung und Tokenerzeugung/-übertragung auch noch näher in Schritten V1-V5 und V1*-V3* beschrieben.

Eine nachfolgende Phase betrifft die Registrierung bei der Registrierung/Validierungsstelle 14. Folgende Schritte können in dieser Phase durchgeführt werden:

- Typischerweise wird der Nutzer 24 bei Interesse an der Nutzung eines Dienstes der Anmeldestelle 16 zunächst bei der Anmeldestelle 16 anfragen, die ihn wiederum an die Registrierungsstelle 14 verweist. Alternativ kann der Nutzer 24 aber auch bei der Registrierungsstelle 14 über die verschiedenen mit der Stelle 14 verbundenen Anmeldestellen 16 informiert werden.

- In diesem Schritt wird der Identitätsnachweis des Nutzers 24 bei der Registrierungsstelle 14 vollzogen (vgl. Schritt 54). Dadurch wird gewährleistet, dass später nur Nutzer, die einen definierten und für den Serviceanbieter / die Anmeldesstelle 16 vertrauenswürdigen Prozess zum Legitimitätsnachweis durchlaufen haben, die Anmeldung erflorgreich abschließen können.

- Die Art und Weise des Identitätsnachweises kann nahezu beliebig gewählt werden. Eine Möglichkeit ist hierbei die Verwendung von bestehenden qualifizierten Zertifikaten: Akzeptiert werden dabei alle qualifizierte Zertifikate, deren zentraler Zertifizierungsinstanz ( CA) vertraut wird.

- Ist dieser Schritt einmal vollzogen, kann er für mehrere mit der Registrierungsstelle 14 verbundene Anmeldestellen (= Serviceanbieter) 16 mehrfach wiederholt werden - vorausgesetzt, diese haben entsprechende Tokenpools generiert und an die Registrierungsstelle 14 übertragen. Zu diesem Zweck sollte die zentrale Registrierungsstelle 14 allerdings geeignete Authentifizierungsverfahren mit dem Nutzer 24 vereinbaren (Standardverfahren) um erneute Anmeldungen 54; 84 zu ermöglichen.

- Die Nutzung von Zertifikaten kann ohne Weiteres durch andere Identifizierungsmöglichkeiten ersetzt werden kann, wie z.B. einen Nachweis via Personalausweis 26 etc. Selbstverständlich können hierfür existierende Verfahren zum Identitätsnachweis wieder verwertet werden bzw. das vorgeschlagene Verfahren wird in das entsprechende System integriert.

- Neben der Registrierung von Nutzern 24 ist auch eine Registrierung von Geräten / Software etc. möglich, auch wenn die dafür verwendeten verfahren etwas modifiziert sein werden.

Die Phase der Registrierung bei der Registrierungs-/Validierungs-Stelle 14 wird im Folgenden bezüglich des Schrittes R1 noch näher erörtert werden.

Danach findet eine Phase der Tokenvergabe via OT-Protokoll statt. In dieser Phase kann Folgendes durchgeführt werden:

- In diesem Schritt wird, nach einer Auswahl des gewünschten Anmeldedienstes durch den Nutzer 24, der zur nachgelagerten Registrierung / Anmeldung bei der jeweiligen Anmeldestelle (=Serviceanbieter) 16 notwendige Tokens via OT an den Nutzer 24 übertragen (vgl. Schritt 56, 86). Durch die Verwendung von OT findet die Entkopplung der "natürlichen" Identität von den später bei den jeweiligen Anmeldestellen 16 (=Serviceanbietern) verwendeten Identitäten / Pseudonymen statt. Nur der Nutzer 24 ist danach noch in der Lage beide Identitäten im Bedarfsfall zu verbinden, Registrierungsstelle 14 und Anmeldestelle 16 sind selbst dann nicht dazu in der Lage, wenn sie gegen den Nutzer kooperieren, oder wenn Dritte sich Zugang zu den entsprechenden Daten verschaffen, wobei, wie oben erwähnt, ggf. ein gewisser zeitlicher Versatz zwischen Registrierung 54; 84 und der späteren Anmeldung 58; 88 bzw. eine hinreichend große Anzahl von zeitnahen Anmeldungen vorliegen sollte. Insofern könnten / sollten Nutzer 24 darauf hingewiesen werden, dass eine Registrierung "auf Vorrat" sinnvoll ist, nach dem Motto: Erstmal registrieren, irgendwann später bei potenziell vielen Diensten anmelden.

- Es kann ein sog. 1-out-of-n Oblivious Transfer Protokoll verwendet werden, wofür es verschiedene Varianten gibt, wie z.B. Rabin-OT, Even-Goldreich-Lempel-OT und Naor-Pinkas-OT (in der DA verwendet). Oblivious Transfer ermöglicht das Übertragen von Teilinformationen derart, dass der Sender 14 (mathematisch beweisbar) nicht erfahren kann, welche Teilinformationen übertragen wurden und gleichzeitig gewährleistet ist, dass der Empfänger 12; 24 nur die gewählten Teilinformationen erhält.

- Der Token wird auf Nutzerseite 12; 24 gespeichert, wobei übliche Sicherheitsmaßnahmen, wie sie auch bei privaten Schlüsseln üblich sind, angewendet werden können etc., z.B. PKCS#12 (Public Key Cryptography Standards Nummer 12).

- Die Anmeldestelle 16 kann vorab selbst festlegen, ob ein oder mehrere Pseudonyme pro Identität beim jeweiligen Dienst möglich sein sollen.

- Die zentrale Registrierungsstelle 14 kann dabei die Information darüber speichern, welcher Nutzer 24 für welche Anmeldestelle 16 Tokens angefragt hat.

Im Folgenden wird diese Phase der Token-Vergabe via OT-Protokoll näher bezüglich des Schrittes R2 beschrieben.

Schließlich folgt eine Phase der Anmeldung bzw. nachgelagerten Registrierung via Token. Dabei kann Folgendes gelten:

- In diesem Schritt findet die Anmeldung bzw. nachgelagerte Registrierung (58; 88) bei der Anmeldestelle 16 statt. Durch die Verwendung von Tokens wird dabei für die Anmeldestelle gewährleistet, dass die Nutzer 24 legitimiert sind. Eigentlich kann auch der Begriff Registrierung anstelle von Anmeldung verwendet werden, da in den meisten Anwendungsfällen während dieses Schrittes ein für den Serviceanbieter 16 spezifisches Pseudonym, Nickname, Login inkl. Passwort, Zertifikat etc. vergeben wird, nämlich in Schritt 62 bzw. 96. Das Verfahren für die Vergabe dieser IDs, Zugriffsschutz etc. ist durch den Serviceanbieter 16 frei wählbar.

- Ein Token wird vorzugsweise nicht zur Anmeldung, sondern einmalig zum Übergang in ein anbieterspezifisches Anmeldeverfahren verwendet werden, weil sonst die Gefahr von Tokendiebstahl besteht und eigentlich nur auf Geschäftmodellebene bei Dienstanbieter 16, nicht auf technischer Ebene einer Tokenweitergabe entgegen gewirkt werden kann.

- Um zu gewährleisten, dass kein "Identitätsdiebstahl" stattfindet und um für die verschiedenen Anwendungsgebiete eine Eindeutigkeit der Nutzeridentitäten gegeben ist, werden verwendete Tokens "gesperrt" und nicht für erneute Anmeldungen bei derselben Anmeldestelle 16 (=Serviceanbieter) verwendet werden können.

- Gleichzeitig sollte gewährleistet werden, dass Tokens-Pools bei Verbrauch einer entsprechend großen Anzahl von Tokens erneuert werden können, und dass durch die entsprechenden Schritte trotzdem keine Angriffsmöglichkeiten bzgl. des Schutzes der Privatsphäre entstehen.

- Um die genannten Ziele zu erreichen, existieren zwei grundsätzlich verschiedene Möglichkeiten, ggf. nach einer Authentizitätsprüfung des Token über eine optionale digitale Signatur, die ggf. auch der einfacheren Verwaltung der Tokens auf Clientseite dient, weil z.B. Information bzgl. Anemldestelle 16 etc. enthalten sind:

  1. es wird ein Zero-Knowledge Verfahren (z.B. Ohta-Okamoto-Zero-Knowledge) verwendet, um der Anmeldestelle 16 mathematisch zu beweisen, dass der Nutzer 24 über einen gültigen Token verfügt, OHNE dabei den Token selbst oder sonst irgendwelche Informationen zu übertragen. Dieses Verfahren ist aus Datenschutzgründen zu bevorzugen. Dabei wird eine vom Token abgeleitete Information bei der Anmeldestelle 16 erzeugt, die eindeutig ist (aber nicht auf den Token rückführbar). Die Anmeldestelle 16 kann dadurch Mehrfachanmeldungen mit demselben Token erkennen und vermeiden, ohne den Token selbst zu erhalten. Die benannten Vorteile manifestieren sich allerdings nur bei der vorerwähnten Variante in Fig. 2, dass die Token zentral bei der Registrierungsinstanz 14 erzeugt werden, da so eine Trennung zwischen Token und der abgeleiteten Information erreicht wird. Im Fall der Tokenerzeugung bei der Anmeldestelle 16 bleibt einzig der Vorteil der Übertragungssicherheit erhalten, denn die Anmeldestelle 16 kann bei gleichzeitiger Erzeugung und Speicherung der abgeleiteten Token trotz der Verwendung einer Einwegfunktion eine Verbindung zwischen sich paarweise entsprechenden Werter herstellen. Nach erfolgreicher Anmeldung bzw. Registrierung kann der Dienst für weitere Anmeldungen eigene IDs und Authentifizierungsverfahren verwenden. Diese Variante wird im Folgenden auch unter (A1) beschrieben.

  2. Der Token wird direkt, unter Verwendung einer Einwegfunktion oder auf andere Weise übertragen, die die Erkennung.von Mehrfachanmeldungen bei der Anmeldestelle 16 ermöglicht, ansonsten siehe oben. Diese Variante wird im Folgenden auch unter (A1 *) beschrieben.

- Neben der Sicherstellung einer entsprechenden Poolgröße (vgl. oben) zur Vermeidung einer Mehrfachauslieferung von Tokens bei mehreren legitimen Nutzern ist optional möglich, dass die Anmeldestelle 16 nach Anmeldung / nachgelagerter Registrierung die Tokens oder daraus abgeleiteten Informationen an die Registrierungsstelle 14 überträgt, die dann die Tokens aus dem Pool entfernt, wie es bei Fig. 3 der Fall ist.

- Um den je nach Konstellation mehr oder weniger extrem unwahrscheinlichen Fall der zufälligen Mehrfachauslieferung identischer Tokens an mehrere legitime Nutzer abzufangen, kann statt einer einfachen Vermeidung von Mehrfachanmeldungen folgendes Verfahren eingesetzt werden: die Anmeldestelle 16 stellt im Fall einer Mehrfachanmeldung einen von ihr signierten Request (Antrag) aus, mit dem sich der Nutzer einen neuen Token bei der zentralen Registrierungsstelle ausstellen lassen kann. Die Registrierungsstelle 14 validiert den Request, und gibt dem durch sie authentifizierten Nutzer 24 einen neuen Token aus, wobei sie selbstverständlich prüft, ob der Nutzer für die jeweilige Anmeldestelle 16 vorher bereits eine Anfrage gemacht hatte.

- Durch die beschriebenen Schritte wird gewährleistet, dass keine Mehrfachanmeldungen mit demselben Token stattfinden. Um die Wahrscheinlichkeit einer zufälligen Mehrfachauslieferung derselben Tokens sehr gering zu halten, können nach Verbrauch einer vorab definierten großen Anzahl von Tokens die Tokenpools erneuert (vgl. Tokenerzeugung und -übertragung) werden.

Gemäß der soeben vorgebrachten Beschreibung für Möglichkeiten zur pseudonymisierten Anmeldung wurde eine Unterteilung in vier Phasen verwendet, nämlich die Vorbereitung und Tokenerzeugung/-übertragung, die in den Figuren 2 und 3 jeweils den ersten beiden dort gezeigten Schritten entspricht, die Registrierung bei Registrierungs-/ ValidierungsStelle, welche den Schritten 54 bzw. 84 aus Figur 2 und 3 entspricht, die Tokenvergabe via Oblivious Transfer, welche den Schritten 56 bzw. 86 aus Fig. 2 und 3 entspricht, und die Anmeldung bzw. nachgelagerte Registrierung via Token, welche den nachfolgenden Schritten nach 56 bzw. 86 in den Figuren 2 und 3 entspricht.

Im Folgenden werden ein paar zusätzliche Anmerkungen zu den vier Phasen gemacht, die im Vorhergehenden kurz erörtert wurden:

- Es kann eine einmal stattgefundene Identitätsprüfung bei der zentralen Registrierungsstelle zur nachgelagerten Anmeldung / Registrierung bei allen Anmeldestellen (=Serviceprovidern) stattfinden, die mit der Registrierungsstelle verbunden sind und zuvor Token-Pools übertragen haben. Dafür ist lediglich eine erneute Authentifizierung des Nutzers bei der zentralen Registrierungsstelle erforderlich.

- Das beschriebene Verfahren unterstützt grundsätzlich auch die Lösung von Pseudonymen und Ausstellung neuer Pseudonyme auf Nutzerwunsch und Sperrung / Löschung von Pseudonymen durch die Anmeldestelle

- Darüber hinaus ist eine Integration is sog. "ID Federation" Systeme denkbar, wo ein einmal angelegtes Pseudonym nicht nur bei einem Dienst, sondern bei vielen Diensten wieder verwertbar ist.

Schließlich soll noch einmal an die oben bereits erwähnte Variante erinnert werden, wonach die Tokenerzeugung 50 auch bei der Registrierungsstelle 14 stattfinden kann, in welchem Fall die Tokenerzeugung 50 mit eventueller Signierung durch die zentrale Registrierungsinstanz 14 durchgeführt wird, eine Auslieferung von Tokens via OT an den Nutzer stattfindet (vgl. 56), eine nachgelagerte Nutzerregistrierung/Anmeldung mit Token bei der Anmeldestelle 16 stattfindet (vgl. 58-62), wobei die Authentizität durch die Anmeldestelle 16 via Signatur überprüft wird und doppelte Anmeldungen erkannt werden, wobei ein ZK-Protokoll verwendet werden kann oder nicht.

Eine wiederum andere Variante entsprach derjenigen von Fig. 3, wonach sogar die Tokenverwaltung auf Seite der Registrierungsstelle 14 stattfand. Die Vorteile dieser zuletzt geannten Variante kann folgendermaßen zusammengefasst werden:

- Ein potenziell sehr viel größerer zentraler Token-Pool senkt die Wahrscheinlichkeit der zufälligen Mehrfachauslieferung eines Token. Ebenso ist es damit für ein, gegen den Nutzer agierendes, System aus Anmelde-und Registrierungsstellen ungleich schwerer eine reale Nutzeridentität einer kleinen Menge an Token zuzuordnen.

- Die Streichung der Token würde zentral bei der Registrierungsstelle erfolgen und somit auch den logistischen Aufwand der Tokenstreichung und Tokenerzeugung verringern, da die Registrierungsstelle unabhängig von den verschiedenen Anmeldestellen den Pool erneuern kann.

## Anwendungsszenarien

Im Folgenden werden mögliche Anwendungsszenarien für die oben beschriebenen Ausführungsbeispiele der pseudonymisierten Anmeldung beschrieben.

## Data Mining/ Collaborative Filtering

Ein Anwendungsszenario für die "privacy enhanced authentication" (oder pseudonyme Authentifizierung) ist der Fall des Data Minings, also des gezielten Suchens und Erkennens von Mustern in verschiedenen Datenbeständen. Dabei geht es in erster Linie um personenbezogene Daten oder Nutzungsdaten von Nutzern diverser Systeme (z.B. bei der Verarbeitung medizinischer Informationen, Sammlung und Verarbeitung von Nutzungsdaten und Nutzerpräferenzen etc.). Hier kann Datenschutz aufgrund der entsprechenden gesetzlichen Regelungen (und in vielen Fällen im Interesser der Nutzer auch darüber hinaus) eine wichtige Rolle spielen. Es ist also notwendig, die Privatsphäre der Nutzer zu schützen, nach Möglichkeit soweit, dass aufgrund der durchsuchten und analysierten Daten keine Rückschlüsse auf die Identität des Nutzers möglich sind. Anderseits muss zur Durchführung des Data Minings eine Unterscheidung der Nutzer möglich sein.

Für Collaborative Filtering gelten ähnliche Ansprüche: Man muss Nutzer zumindest in speziellen Gruppen zusammenfassen können, also sie gruppenweise unterscheiden können. Ebenso gilt der Anspruch des Datenschutzes und der Privatsphäre der Nutzer: Bei Verarveitung und Auswerten der Daten soll keine Zuordnung zur realen Identität der Nutzeri möglich sein.

## Nutzerauthentifizierung

Im Fall der Nutzerauthentifizierung geht es darum, dass ein Nutzer auf Dienste oder Ressourcen zugreifen oder an einem System teilnehmen möchte. Das System muss dabei die behauptete Identität des Nutzers überprüfen, um die entsprechenden Aktionen zu autorisieren. Auch hierbei spielt Datenschutz eine wichtige Rolle: Das System soll nicht die reale Identität von Nutzern erfahren, aber oft zwischen Nutzern oder Nutzergruppen differenzieren können.

**Authentifizierung von Metadaten**

Authentifizieren von Metadaten bedeutet hierbei, dass nachgewiesen werden soll, dass Metadaten aus der behaupteten Quelle stammen und seit Erzeugung bzw. Entstehung nicht manipuliert wurden. Die durch Nutzer (oder entsprechende Geräte / Software) generierten oder auf sie bezogenen Metadaten sollen aber wiederum keine Rückschlüsse auf die reale Identität von Nutzern (oder auch Geräten etc.) ermöglichen, andererseits kann auch hier eine Differenzierung nach Nutzergruppen oder sogar Nutzern von Vorteil sein.

**E-Voting (Revenue Sharing)**

In diesen Fällen soll eine (meist pro Nutzer limitierte und damit Differenzierung voraussetzende) "Stimmabgabe" möglich sein, ohne Rückschlüsse auf die reale Identität zu ermöglichen. Außerdem soll ein Nutzer im Bedarfsfall in der Lage sein zu überprüfen, ob die Stimme gezählt wurde. Dies kann zum Beispiel eingesetzt werden, um existierende Ressourcen in einem auf Bewertung basienden Distributionssystem zu verteilen: In dem System werden digitale Güter angeboten und können von Nutzern bewertet werden, und anhand der Bewertung findet eine Auszahlung an die Urheber / "Produzenten" statt.

**Pseudonyme Nutzung personalisierter Dienste**

In diesem Anwendungsszenario sollen personalisierte Dienste pseudonym genutzt werden können. Der Hintergrund ist, dass immer mehr Dienste angeboten werden, welche auf einen speziellen Nutzer zugeschnitten sind und insofern Nutzerdifferenzierung voraussetzen, z.B. personalisierte Musikempfehlungen auf Basis des eigenen Musikgeschmacks oder Produktempfehlungen auf Basis des Kaufverhaltens anbieten. Andererseits ist es im Interesse der Nutzer, dass diese Daten geschützt bleiben und nur mit einem Pseudonym, nicht aber mit ihrer realen Identität verknüpft werden können.

**Authentifizierung von Geräten**

Dieses Anwendungsszenario entspricht dem Fall der Nutzerauthentifizierung, wobei es hierbei statt um reale Nutzer bzw. Personen um Geräte oder Applikationen geht, die an einem System teilnehmen. Diese Geräte und Applikationen werden hierbei wie Nutzer behandelt und mit einem Pseudonym verknüpft, entsprechende Rückschlüsse auf die Geräte (und damit ggf. indirekt auf entsprechende Nutzer) aber verhindert. Ein Beispiel dafür kann z.B. sein, dass eine iPhone-Applikation nutzerbezogene Informationen generiert, welche statistisch ausgewertet werden sollen.

**Id-Management**

Ein ID Managementsystem (kurz IdM) kann interpretiert werden als System (siehe Bild), welches eine oder mehrere Identitäten von Nutzern für verschiedene Anmeldestellen (potenziell Diensteanbieter) verwaltet. Die Aufgaben des Systems erstrecken sich von der reinen Verwaltung der Identitäten, über die Herstellung von Interoperabilität zwischen verschiedenen Authentifizierungsverfahren bis hin zur Zusammenführung bzw. Matching und Verwaltung mehrerer Identitäten unter einem weiteren Pseudonym (ID Federation). Ein unter Zuhilfenahme von "pseudonymisierter Authentifizierung" realisiertes IdM-System hat hierbei die Besonderheit (und entsprechende Vorteile), dass die ID bzw. IDs eines Nutzers von seiner realen Identität entkoppelt bleiben, um größtmöglichen Schutz der Privatsphäre zu gewährleisten. Dies soll im folgenden etwas genauer beschrieben werden:

Die Teilnahme am System kann dabei folgendermaßen ablaufen:

- Ein Nutzer 24 registriert sich bei einer Registrierungsstelle 14 im System. Dabei ist pro System nur genau eine Registrierungsstelle vorhanden (idealisierende Annahme).
- Für die Registrierung wird ein gültiges, von einer externen CA ausgestelltes, digitales Zertifikat verwendet, welches die reale Identität des Nutzers 24 nachweist. Alternativ ist es möglich auch einen vorgelagerten Identitätsnachweis zu verwenden.
- Nach Prüfung der Identität 54; 84 erhält der Nutzer 24 entsprechend der "privacy enhanced authentication" mittels Oblivious Transfer ein Token, welches eine Entkopplung von ID und realer Identität ermöglicht.

- Mit Hilfe dieses Tokens meldet sich ein Nutzer 24 an einer Anmeldestelle des Systems an. Dabei können potentiell mehrere solche Anmeldestellen existieren.
- Die Token, welche zur Anmeldung verwendet wurden, können sowohl von der jeweiligen Anmeldestelle 16, als auch von der Registrierungsstelle gesperrt bzw. gelöscht 60; 92 werden, um eine erneute Anmeldung mit den gleichen Token zu verhindern. In welchen Fällen und wie ein solche Löschung oder Sperrung erfolgt wird im nächsten Abschnitten gezeigt.

Für System und Komponenten gibt es dabei diverse mögliche Konstellationen:

- Ein Nutzer 24 kann mit einer einzigen Identität an genau einen System teilnehmen. Hier erhält der Nutzer bei Registrierung 56; 86 genau ein Token, welches er bei Anmeldung im System verwendet.
- Ein Nutzer 24 kann mit einer ID verschiedene Anmeldestellen 16 nutzen. Hier besteht die Möglichkeit dem Nutzer mehrere Anmeldestellen-spezifische Token zu übermitteln. Dabei würde sich die Registrierungsstelle 14 bei der ersten Registrierung merken, welche Anmeldestelle der Nutzer genutzt hat. Nachträglich kann der Nutzer noch weitere Token für weitere Anmeldestellen 16 dort anfordern oder bei Verlust bzw. Kompromittierung einer ID auch ein neues Token für eine schon genutzte Anmeldestelle 16 beantragen. (ID Federation).
- Ein Nutzer 24 kann mit mehreren ID's an einem System und einem einzigen Dienst teilnehmen (IdM).
- Ein Nutzer 24 kann mit mehreren ID's an mehreren Systemen und Diensten teilnehmen, wobei die Anzahl der ID's ungleich der Anzahl der Systeme und Dienste sein kann (IdM).
- Ein Nutzer 24 kann mit einer einzigen ID an mehreren Systemen und Diensten teilnehmen (ID Federation).

Um dies zu erreichen, werden die beschriebenen Verfahren und Komponenten zur pseudonymisierten Authentifizierung dabei in bestehende IDM-Systeme integriert (z.B. via Enterprise Sign-On-Engine ESOE oder Liberty Alliance).

## Zusätzliche Variationen / Erläuterungen

Im Folgenden werden noch einmal zusammenfassende Ausführungen zu den oben geschilderten Ausführungsbeispielen getätigt. Der Vorgang der pseudonymisierten Anmeldung wird im Folgenden auch manchmal als Privacy Enhanced Authentication bezeichnet.

Zu den zentralen Bestandteilen der Privacy Enhanced Authentication gehörte u.a. das Oblivious Transfer Protocol, das die Entkopplung von ID und realer Identität erzielte. Eine Löschung verwendeter Token auf Seiten der Anmeldestelle 16 vermeidet Mehrfachanmeldungen. Optional kann die Löschung verwendeter Token auch bei der Registrierungsstelle durchgeführt werden, was das Übertragen eines Tokens an zwei unterschiedliche Nutzer verhindert.

Der Einsatz des Zero-Knowledge-Verfahrens ist, wie oben beschrieben, optional. Vorteile bestehen im Folgenden: Der Nutzer muss sein erhaltenen Token nicht direkt an die Anmeldestelle senden. Damit erhält der Token gewisse Eigenschaften eines privaten Schlüssels. Der Token muss vom Nutzer geheimgehalten werden. Weiterhin liefert das Verfahren den Vorteil, dass die Anmeldestelle zwar in der Lage ist zu prüfen, ob der Nutzer über ein legalen Token verfügt, aber gleichzeitig nicht weiß, welchen Token der Nutzer besitzt. Darüber hinaus ist die Anmeldestelle trotzdem in der Lage zwischen einzelnen Nutzern zu unterscheiden.

Wenn ein Zero-Knowledge-Verfahren für die Schritte 58 bzw. 88 aus Fig. 2 eingesetzt wird, dann kann dies auf folgende Weise durchgeführt werden:

1. Die Anmeldestelle 16 generiert zufällig die Token. Diese müssen dabei die Form $t_i = g^i$ haben, wobei $t_i$ der i-te Token und $g$ ein Generator einer zyklischen Gruppe $Z_q^*$ ist. Damit gilt: $t_i \in Z_q^* \forall i \in \{0,...,q-1\}$.

2. Der Tokenpool wird an die Registrierungsstelle 14 gesendet, welche sich zusätzlich noch ein zufälliges Element $b$ aus der Gruppe $Z_q^*$ wählt.

3. Bei der Tokenvergabe an Nutzer sendet die Registrierungsstelle 14 zusätzlich zu dem ihr nicht bekannten Token (siehe OT) noch den Wert $b$ an den Nutzer mit.

4. Bei der Anmeldung des Nutzers an der Anmeldestelle möchte der Nutzer 24 mittels des beschriebenen Ohta-Okamoto Zero-Knowledge Protokolls den Besitz eines legalen Tokens beweisen. Dazu nimmt der Nutzer sein Token als Input und den Wert $b$ als notwendigen Exponenten für das Verfahren.

5. Damit wird der Token an sich nicht übertragen, sondern nur ein vom Token abgeleiteter Wert. Dieser Wert (sprich: $g^{ib}$) wird von der Anmeldestelle 16 gespeichert, um eine erneute Anmeldung mit dem gleichen Token zu erkennen und zu sperren.

6. Die Anmeldestelle 16 ist dabei nicht in der Lage aus den vorhandenen Token und den empfangen Werten g^ib zu berechnen, um welche Token es sich handelt (siehe Diffie-Hellman Annahme).

Zu den beteiligten Komponenten aus dem Szenario aus Fig. 1 sei noch folgendes erwähnt:

Es können externe Komponeten vorgesehen sein, die in Fig. 1 nicht gezeigt sind. Dazu könnte beispielsweise eine Zertifizierungsbehörde (CA; CA = Certification Authority) gehören. Diese Zertifizierungsinstanz könnte dazu in der Lage sein, qualifizierte Zertifikate aufgrund eines korrekten Identitätsnachweises, wie z. B. Lichtbildausweis, o.ä. zu vergeben. Diese Zertifikate würden in dem System nach Fig. 1 zur Registrierung, also zum Identitätsnachweis, verwendet werden können. Entsprechende CA's werden von dem System als just third parties bzw. vertrauenswürdige Dritte angesehen.

Ferner könnte eine vorgelagerte Stelle für den Identitätsnachweis existieren. Der Identitätsnachweis könnte vorgelagert durchgeführt werden, indem beispielsweise eine persönliche Identitätsprüfung stattfindet, wie es auch bereits Bezug nehmend auf Fig. 1 beschrieben worden ist. Darauf muss der Nutzer eine Information erhalten, welche ihn im System als validen Nutzer erkennt.

Folgende Systemkomponenten aus Fig. 1 wurden schon beschrieben:

System 10: Das Gesamtsystem ist ein Zusammenschluss der folgenden Komponenten. Es kann potentiell mehrere Systeme geben, welche auch untereinander interagieren können.

Registrierungsstelle 14: Das System kann über genau eine Registrierungsstelle verfügen, welche dazu dient die Identität eines Nutzer zu prüfen und die Token zu vergeben und zu verwalten.

Nutzer 24: Eine natürliche Person, oder ein repräsentierende User Agent (o.ä.), welche(r) am System teilnehmen möchte.

Anmeldestelle(n) 16: An dieser Stelle melden sich die Nutzer 24 mit dem erhaltenen Token einmalig an um ein Pseudonym zu erhalten und mit Hilfe dessen sich im System zu bewegen. Es kann potentiell mehrere Anmeldestellen in einem System geben.

Im Folgenden soll noch kurz zu dem Verhältnis der Nutzer 24 zur Anzahl der Pseudonyme Stellung genommen werden.

- Es gibt die Möglichkeit Nutzern die Anzahl der erlaubten Pseudonyme vorzuschreiben. Dabei entscheidet die jeweilige Anmeldestelle vor Systemstart, wie viele Pseudonyme sie für jeden Nutzer zulassen möchte. Dabei gibt es Motivationen für folgende beiden Fälle.

- Ein Nutzer darf in einem System bei einer Anmeldestelle nur genau ein Pseudonym besitzen.

i. In diesem Fall ist ein anmeldestellenspezifisches re-issueing nicht zugelassen, d.h. die Registrierungsstelle 14 merkt sich welcher Nutzer ein Token für welche Anmeldestelle 16 erhalten hat und stellt für dieselbe Anmeldestelle 16 kein neues Token aus.

ii. Eine Kommunikation zwischen Anmeldestelle 16 und Registrierungsstelle 147 zum Zweck des Sperrens von Token ist nicht nötig.

iii. Nach einer vorher bestimmten, in Abhängigkeit von der Größe des Tokenpools berechneten, Anzahl durchgeführter Registrierungen beantragt die Registrierungsstelle 14 einen neuen Tokenpool

iv. Die Berechnung des Schwellwertes erfolgt wie folgt:

1. Die Wahrscheinlichkeit ein bereits verteiltes Token ein zweites mal zu senden beträgt: p = (# durchgeführter Registrierungen) / (# Token im Tokenpool)

2. Sollte diese Wahrscheinlichkeit einen bestimmten Schwellwert (z.B. 1%) überschreiten wird ein neuer Tokenpool beantragt.

- Ein Nutzer darf in einem System bei einer Anmeldestelle 16 mehrere bis beliebig viele Pseudonyme haben

i. In diesem Fall ist re-issueing zugelassen, d.h. möchte ein Nutzer eine zweite Id, bzw. ein zusätzliches Profil, so kann zu diesem Zweck ein weiteres Token bei der Registrierungsstelle beantragen.

ii. Die Registrierungsstelle 14 merkt sich die Anzahl der ausgestellten Token pro Nutzer, damit ist eine Limitierung der ID's pro Nutzer möglich.

iii. In diesem Fall muss eine Kommunikation zwischen Anmeldestelle 16 und Registrierungsstelle 14 stattfinden, denn sonst wäre es möglich, dass zwei Nutzer 24 zufällig den selben Token erhalten und die Anmeldestelle 16 sperrt diesen Token nach der ersten Verwendung und der zweite Nutzer hat dann keine Möglichkeit mehr sich überhaupt jemals am System erfolgreich anzumelden.

iv. Auch hier muss der Tokenpool nach Erreichen eines gewissen Schwellenwertes erneuert werden.

v. Die Berechnung des Schwellenwertes erfolgt ähnlich zum ersten Fall:

1. S = (# durch Anmeldestelle gesperrte Token) / (# Token im Tokenpool)
2. Erreicht S einen bestimmten Wert, so wird ein neuer Tokenpool beantragt.

**Anzahl von Anmeldestellen pro Registrierungsstelle**

Eine mögliche Systemkonfiguration für das Ausführungsbeispiel von Fig. 1 sieht vor, dass nur eine Registrierungsstelle 14 vorhanden ist. Für die Anzahl der möglichen Anmeldestellen 16 kann folgendes gelten:

-   Im System existiert nur genau eine Anmeldestelle.

i. In diesem Fall besteht, wie oben beschrieben, die Möglichkeit, dass für jeden Nutzer entweder eine oder mehrere Pseudonyme zugelassen sind. Dabei muss die Anmeldestelle vor Systemstart festlegen, welche der beiden oben erwähnten möglichen Konstellationen sie verwenden will.

-   Im System sind mehrere Anmeldestellen vorhanden.

ii. In diesem Fall muss jede Anmeldestelle für sich entscheiden, ob sie pro Nutzer ein oder mehrere Pseudonyme zulassen möchte. Die Registrierungsstelle muss dann für den Fall, dass nur ein Pseudonym gestattet ist, die Kommunikation und die Verwaltung des Pools, oben für den Fall, dass nur genau ein Pseudonym pro Nutzer bei einer Anmeldestellestelle zugelassen ist, dargestellt für alle diese Anmeldestellen gestalten. Für alle anderen Anmeldestellen, die mehrere Pseudonyme zulassen wollen, wird die Systemkommunikation wie oben kurz skizziert gestaltet. Dabei kann jede Anmeldestelle vorher festlegen, wie viele Pseudonyme möglich sein sollen, denn aufgrund der Speicherung der Anzahl der bereits ausgestellten Token für Nutzer pro Anmeldestelle ist eine exakte Limitierung möglich.

-   Für den Fall, dass alle Anmeldestellen für jeden Nutzer nur ein gemeinsames Pseudonym zulassen wollen, also dass der Nutzer sich seinem einzigen Pseudonym bei allen Anmeldestellen anmelden kann (ID Federation), findet das Szenario des ID-Managements Anwendung.

Um ein paar Bemerkungen zu potenziellen Angriffsmöglichkeiten zu machen, wird folgendes geäußert. All das, was auf der Seite des Nutzers 24 bei den obigen Ausführungsbeispielen passiert, ist für Angreifer nicht kontrollierbar. Die Anmeldestelle 16 könnte allerdings speziell gewählte oder manipulierte Token verwenden, um die Identität von Nutzern zu erfüllen oder Informationen über die Identität zu erhalten. Es könnte ein Diebstahl des Tokens stattfinden. Möglich wäre auch, dass ein angreifender Nutzer für das optionale ZK-Verfahren nicht den von der Registrierungsstelle 14 festgelegten Wert "b" und den Besitz eines gültigen Tokens zu beweisen, sondern einen anderen manipulierten Wert, um eventuell den gleichen Token mehrfach zu verwenden.

**Verfahren (detailliert)**

Im Folgenden werden die Ausführungsbeispiele der vorliegenden Erfindung noch einmal in anderen Worten beschrieben. Dabei ist der Bergiff "credential" synonym zu "Token" bzw. "Pseudonym-Token" zu verstehen. Im Vergleich zu der Vier-Phasen-Einteilung aus der vorhergehenden Beschreibung, wird außerdem eine Einteilung in nur drei Schritte vorgenommen, wobei der zweite Schritt der zweiten und dritten Phase aus der vorhergehenden Vier-Phasen-Einteilung entspricht.

**1. Vorbereitung: Generierung von Ausgangswerten, Primzahlen und Credentials (Akteure: Registrierungsstelle, Anmeldestelle)**

Registrierungsstelle (Trusted Third Party!) und Anmeldestelle (im Dienst integriert oder "dienstnah") kommunizieren untereinander zum Zweck der Wahl von Ausgangswerten und der Generierung von Primzahlen zur Durchführung von den später folgenden *Oblivious Transfer*- und *Zero-Knowledge* Protokollen: Die Ausgangswerte und "credentials" können je nach Verwendungsart zufällig (beliebiger Zufallsgenerator) oder mittels eines geeigneten Algorithmus bzw. selbst festgesetzter Regeln gewählt werden. Die für das Protokoll benötigten Primzahlen werden mittels geeigneter Primzahlgeneratoren erzeugt. Die Ausgangswerte und Primzahlen werden je nach Variante des Protokolls entweder bei Anmeldestelle oder bei Registrierungsstelle analog zu den Erfordernissen existierender *Oblivious Transfer-* und *Zero-Knowledge* Verfahren erzeugt und ggf. ausgetauscht.

Eine hinreichend große Menge (Pool) von möglichst (für einige Anwendungen auch zwingend) paarweise verschiedenen "credentials" werden bei der Anmeldestelle erzeugt und mit Hilfe deren privaten Schlüssels signiert (der öffentliche Schlüssel wird der Registrierungsstelle bekannt gegeben). Im Folgenden wird ein Element aus der Menge von "credentials" (also ein credential) auch als Teilinformation bezeichnet.

**2. Registrierung eines Nutzers (Akteure: Registrierungsstelle, Nutzer)**

Die reale Identität des zu registrierenden Nutzers / Akteurs kann über beliebige SOTA Verfahren überprüft werden, z.B. via Validierung existierender qualifizierter Zertifikate. Bei erfolgreicher Validierung ist nun folgender Schritt entscheidend: Unter Verwendung eines sog. *Oblivious- Ti-ansfer* Protokolls (sog. 1-aus-n OT mit möglichst großem n; Verfahren sind unter anderem Rabin-OT, Even-Goldreich-Lempel-OT oder Naor-Pinkas-OT) wird aus der in Schritt 1 erzeugten Menge von "credentials" eine Teilinformation (also ein "credential") an den Nutzer übertragen. Durch die Verwendung des OT Protokolls ist dabei einerseits gesichert, dass die Registrierungsstelle nicht wissen *kann,* welche Teilinformation an den Nutzer übertragen wurde und andererseits, dass der Empfänger *nur* die gewählte Teilinformation erhält. Dieser Schritt sorgt also für eine "Entkopplung" von realer Identität und Teilinformation unter Beibehaltung der Möglichkeit, weiterhin zwischen Nutzeridentitäten unterscheiden zu können.

Variante: Sofern für den jeweiligen Anwendungsfall die Verwendung mehrerer Pseudonyme pro Nutzer wünschenswert ist, kann bei diesem Schritt auch ein sog. m-n-OT Protokoll eingesetzt werden, was die gleichzeitige Übertragung mehrer Teilinformationen ermöglicht, die alle von der realen Identität sowie untereinander paarweise "entkoppelt" sind. In diesem Fall wird die in Schritt 3 beschriebene erstmalige Anmeldung mehrfach (einmal pro Teilinformation) durchgeführt.

**3. Erstmalige Anmeldung eines Nutzers bei einem Dienst (Akteure: Anmeldestelle, Nutzer)**

*Anm.: Für alle folgenden Kommunikationsschritte zwischen Anmeldestelle und Nutzer ist der Einsatz von Anonymisierungsdiensten (z.B. TOR etc.) empfehlenswert, um etwaige Rückschlüsse auf die reale Identität der Nutzer über Kontextinformationen (IP Adresse etc.) zu verhindern.*

Die erstmalige Anmeldung des Nutzers bei einem Dienst findet mit der in Schritt 2 erhaltenen Teilinformation statt. Dafür existieren verschiedene Varianten:

- Der Beweis der Existenz der Teilinformation beim Nutzer kann über die Verwendung eines sog. *Zero-Knowledge-*Beweises (z.B. Ohta-Okamoto-ZK, prinzipiell sind aber viele andere ZK-Beweise verwendbar) realisiert werden. Hierbei beweist der Nutzer dem Dienst den Besitz des credentials, ohne sonst irgendwelche Informationen preiszugeben, die für die Anmeldestelle (oder auch Dritte die die Kommunikation abhören) verwertbar wären. Aufgrund ihrer Sicherheitsvorteile ist diese Variante besonders interessant.

- Die Teilinformation kann auch auf Nutzerseite mit dem öffentlichen Schlüssel der Anmeldestelle verschlüsselt und an die Anmeldestelle übertragen werden, wo diese sie wiederum mit ihrem privaten Schlüssel entschlüsselt. Alternativ können Standard-Schlüsselaustauschverfahren wie z.B. das Diffie-Hellman-Protokoll verwendet werden, sofern diese keine spezifischen Nachteile mit Hinblick auf den Schutz der Privatsphäre des Nutzers haben.

Die Anmeldestelle prüft anschließend die Authentizität der signierten Teilinformation durch Anwendung ihres eigenen öffentlichen Schlüssels. Die Teilinformation kann nach erfolgreicher Validierung von der Anmeldestelle als "verbraucht" markiert werden, wobei nach dem Aufbrauchen einer definierten Menge von Teilinformationen der Pool erneuert wird (analog zu dem entsprechenden Abschnitt bei Schritt 1). Der Anmeldedienst kann dem Nutzer nun eine eindeutige ID zuordnen.

Nach dieser Prüfung der "Legitimität" des Nutzers kann nun die eigentliche Anmeldung erfolgen. Dabei kann auf existierende Verfahren zur Nutzerauthentifizierung zurück gegriffen werden, z.B.:

1. Passwortbasierte Authentifizierung: Dabei wird vom Nutzer ggf. ein Loginname/Pseudonym (alternativ kann auch vom Anmeldedienst ein Name / ID. vergeben werden) und Passwort an den Anmeldedienst übertragen, aus Sicherheitsgründen vorzugsweise nicht im Klartext (vgl. z.B. *basic authentication*) sondern unter Zuhilfenahme von Hashingverfahren (vgl. z.B. *digest authentication*). Alternativ kann es auch hier sinnvoll sein, statt der einfachen Übertragung der Informationen einen Existenznachweis mit Hilfe eines ZK-Protokolls vorzunehmen.

2. Public Key bzw. Zertifikatsbasierte Authentifizierung: Dabei wird auf Nutzerseite ein Schlüsselpaar generiert und der öffentliche Schlüssel an die Anmeldestelle übertragen. Darüber hinaus kann die Anmeldestelle dem Nutzer dann ein entsprechendes pseudonymisiertes Zertifikate ausstellen. Für den Nachweis der Existenz des entsprechenden privaten Schlüssels auf Nutzerseite kann auch hier die Verwendung eines ZK-Protokolls sinnvoll sein.

Grundsätzlich kann dieser Vorgang auch wiederholt werden, dann entstehen mehrere miteinander verbundene virtuelle Identitäten zu ein und derselben Teilinformation.

Zukünftige Anmeldungen des Nutzers beim Anmeldedienst unter Verwendung der entsprechenden Identität können nun auf Basis der o.g. Informationen durchgeführt werden, also bei (1) mit Loginname / Pseudonym / ID und Passwort, bei (2) unter Verwendung des öffentlichen Schlüssels bzw. Zertifikats und des privaten Schlüssels des Nutzers. So ist einerseits gewährleistet, dass der Anmeldedienst Nutzer nicht nur authentifizieren, sondern auch eindeutig zuordnen und zwischen ihnen unterscheiden kann. Aber es ist ihm nachweisbar nicht möglich, Rückschlüsse auf die reale Identität der entsprechenden Nutzer zu machen (Vorausgesetzt, der Nutzer gibt Informationen über sich nicht auf andere Weise preis, was über die Verwendung von Anonymisierungstools und entsprechendes Verhalten aber vermeidbar ist). Dieser Schutz der Privatsphäre des Nutzers gilt selbst dann, wenn Registrierungs- und Anmeldestelle kooperieren oder die Anmeldestelle auf andere Weise an die Datenbestände der Registrierungsstelle herankommt. Lediglich der Nutzer selbst ist (z.B. in bestimmten Notfällen) in der Lage, die Bindung seiner realen Identität zum Pseudonym / Schlüssel nachzuweisen.

Die Verwendung von Public Key Cryptography (PKC) bzw. Zertifikaten bei Methode (2) (Public Key bzw. Zertifikatsbasierte Authentifizierung) ist insofern besonders nützlich, als dass sich damit zahlreiche interessante Anwendungsbereiche über die reine Nutzerauthentifizierung und die darauf aufbauende Autorisierung von Aktionen hinaus realisieren lassen. So kann das erzeugte Schlüsselpaar zur Authentifizierung von vom Nutzer erzeugten Daten und zur vertraulichen Kommunikation genutzt werden. Gleichzeitig bleiben die Vorteile bzgl. Datenschutz dabei immer erhalten. Anwendungsbereiche hierfür sind z.B. die Authentifizierung von Daten in verteilten Systemen, zuverlässige und datenschutzfreundliche Auswertung von Nutzer- und Nutzungsinformationen, und viele andere Bereiche.

**Protokollbeschreibungen**

Im Folgenden werden mathematisch fundiertere Darstellungen möglicher Protokollumsetzungen für Registrierung und Anmeldung der Ausführungsbeispiele entwickelt, die beschriebenen Anforderungen (a) bis (e) erfüllen. Dabei werden mehrere mögliche Varianten für Protokolle vorgestellt. Hierzu werden folgende mathematischen Symbole verwendet:

$p, q$    p und q sind zwei große Primzahlen, also: $p, g \in P$

$(G, o)$    $G$ ist Gruppe mit der Operation o

$|G|$    Kardinalität (Mächtigkeit) einer Gruppe

$\mathbb{Z}_N$    $(\mathbb{Z}_N, +)$ ist zyklische Gruppe mit $N \in N$

$\mathbb{Z}_p$    mit $p$ Primzahl: Restklassenkörper modulo $p$

$\mathbb{Z}_N^*$    mit $\mathbb{Z}_N^* := \{a \in \mathbb{Z}_N \mid \mathrm{ggT}(a, N) = 1\}$ ist $(\mathbb{Z}_N^*, \circ)$ eine multiplikative Gruppe

$\mathbb{Z}_p^*$    $\mathbb{Z}_p^* := \mathbb{Z}_p - \{0\}$ mit Primzahl p

$\phi(N) = |\mathbb{Z}_N^*|$    Gruppenordnung, Eulersche Phi-Funktion

$\oplus$    XOR-Operator (exclusiv or)

$a \mid b$    a teilt b

$G \cong H$    Die Gruppe G ist isomorph zur Gruppe H

$A$    Anmeldestelle in den Protokollen

$R$    Registrierungsstelle in den Protokollen

$U$    Nutzer in den Protokollen

PKI    Public Key Infrastruktur

A = {0,1}    Alphabet mit den Elementen 0 und 1

$A^* = \bigcup_{i=0}^{\infty} A^i$    Kleene-Abschluss der Menge A

Um die genannten Anforderungen zu erfüllen, ist eine Trennung von Registrierung und Anmeldung sinnvoll. Aufgrund dieser Trennung besteht der Dienst nun nur noch aus der Anmeldung und den Funktionalitäten, die aufgrund der Anmeldung möglich sind. Da nun die Registrierung nicht mehr an den Dienst an sich gebunden ist, ist es prinzipiell möglich mit einer Registrierung bei mehreren Diensten teilzunehmen. Das Konglomerat aus Registrierungsstelle und den verschiedenen Diensten wird im folgenden System genannt.

Ein Nutzer benötigt nun nach der Registrierung irgendeine Information mit der er sich bei dem Dienst anmelden kann, also deren Besitz er beweisen kann. Dies macht den Einsatz von verschiedenen kryptographischen Verfahren notwendig. Die in den nächsten beiden Abschnitten verwendeten Verfahren sollen jetzt kurz beschrieben werden.

Ein Verfahren, welches in diesem Zusammenhang benutzt wird, ist das sogenannte *Oblivious Transfer* -Protokoll. Es soll die Bereitstellung einer Anmeldeinformation an den Nutzer ermöglichen. **Oblivious Transfer** ist ein Ansatz, der es zwei oder mehr Parteien ermöglichen soll, Teile einer Information zu erhalten, ohne, dass der Sender R erfährt, welchen Teil ein Empfänger U ausgewählt hat und ohne, dass U mehr erfährt als im Vorfeld vereinbart wurde. Die Menge der *Oblivious Transfer* -Protokolle wird mit

$$OT_n^m$$

m - AnzahlderTeile,n - AnzahldervomEmpfängergewähltenTeile bezeichnet. Die Bezeichnung $OT_1^2$ bedeutet z.B., dass V's Geheimnis aus *zwei* Teilen besteht, von denen U *einen* auswählen kann, den er dann erfährt.

Dazu erzeugt R zwei public key/ private key Paare und gibt bekannt, welcher öffentliche Schlüssel zu welcher Teilinformation gehört. U erzeugt einen Schlüssel für ein symmetrisches Verfahren. Diesen codiert er mit dem öffentlichen Schlüssel, der zu dem von ihm gewünschten Teil gehört. R bekommt das Ergebnis und entschlüsselt es mit dem jeweiligen privaten Schlüssel. Nun benutzt er die beiden erhaltenen (potentiellen) Schlüssel zum Codieren der beiden Teile seiner Information und sendet diese an U. Dieser kann mit seinem Schlüssel den von ihm ausgewählten Teil entziffern (und erhält bei der zweiten Entschlüsselung keinen sinnvollen Text).

In dem hier beschriebenen Kontext wir eine Erweiterung des $OT_1^2$, $OT_1^N$ verwendet. Ein effizientes Protokoll hierfür ist z.B. in [NP01] beschrieben.

Neben *Oblivious Transfer* wird noch ein weiteres Verfahren der modernen Kryptographie eingesetzt. Dabei handelt es sich um ein *Zero-Knowledge*-Verfahren (oder auch Zero-Knowledge-Beweis). Mit einem solchen Beweis soll der Nutzer den Besitz der Anmeldeinformation beweisen können. Ein Zero-Knowledge-Beweis hat die Eigenschaft, dass man jemanden von der Richtigkeit einer Behauptung überzeugen kann, ohne ihm etwas anderes zu verraten, als dass die Behauptung richtig ist. Aus der Geschichte der Mathematik ist ein schöner interaktiver Beweis bekannt:

**Authentifizierungsprotokoll, Variante I**

Die erste Variante des Protokolls verwendet *ObliviousTransfer* (vgl. [NP01]) und ein interaktives Zero-Knowledge-Verfahren von Ohta und Okamoto (vgl. [0088]). In dem Protokoll agieren drei Parteien untereinander. Auf der einen Seite steht der Nutzer (U), der sich beim Anbieter registrieren möchte. Auf der anderen Seite stehen eine Registrierungs- bzw. Validierungsstelle (R), die die Registrierung und Validierung des Nutzers übernimmt, und eine Anmeldestelle (A), die den Nutzer für seine Sessions authentifiziert und autorisiert das Angebot des Anbieters zu nutzen. Um eine Registrierung durchführen zu können, muss der Nutzer zuvor von einer vertrauenswürdigen Zertifizierungsinstanz ein qualifiziertes Zertifikat ausgestellt bekommen haben.

Die Grundidee dieses Protokolls ist, dass A sich verschiedene Informationen (Geheimnisse) sucht, bzw. erzeugt und davon eine über R an U gelangt. Mit diesem Geheimnis meldet U sich dann bei A mittels eines Zero-Knowledge-Verfahrens an. Das Zero-Knowledge-Verfahren wird verwendet, damit A nichts über den Nutzer oder auch dessen Geheimnis erfährt. Um eine böswillige Kooperation zwischen A und R zu verhindern, wird ein *Oblivious Transfer* -Protokoll benutzt, welches sicherstellt, dass R nicht in der Lage ist herauszufmden, welches der Geheimnisse U bekommen hat und somit auch nicht mit A kollaborieren kann.

Das Protokoll läuft im Wesentlichen in drei Phasen ab. Diese sind eine Vorbereitungsphase, die Registrierung im System und die erste Anmeldung. Für die Vorbereitungsphase gibt es zwei Varianten.

**Vorbereitungsphase Variante 1:**

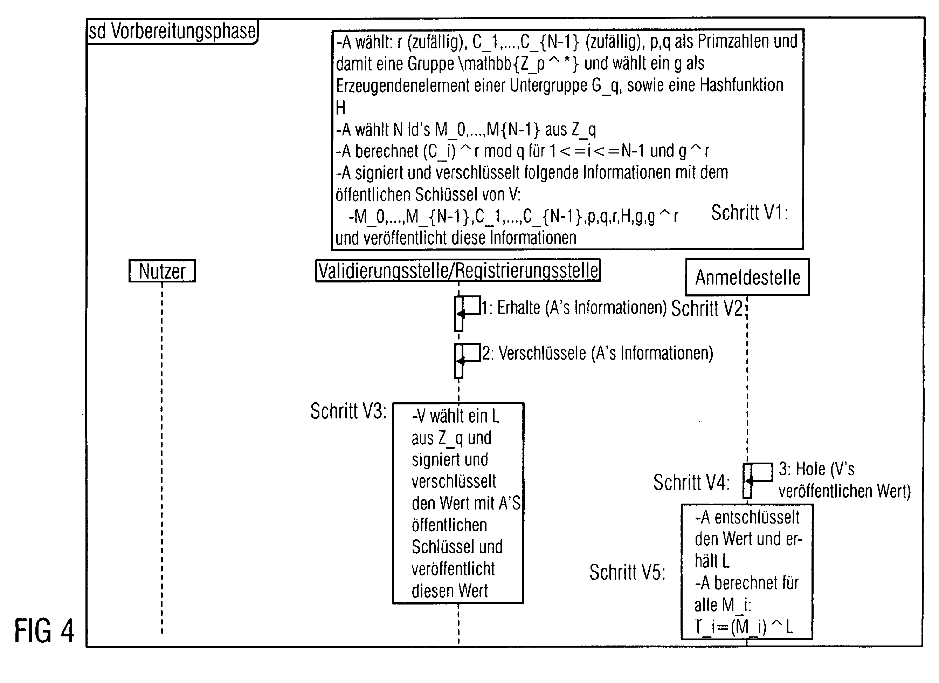

In der ersten Variante, die in Fig. 4 dargestellt ist, trifft die Anmeldestelle Vorbereitungen für die später folgenden Verfahren. Diese Vorbereitungsphase ist in Figur 4 dargestellt. Hier wählt A zwei große Primzahlen $p$ und $q$ mit $q \mid (p - 1)$, um auf den Gruppen $\left( \mathbb{Z}_p^{\bullet}, \cdot \right)$ und einer Untergruppe $(G_p,)$ der Ordnung q mit dem erzeugenden Element $g$ zu arbeiten (d. h. die Gruppe $(G_p, .)$ besteht aus Potenzen von $g$ modulo $q$). Ebenso wählt A eine kryptographische Hashfunktion $H$ , welche im *Oblivious Transfer*-Verfahren benötigt wird, sowie eine Zahl $r \in Z_q$ A wählt weiterhin $N$ verschiedene Informationen:

$$M_0,\ldots,M_{N-1} \mathrm{mit} M_i \in \mathbb{Z}_q \, \forall i \in \{0,\ldots,N-1\} \qquad (1)$$

und $N$ - 1 zufällige Konstanten

$$C_1,\ldots,C_{N-1} \in \mathbb{Z}_q. \qquad (2)$$

Die Anmeldestellte berechnet dann $C_i^r$ mod $q$ , für $1 \le i \le N$ -1 und $g^r$.

In dieser Phase gibt es keine direkte Nachrichtenkommunikation. Die im Folgenden beschriebenen indirekten Kommunikationen werden trotzdem wie normale Nachrichtenübertragungen behandelt.

*Schritt V1:* Die Informationen

$$p,q,H,g,r,g^r,C_1,\ldots,C_{N-1}M_0,\ldots,M_{N-1} \qquad (3)$$

werden von A signiert und mit dem öffentlichen Schlüssel von R verschlüsselt. Dabei wird angenommen, dass allen beteiligten Parteien ein eigenes Schlüsselpaar zur Verfügung steht. Danach werden die gesammelten Daten auf einem für R zugänglichen Server veröffentlicht.

*Schritt V2:* Die Registrierungsstelle R holt die von A für sie bestimmten Informationen vom Server und entschlüsselt diese mit ihrem privaten Schlüssel.

Danach prüft R noch die Signatur der Daten mit Hilfe des öffentlichen Schlüssels von A. Wird die Signatur bestätigt, so wählt R eine zufällige Zahl $L \in Z_q$. Diesen Wert signiert und verschlüsselt R so, dass nur A den Wert entschlüsseln und dann die Signatur von R prüfen kann.

*Schritt V3:* R hinterlegt $L$ auf dem selben Server, den A genutzt hatte.

*Schritt V4:* A holt sich $L$ vom Server.

Mit diesem Wert trifft A noch eine letzte vorbereitende Rechnung, die im Zero Knowledge Protokoll zur Verifizierung der Information benötigt wird.

*Schritt V5:* Die Anmeldestelle A berechnet

$$T_i := M_i^L, \quad i = 0,\ldots,N-1. \qquad (4)$$

Damit wäre die Vorbereitungsphase abgeschlossen. Es besteht jedoch die Möglichkeit, die Vorbereitungsphase auch anders zu gestalten. In der eben beschriebenen Variante wird diese Phase fast ausschließlich von A durchgeführt, aber es ist auch möglich, dass beide Parteien die Vorbereitungsphase gemeinsam durchführen.

**Vorbereitungsphase Variante 2:**

In diesem Fall wählt A nur die Informationen

$$p, q, H, L, M_0, \ldots, M_{N-1}.$$

Allerdings werden diese nun nicht auf einem Server veröffentlicht sondern direkt an R gesendet. Mit dieser Anpassung ist dann nur ein Kommunikationsschritt nötig.

*Schritt V1\*:* A sendet die Informationen

$$p, q, H, L, M_0, \ldots, M_{N-1}$$

an V.

V führt dann den Rest der Vorbereitungsphase aus. Das heißt in einem weiteren Schritt wählt die Registrierungsstelle R die, für den *Oblivious Transfer* nötigen, Zufallszahlen $C_i$, mit $i=1,\ldots,N-1$.

*Schritt V2\*:* R wählt zufällig und gleichverteilt die Werte

$$C_1, \ldots, C_{N-1}.$$

Als letzten Schritt in dieser Variante berechnet die Anmeldestelle wieder den Wert, welcher zur Verifizierung der geheimen Information benötigt wird, also ist dieser Schritt mit V5 identisch.

*Schritt V3\*:* Die Anmeldestelle berechnet

$$T_i := M_i^L, \quad i = 0, \ldots, N-1. \tag{5}$$

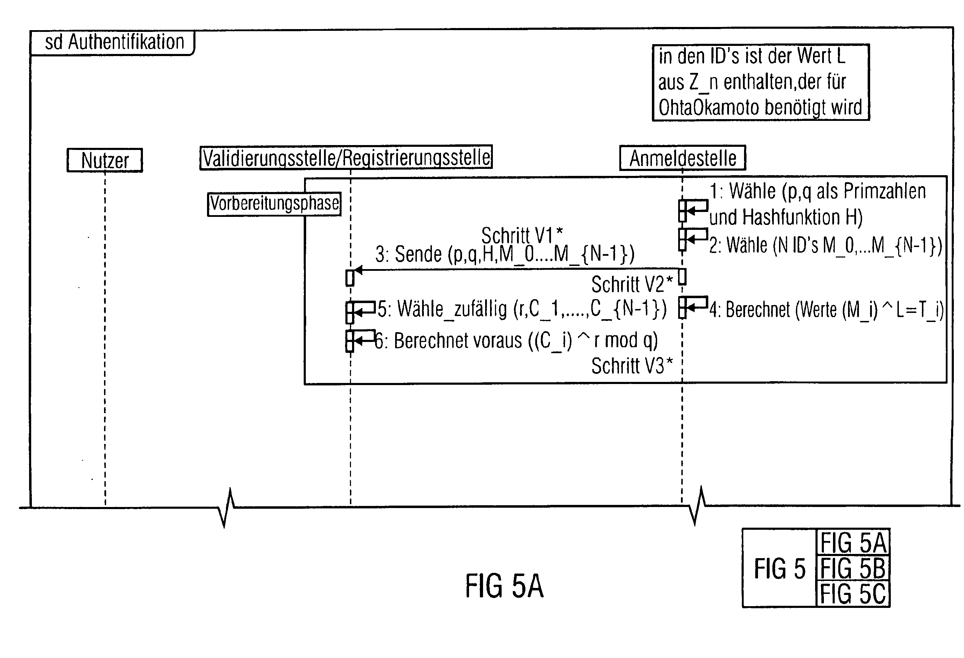

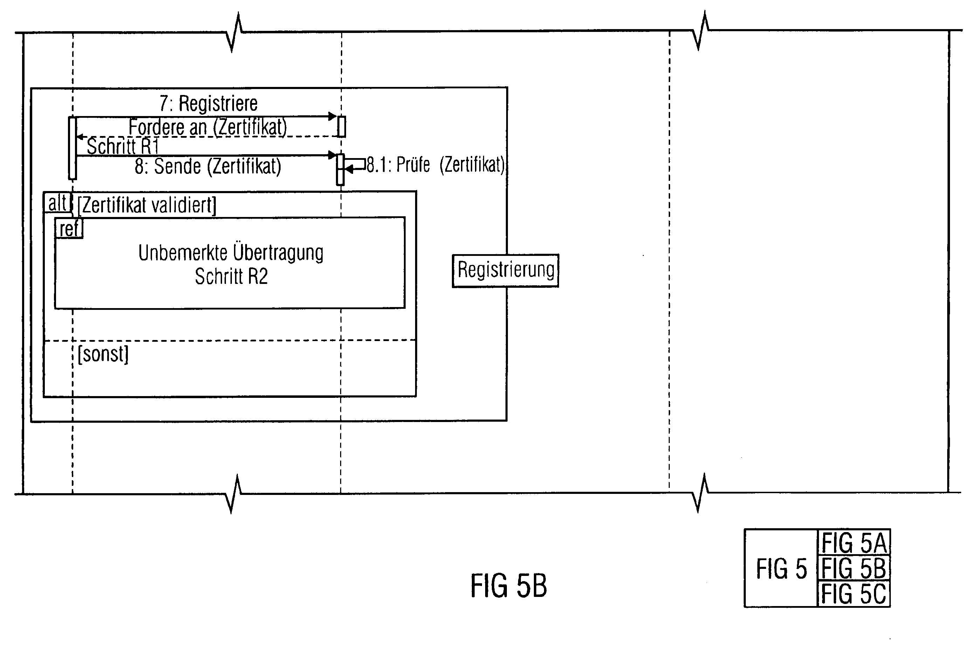

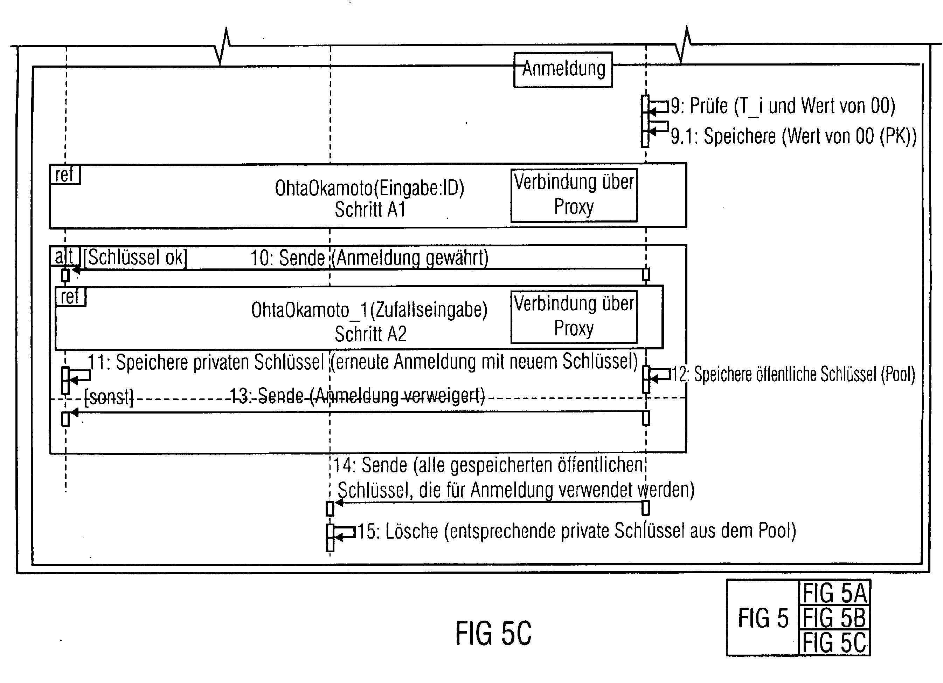

Der Vorteil der oben beschriebenen Variante ist eben der, dass die Kommunikation indirekt abläuft. Damit ist diese Kommunikation zeitunabhängig und R muss nicht auf einen Input von A warten. Allerdings ist ein Vorteil dieser zweiten Variante, dass die Wahl der verschiedenen Zufallszahlen nicht von einer Stelle durchgeführt wird und somit nicht von einer einzigen Stelle manipuliert werden kann. Ein weiterer Vorteil ist der, dass nun kein Kommunikationskanal von R nach A besteht, der, wenn auch indirekt, in der ersten Variante vorhanden war. Deshalb wird im weiteren Verlauf des Protokolls nun die zweite Variante der Vorbereitungsphase verwendet. In Fig. 5 ist ein Sequenzdiagramm dargestellt, welches den Ablauf der zweiten Variante der Vorbereitungsphase, der Registrierung und der Anmeldung veranschaulicht.

**Registrierung:**

Jetzt beginnt die eigentliche Registrierung, indem der Nutzer eine Anfrage auf Registrierung bei dem Anbieter stellt und die Registrierungsstelle V, welche die Registrierung übernimmt, daraufhin von U ein gültiges, also qualifiziertes, digitales Zertifikat fordert. Mit der Verwendung von Zertifikaten ist die Anforderung (d) erfüllt.

*Schritt R1:* U sendet sein Zertifikat an die Registrierungsstelle V.

Diese validiert das Zertifikat (wie dies funktioniert ist in Abschnitt beschrieben). Damit ist die eigentliche Registrierung abgeschlossen, da das Zertifikat alle nötigen Informationen über den Nutzer enthält. Der nächste Schritt dient dazu, die Anforderung (c) nach Pseudonymisierung zu erfüllen. Nachdem nun das Zertifikat verifiziert wurde, startet R das *Oblivious Transfer* -Protokoll.

*Schritt R2:* Die Parteien U und R führen, mit R als Sender und U als Empfänger bzw. Wähler, das *Oblivious Transfer* -Protokoll aus.

Dieses Protokoll besteht aus mehreren Unterschritten. Am Ende des Protokolls hat der Nutzer eine Information

$M_\sigma$ von R erhalten. Mit der Durchführung des *Oblivious Transfer* ist das Protokoll fast abgeschlossen.

**Anmeldephase:**

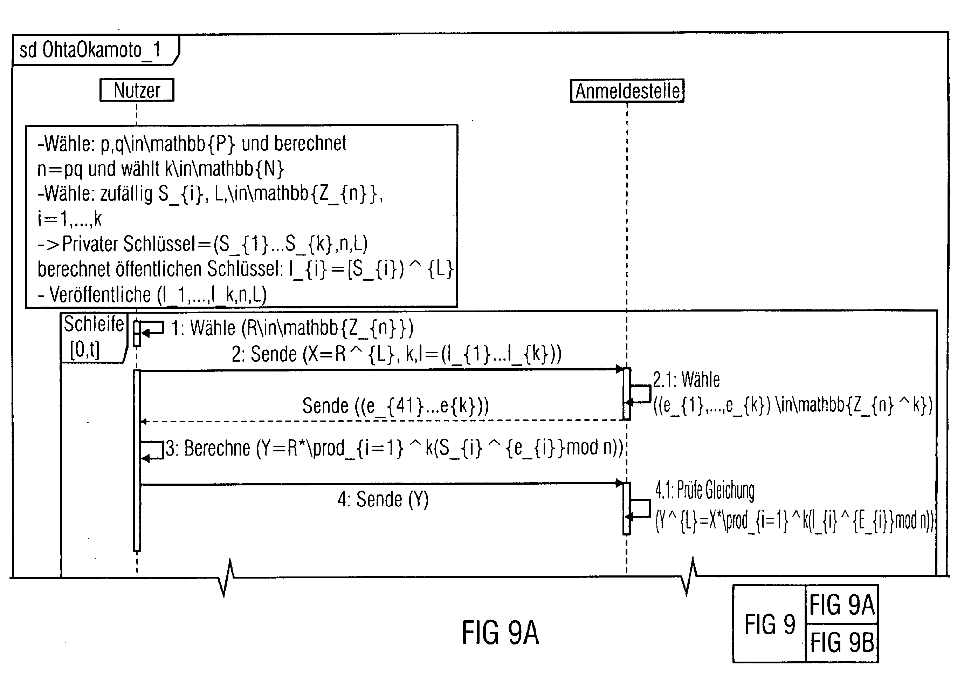

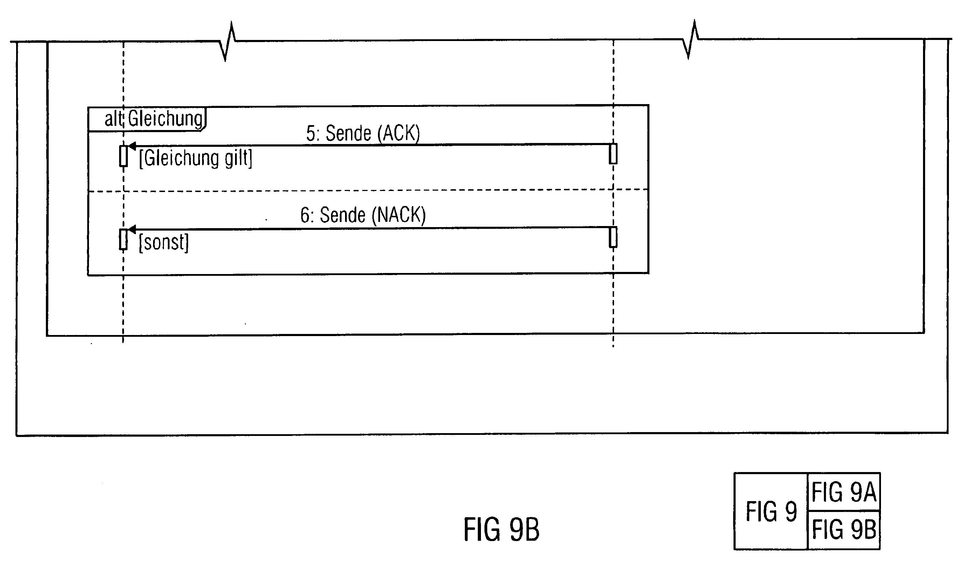

Als Letztes muss sich der Nutzer noch bei A anmelden bzw. authentifizieren. Dies erfolgt über das Ohta-Okamoto Zero-Knowledge-Protokoll, damit A nichts weiter über U erfährt, außer dem Wissen, dass U eine von R erhaltene Information besitzt und somit legitimiert ist, sich anzumelden. Das verwendete Verfahren (vgl. [0088]) benötigt als Input die Information $M_\sigma$ (als eine Art private Key) die U von R erhalten hat. Das Verfahren ist in Fig. 9 als Sequenzdiagramm dargestellt.

**Schritt A1:** Der Nutzer U führt mit der Anmeldestelle A das Ohta-Okamoto-Zero-Knowledge Protokoll durch. Die Information $M_\sigma$ wird bei der Durchführung als privater Schlüssel verwendet und mittels der Zahl *L* wie folgt manipuliert:

$$T_\sigma = M_\sigma^{\,L} \qquad\qquad\qquad (6)$$

und an A (über einen Proxy-Server) gesendet (als öffentlicher Schlüssel).

Die Anmeldestelle hatte anfangs die Werte $T_i$ berechnet (vgl. Gleichung (5)) und prüft den, während des Zero-Knowledge-Verfahrens übermittelten, Wert nach erfolgreichem Ablauf des Zero-Knowledge-Protokolls:

$$U \text{ ist authentifiziert} \Leftrightarrow \exists i \in 0,\ldots, N-1 : T_i = T_\sigma.$$

Existiert ein solches *i*, so ist U ein autorisierter Nutzer (d. h. A kann sich sicher sein, dass U ein gültiges Zertifikat hat und eine korrekte Information von R erhalten hat). A erklärt danach diese Information für ungültig, damit es keine Mehrfachanmeldung mit dieser Information gibt und ein Missbrauch seitens des Nutzers (Weitersenden der Information an andere Nutzer) ausgeschlossen werden kann. Mit diesem Schritt ist die Anforderung (a) nach sicherer Authentifizierung erfüllt, denn die Anmeldestelle kann zweifelsfrei bestätigen, ob U ein autorisierter Nutzer ist.
Allerdings wird für die meisten Angebote des Providers ein weiteres Schlüsselpaar benötigt. Und da A den eben verwendeten Schlüssel aus Sicherheitsgründen ungültig gemacht hat, wird ein neues Schlüsselpaar benötigt. Es wäre möglich das Paar zu verwenden, welches U aufgrund des Zertifikats besitzt, aber es wäre dann einfach, die Identität von U zu ermitteln und die anonyme Anmeldung wäre nicht mehr möglich.
Es soll also nicht möglich sein, anhand des neuen Schlüssels Informationen über U zu bekommen. Damit dies gewährleistet wird führen U und A erneut das Zero-Knowledge-Protokoll aus, so dass A zwar den öffentlichen Schlüssel erhält und überzeugt ist, dass U den dazugehörigen privaten Schlüssel besitzt, aber sonst keine weiteren Informationen erhält. Der einzige Unterschied zum obigen Durchlauf ist, dass diesmal kein vorgegebener Input verwendet wird, sondern ein zufällig von U gewählter Schlüssel. Dieser darf nur U bekannt sein. Auf diese Art und Weise ist es für A möglich dem Nutzer eine eindeutige "'Nummer'" zuzuweisen, aber so, dass über diese Nummer keine Rückschlüsse auf den Nutzer möglich sind.

**Schritt A2:** Der Nutzer U und die Anmeldestelle A führen erneut das Zero-Knowledge Protokoll mit einer Zufallszahl als privater Schlüssel durch. Dieser Schlüssel wird ebenfalls wieder mit der selben Zahl *L* manipuliert.

Die Anmeldestelle erhält während des Protokolls den entsprechenden öffentlichen Schlüssel von U. Diesen speichert A in einer gemeinsamen Schlüsselverwaltung des Systems, um eine spätere erneute Anmeldung von U zu ermöglichen. Das bedeutet also, dass dieser Schlüssel eine Anmeldeinformation ist, die man für spätere Anmeldungen, die wieder über den Zero-Knowledge-Beweis erfolgen, wiederverwenden kann. Damit wäre Anforderung (e) erfüllt.
Damit ist das Authentifizierungsprotokoll abgeschlossen und U ein autorisierter Nutzer. Man kann also zusammenfassen, dass dieses Protokoll eine pseudonyme Registrierung und Anmeldung eines Nutzers bei einem Provider ermöglicht und somit die Anforderungen an die pseudonyme Authentifizierung erfüllt. Der Schutz der Privatsphäre ist dabei über die Auslagerung der eigentlichen Registrierung und der Verwendung der oben genannten mathematischen Verfahren gesichert.
Die Anforderung nach der Wiederverwertbarkeit von Anmeldeinformationen wird in diesem Protokoll durch eine zusätzlich generierte Information erfüllt, wobei alle Dienste des Systems eine gemeinsame Schlüsselverwaltung haben.

Es besteht aber auch die Möglichkeit die Anforderungen (d) und (e) gleichzeitig und ohne Verwendung einer zentralen Schlüsselverwaltung zu realisieren. Ein Grund dafür ist das generelle Problem von Zentralisierung, denn wird die reale Identität eines Nutzers bei einem Dienst, etwa durch Fahrlässigkeit des Nutzers oder Fehler im System, aufgedeckt, so ist die Identität des Nutzers bei allen Diensten bekannt.

Die wiederverwertbare Anmeldeinformation ist hier nun das Zertifikat an sich. Ein Nutzer lässt sich bei einer Zertifizierungsinstanz mit seiner realen Identität ein Zertifikat ausstellen. Mit diesem Zertifikat kann sich der Nutzer bei mehreren Anbietern anmelden. Das hier beschriebene Protokoll würde in diesem Fall nicht mehr für beides, Registrierung und Anmeldung dienen, sondern nur noch für die Anmeldung bei verschiedenen Anbietern.

Das Protokoll bedarf somit einer Überarbeitung, so z. B. wird der Schritt A2 nicht mehr benötigt, da das Zertifikat schon die Anmeldeinformation ist. Es wäre leicht möglich das bestehende Protokoll so abzuändern, dass es als reines Anmelde- bzw. Authentifizierungsprotokoll nutzbar ist und dabei aber alle Anforderungen an Authentifizierung, Schutz der Privatsphäre, Pseudonymisierung und Wiederverwertbarkeit von Informationen erfüllt.

Vor- und Nachteile:

Die Vorteile sind die Erfüllung der relevanten Anforderungen, also:

- Das Protokoll bietet eine sichere Authentifizierung (Anforderung (a))
- Es schützt die Privatsphäre des Nutzers (Anforderung (b)), in dem Verfahren wie *Oblivious Transfer* und Zero-Knowledge-Beweise verwendet werden.
- Das Protokoll sichert durch den, mit Hilfe des Zero-Knowledge-Beweises zugewiesenen, Sessionschlüssels die Pseudonymisierung (Anforderung (c)).
- Der Sessionschlüssel ist für die Wiederverwendung bei anderen Diensten geeignet (Anforderung (d)).

Die Nachteile des Protokolls können sich in schlechterer Rechenzeit oder auch Angriffsmöglichkeiten äußern, dabei handelt es sich um folgende:

- Es besteht ein Kommunikationskanal von A zu V. Dieser bietet bei einer arglistigen Anmeldestelle eventuell die Möglichkeit, dass A manipulierte Geheimnisse sendet, mit denen man Informationen über die Nutzer herausbekommen kann.
- Die zweifache Anwendung des Zero-Knowledge-Verfahrens ist mathematisch aufwendiger als nur ein Zero-Knowledge-Protokoll und eine PKI, Public Key Infrastruktur (siehe folgendes Protokoll).

**Authentifizierungsprotokoll, Variante II**

Dieses Protokoll ist mit dem ersten Protokoll in weiten Teilen identisch. Die Vorbereitungsphasen laufen gleich ab. Ebenso wird in Schritt A2 der Anmeldephase wieder ein neues Schlüsselpaar mit Hilfe des Ohta-Okamoto Zero-Knowledge-Verfahrens erzeugt. In Hinblick auf das *Oblivious Transfer* -Verfahren führt R einen kleinen Zwischenschritt aus. Und zwar verschlüsselt R alle Geheimnisse $M_0,...,M_{N-1}$ mit seinem eigenen privaten Schlüssel, er signiert also die Geheimnisse, die A ausgestellt hat, bevor beide den **Schritt R2** durchführen.

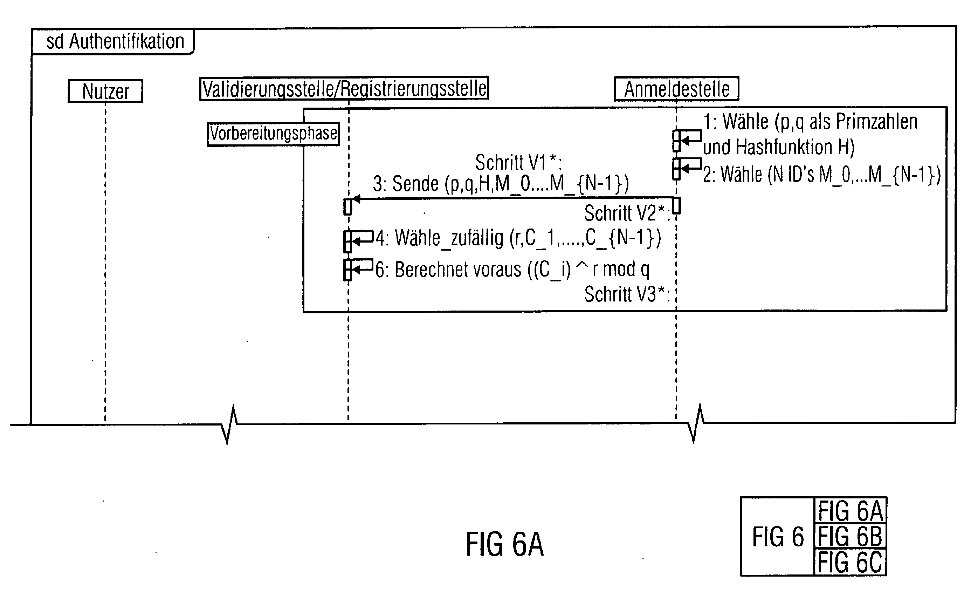

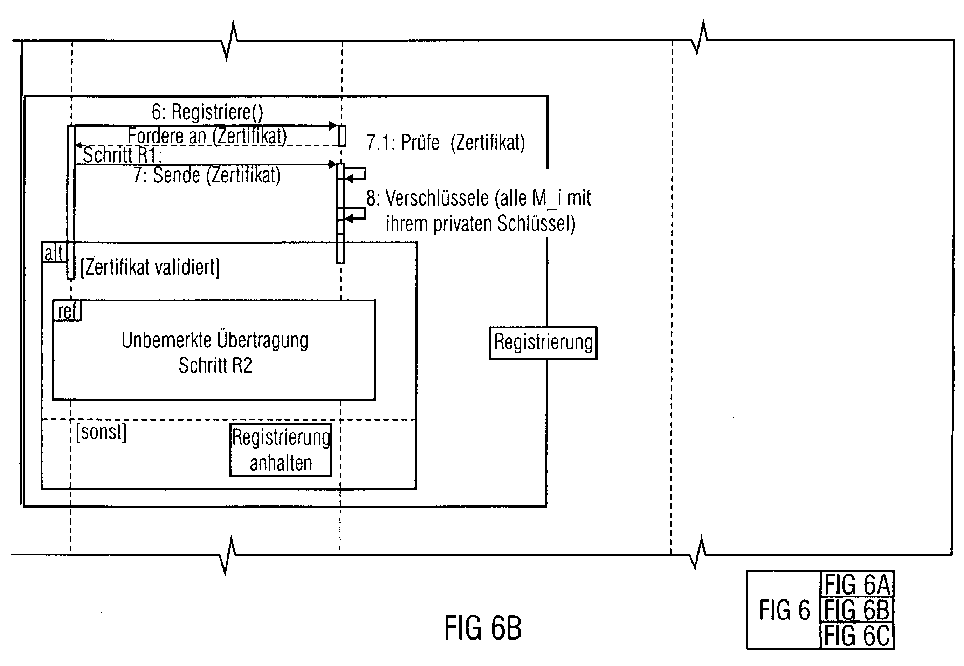

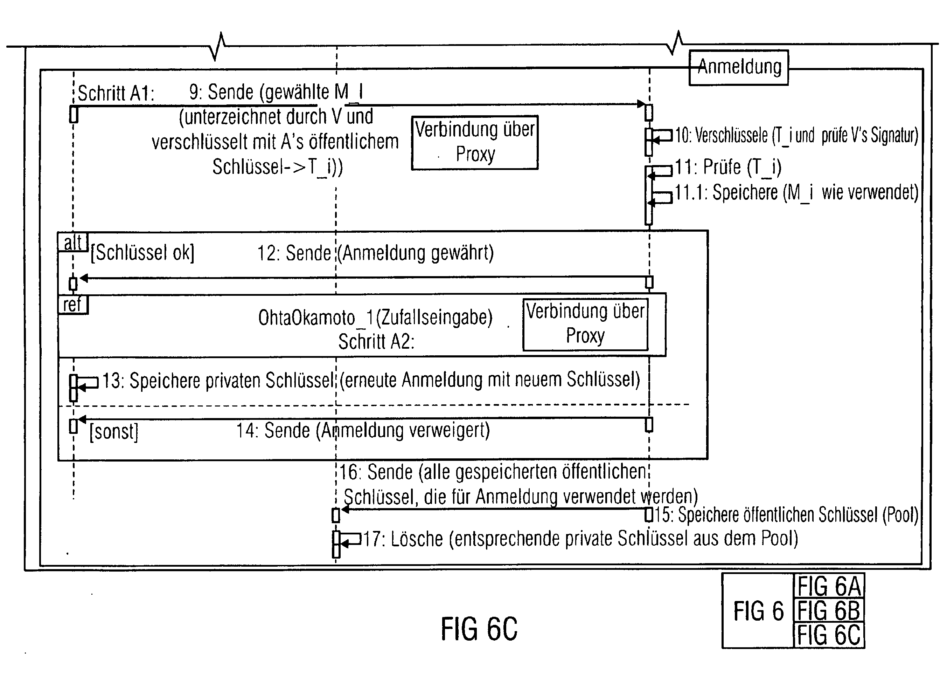

Der Unterschied der beiden Protokolle liegt in Schritt A1 der Anmeldephase. Im Authentifizierungsprotokoll 1 wurde dieser Schritt über ein Zero-Knowledge-Verfahren durchgeführt. In dem jetzt betrachteten Protokoll erfolgt dieser Schritt mittels einer standardmäßigen **PKI** (Public Key Infrastruktur). Das Protokoll ist in Fig. 6 skizziert.

Die Vorbereitungsphase und die Registrierungsphase sind identisch zu Protokoll I. Die Anmeldephase hier mit einer PKI realisiert, und ist wie folgt aufgebaut.

**Anmeldephase:**

Für eine PKI ist von jedem Teilnehmer ein Paar aus privatem und öffentlichem Schlüssel notwendig. Diese dienen jeweils zur Verschlüsselung/Entschlüsselung und zum digitalen Signieren von Nachrichten. Ein Beispiel für eine PKI ist das RSA-Kryptosystem (siehe [RSA78]).

In diesem Protokoll möchte der Nutzer eine Information (Geheimnis) an die Anmeldestelle senden, welche der Nutzer von der Registrierungsstelle erhalten hat. Es ist aber wichtig, dass A verifizieren kann, dass die Information von R selbst stammt und nicht eventuell zufällig erzeugt wurde. Um das sicherzustellen wurde der vorhin erwähnte Zwischenschritt eingeführt, in dem die Registrierungsstelle alle Informationen $M_0,...,M_{N-1}$ mit ihrem privaten Schlüssel *signiert.* In einem asymmetrischen Kryptosystem gilt, dass eine Nachricht, die mit einem öffentlichen Schlüssel chiffriert wurde, nur mit dem entsprechenden privaten Schlüssel entschlüsselt werden kann. Aber ebenso gilt, dass eine mit einem privaten Schlüssel verschlüsselte Nachricht mit dem passenden öffentlichen Schlüssel dechiffriert werden kann. Diese Tatsache wird hier ausgenutzt, da jeder prüfen kann, ob die $M_i$ von R kommen, indem man die signierten $M_i$ mit dem öffentlichen Schlüssel von R entschlüsselt. Kommt dabei eine sinnvolle Information heraus, so kann man sicher sein, dass R der Sender war.

Also wird der *Schritt A1* durch folgenden Schritt ersetzt.

*Schritt A1* * U sendet die von R signierten Information an A. Dabei verschlüsselt er diese mit dem öffentlichen Schlüssel von A, um die Übertragung abzusichern.

A kann dann prüfen, ob die Information auch von R stammt, da nur dieser in der Lage ist, legitime Informationen zu verschicken. Besitzt U nun eine legitime Information, so wird er von A autorisiert am System teilzunehmen.

Im folgenden Beispiel soll kurz beschrieben werden, wie der Nutzer den Besitz des Geheimnisses mit einer PKI nachweisen kann.

**Beispiel** (Beispielhafter Identitätsnachweis:) Es sei $PRK_j$, $j \in \{U,A,V\}$ der private Schlüssel von U, A oder R und $PUK_j$ der jeweils entsprechende öffentliche Schlüssel. Weiterhin seien $M_i$, $i = 0,..., N-1$ die Informationen, die die Registrierungsstelle von der Anmeldestelle erhalten hat. R signiert nun diese Informationen mit dem Schlüssel $PRK_V$ und erhält somit die signierten Geheimnisse

$$M_i' := PRK_V(M_i), i = 0,\dots, N-1. \tag{7}$$

Danach führt R mit dem Nutzer einen *Oblivious Transfer* aus, wobei U sich dort o.B.d.A. die Information $M'_\sigma$ auswählt und erhält. Nun möchte sich der Nutzer mit dieser Information bei A anmelden. Dazu wendet U den öffentlichen Schlüssel von A ($PUK_A$) auf seine Information an:

$$M_\sigma'' := PUK_A(M_\sigma'). \tag{8}$$

Diesen Wert sendet der Nutzer an die Anmeldestelle. Diese nutzt zunächst ihren privaten Schlüssel $PRK_A$ um die Nachricht zu entschlüsseln:

$$PRK_A(M_\sigma'') = M_\sigma'. \tag{9}$$

Das entspricht dann den von R signierten Geheimnissen. Nun muss A nur noch die Signatur von R prüfen, indem er diesen Wert mit V's öffentlichen Schlüssel $PUK_V$ entschlüsselt.

$$PUK_V(M_\sigma') = M_\sigma. \tag{10}$$

Somit hat die Anmeldestelle eine Information erhalten die sie prüfen kann und mit der der Nutzer authentifiziert wird.

Nach der Authentifizierung des Nutzers wird, wie in den beiden anderen Protokollen auch, wieder ein neues Schlüsselpaar benötigt, welches sich der Nutzer möglichst zufällig generiert. Das heißt der *Schritt A2* aus Protokoll 1 bleibt auch erhalten.

Dieses Protokoll besitzt einen größeren Unterschied zu dem vorigen, was ihm Vorteile, aber auch Nachteile verschafft.

Vorteile:

- Die Anforderungen (a) bis (d) sind erfüllt.
- Der Einsatz einer Public-Key-Infrastruktur macht das Protokoll schneller und gewährleistet auch eine hinreichende Sicherheit.
- Einfachere verwendung in der Praxis, da zahlreiche Implementierungen existieren

Nachteile:

- Ein Nachteil ist erneut die Kommunikation von A mit V, d. h. es wäre wieder möglich, dass A manipulierte Geheimnisse konstruiert und somit einen Angriff ermöglicht.
- Die Verwendung der PKI bietet nicht den starken Schutz der Privatsphäre, den ZK bietet.

**Fazit für I + II**

Die beschriebenen Verfahren ermöglichen eine entsprechende Authentifizierung von Nutzern und den durch sie generierten Daten bei gleichzeitigem Schutz der Privatsphäre selbst dann, wenn andere Akteure ein Interesse am Missbrauch der Nutzerdaten haben. Sie stellen damit mögliche Basisverfahren für sehr viele Anwendungsfälle dar.

Bei alternativen Ausführungsbeispielen ist das Protokoll an verschiedenen Stellen abgeändert. Allerdings bringen alle Abänderungen Nachteile mit sich, sei es in geringerer kryptographischer Sicherheit oder einem schwächerem Datenschutz.

- Alternative Registrierungsinformation

Es wäre möglich eine andere Information als ein qualifiziertes Zertifikat, zur Verifikation der Identität des Nutzers, zu verwenden. Die Beschreibung des Protokolls sieht allerdings alle geeigneten SOTA-Verfahren vor.

- Alternative credential Übertragung

Die Verwendung eines alternativen Verfahrens zur Übertragung des credentials bei gleichzeitiger Gewährleistung der Trennung zwischen Pseudonym und realer Identität würde das Protokoll verändern.

- Alternative Anmeldeverfahren

Man könnte sowohl für die erstmalige, als auch für die erneute Anmeldung ein anderes Verfahren, als PKCS oder ZK, verwenden. Dafür kommen wie oben erwähnt alle SOTA Schlüsselaustauschverfahren, wie der Diffie-Hellman Schlüsselaustausch, in Betracht.

- Alternativer Protokollaufbau

Es wäre weiterhin denkbar, die Protokolle dahingehen abzuwandeln, als das man die Reihenfolge aller oben genannten mandatory und optionalen Komponenten ändert. Dabei würde es sich aber nur um eine Permutation des originalen Protokolls bei Verwendung dafür vorgesehener SOTA-Technologie handeln, welche das gleiche Ergebnis liefert und somit keine neue Erfindung wäre.

In etwas fernerer Zukunft wäre es denkbar die Sicherheit des Protokolls weiter zu erhöhen, indem man die Kommunikation während der Registrierung und Anmeldung nicht über einen Anonymisierungsdienst durchführt, sondern über sichere Quantenkanäle, bei denen eine Überprüfung auf einen potentiellen Lauscher möglich ist.

**Anwendungsbeispiel: "Revenue Sharing auf Basis limitierter Stimmabgabe"**

Im Folgenden wird ein konkreter Anwendungsfall, das sogenannte *Revenue Sharing,* beschrieben und entwikkelt, der eine eine Authentifizierung durch das vorige Protokoll voraussetzt und auf dessen Pseudonymisierung aufbaut, um zwischen Nutzern differenzieren zu können und somit Aktionen einzelnen ID's, bzw. Pseudonymen, zuordnen zu können. Insofern dient der Anwendungsfall zur Überprüfung der Funktionsfähigkeit des vorab beschriebenen Protokolls.

Eine Problemstellung im Bereich legaler Distributionssysteme ist die gerechte Verteilung eines existierenden finanziellen Kontingents unter Künstlern. Normalerweise ist dies nur unter Verletzung der Privatsphäre oder bei Einsatz von DRM möglich. Im beschriebenen Anwendungsfall soll dies auf andere Weise realisiert werden: Nutzer haben in einem geschlossenen Netzwerk (z. B. P2P) die Möglichkeit, sich von Künstlern (bzw. Anbietern) bereitgestellten Inhalt herunterzuladen, andererseits sollen die Nutzer aber auch in der Lage sein, mit einer limitierten Anzahl von Stimmen den Inhalt zu bewerten. Ein gegebenes Einkommen soll dann auf Basis der Stimmen unter den Autoren der Inhalte verteilt werden. Allerdings sollen die Künstler keine Möglichkeit haben herauszufinden, welcher Nutzer für welchen Inhalt gestimmt hat, ebenso soll es für das System an sich unmöglich sein, Rückschlüsse auf die realen Identitäten der Nutzer zu machen. Andererseits soll der Nutzer nicht erfahren können, welcher Künstler wie viele Stimmen und für welchen Inhalt bekommen hat, da eine Auszahlung an die Künstler stattfindet, die an die auf ihn entfallenen Stimmen gekoppelt ist. Darüber hinaus soll es in dem Netzwerk bestimmte Arten von Wettbewerben oder Kampagnen geben, bei denen die Nutzer, separat zu ihren eigentlichen Stimmen, Bewertungen durchführen können. Diese Kampagnenstimmen sind zeitlich beschränkt und müssen gesondert gezählt werden.

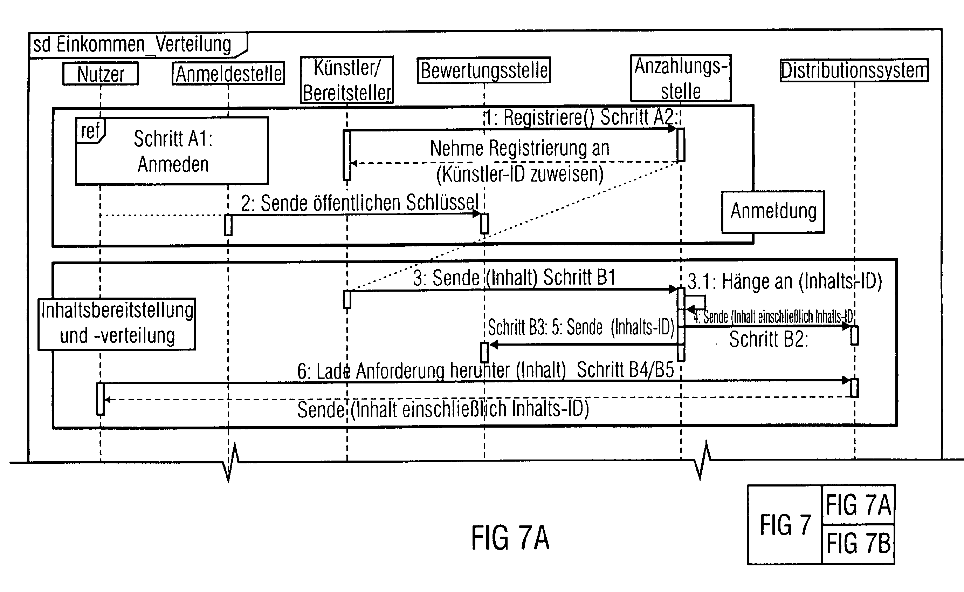

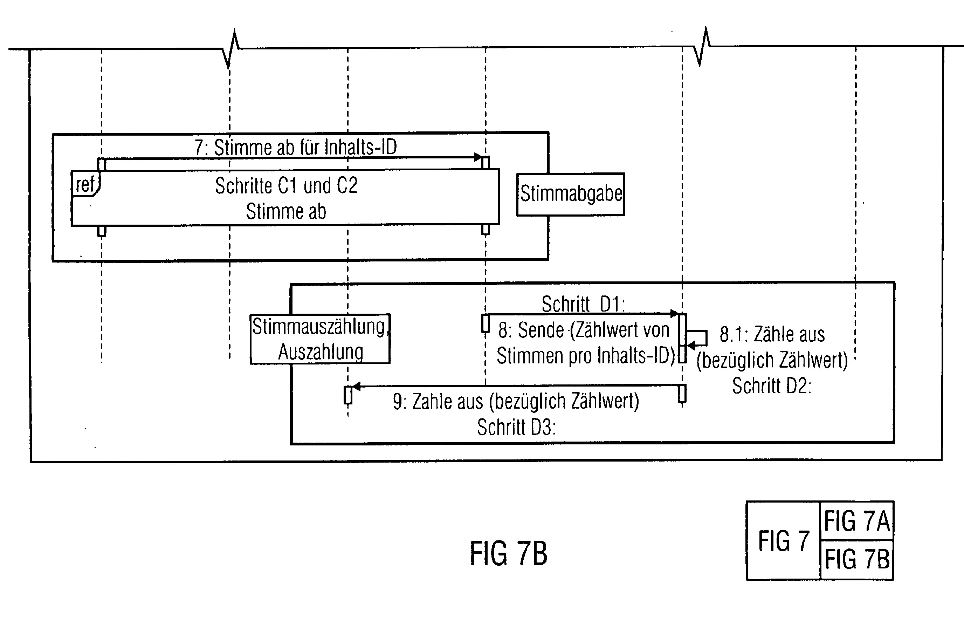

Realisierung: Um am System teilzunehmen, müssen sich die Nutzer zunächst auf Basis der oben beschriebenen Protokolls registrieren. Die weiteren Schritte (vgl. Fig. 7):

    1. Anmeldung des Nutzers bei einem Dienst (Akteure: Anmeldestelle, Nutzer)

2. Download von Inhalten durch die Nutzer (Akteure: Distributionsstem, Nutzer): Die Nutzer holen sich gewünschte Inhalte der Künstler aus dem Distributionssystem (z.B. P2P System). Dabei wurde vorher jeder Inhalt der Künstler durch die *Auszahlungsstelle* vorab mit einer eindeutigen Content ID versehen, optional auch zusätzlich mit einer Wettbewerbs ID für den Fall, dass in dem System mehrere Votings / Wettbewerbe durchgeführt werden sollen.

3. Abgabe von Stimmen (Akteure: Bewertungsstelle, Nutzer): Der Nutzer sendet nun die mit seinem in Schritt 3 generierten privaten Schlüssel signierte Content ID des von ihm präferierten Inhalts an eine *Bewertungsstelle.* Die Übertragung sollte via PKC gesichert werden, um einen Informationsgewinn für Dritte aus abgefangenen Nachrichten oder Rückschlüsse auf die Identität des Nutzers (über IP-Adressen) zu verhindern. Die Bewertungsstelle prüft nun die Anzahl der abgegebenen Stimmen des Nutzers. Dies ist nur möglich, da jeder Nutzer ein eindeutiges Pseudonym besitzt und mit Hilfe dessen das System zwischen Nutzern differenzieren kann. Der Nutzer kann (optional) auch die signierten Wettbewerbs IDs an die Bewertungsstelle senden. Hier gehen die abgegebenen Stimmen nicht in das ursprüngliche Kontingent ein, denn die Limitierung wird separat für jeden Wettbewerb festgesetzt und separat geprüft.

4. Auszählung der Stimmen und Auszahlung an die Künstler (Akteure: Auszahlungsstelle, Künstler): Nachdem die Bewertungsstelle die Anzahl aller auf jede Content ID abgegebenen Stimmen an die Auszahlungsstelle gesendet hat, führt diese eine Zuordnung der Content IDs zu den Künstlern durch. Dabei zählt die Auszahlungsstelle alle auf jeden Künstler entfallenen Stimmen zusammen. Nun erhält jeder Künstler entsprechend der auf ihn entfallenen Stimmen einen entsprechenden Anteil des finanziellen Kontingents. Im Fall der Existenz mehrerer Wettbewerbe werden diese über die Wettbewerbs ID differenziert und für die Auszahlungen entsprechend berücksichtigt.

**Protokoll Revenue Sharing**

Im folgenden wird ein Protokoll zum Anwerndungsfall des *Revenue Sharing* entwickelt. Dabei wird beschrieben, wie ein gegebenes Einkommen unter den Autoren von Inhalten mittels Abstimmungen von Nutzern verteilt wird.

Das Protokoll zum Revenue Sharing ist in Fig. 7 skizziert. Wie dort zu sehen ist, ist das System in mehrere Instanzen aufgeteilt, die jeweils unterschiedliche Aufgaben wahrnehmen. Das ist notwendig, da somit die Anonymität bzw. die Pseudonymität des Users gewährleistet wird. Das System besteht in diesem Protokoll aus einer Anmeldestelle, einer Bewertungsstelle, einer Auszahlungsstelle und einem Distributionssystem. An der Anmeldestelle erfolgt die Anmeldung am System. Die Bewertungsstelle ist dafür zuständig, die vom Nutzer abgegebenen Stimmen zu registrieren und auszuzählen. Das Distributionssystem verteilt den registrierten Inhalt und ermöglicht die Stimmabgabe. Die Auszahlungsstelle ist dafür verantwortlich, die Künstler bzw. Anbieter zu registrieren und deren Inhalt für das Distributionssystem bereitzustellen. Ebenso führt die Auszahlungsstelle, korrespondierend zur Stimmabgabe, eine Auszahlung an die Künstler oder Anbieter durch.

Das Protokoll kann man in vier Phasen einteilen. Es beginnt mit Phase A, der Anmeldung. Gefolgt von der Inhaltsbereitstellung und -verteilung (Phase B) und der Stimmabgabe (Phase C). Die letzte Phase bildet die Stimmauszählung und Auszahlung.

**Anmeldung:**

Das Protokoll beginnt mit der Anmeldung des Nutzers am System.

**Schritt A1:**Der Nutzer meldet sich mit dem Schlüssel, den er in Schritt A2 des Authentifizierungsprotokolls erhalten hat, bei der Anmeldestelle an. Der Schlüssel sollte dabei durch eine asymmetrische Verschlüsselung gegen Abhören gesichert werden.

Dieser Schlüssel muss auch bei jeder weiteren Anmeldung benutzt werden und dient somit als eine Art Passwort, da er für jeden Nutzer eindeutig ist. Anhand dieses Passwortes kann das System keine Informationen über den Nutzer erhalten und dem Passwort keine Nutzerinformationen zuordnen, da das Authentifizierungsprotokoll genau dafür konstruiert wurde. Es ist wichtig, dass bei jeder Anmeldung das selbe Passwort verwendet wird, da die Stimmenlimitierung über den jeweiligen Nutzerschlüssel kontrolliert wird.Neben der Anmeldung der Nutzer müssen sich natürlich auch die Künstler anmelden, die einen Inhalt zur Verfügung stellen wollen. Der Unterschied dabei ist, dass diese sich über ein gebräuchliches Verfahren anmelden können. Allerdings ist es möglich, dass die Künstler anderen Inhalt nutzen wollen, dann müssen sie sich aber gesondert als User anmelden.

**Schritt A2:** Die Künstler melden sich am System an.

**Inhaltsbereitstellung und -verteilung:**

Wie bereits gesagt, wollen Künstler und Anbieter irgendeinen Inhalt bereitstellen, der von Nutzern runtergeladen und bewertet werden kann.

Als Erstes muss ein Künstler bzw. ein Anbieter einen Inhalt für das System bereitstellen. Dies geschieht auf folgendem Weg:

> **Schritt B1:** Der Anbieter sendet seinen Inhalt an die Auszahlungsstelle, die den Inhalt mit einer Identifikationsnummer (ID) versieht.

Diese ID muss eindeutig dem Anbieter zuzuweisen sein. Damit sind mehrere Arten der Zuweisung möglich. So kann z. B. jeder Künstler eine oder mehrere - aber stark begrenzte Anzahl - ID's zugewiesen bekommen. Bei einer einzelnen ID besteht der Nachteil, dass die Bewertungsstelle anhand der Stimmen auf die ID's eine Statistik pro Künstler/ Anbieter aufstellen kann und somit über die momentane Popularität verschiedener Künstler Rückschlüsse ziehen kann. Eine andere Möglichkeit ist, jeder Inhalt erhält seine eigene ID, was den Vorteil hat, dass die Bewertungsstelle später anhand der ID's keine Statistiken über einzelne Inhalte für jeden Künstler aufstellen kann, da ihr die Zuweisungen von Identifikationsnummern und Künstlern unbekannt sind.

Danach müssen die Inhalte verteilt werden. Dazu wird folgender Schritt ausgeführt:

> **Schritt B2:** Die Auszahlungsstelle sendet die Inhalte, inklusive der jeweiligen ID, an das Distributionssystem.

Die Bewertungsstelle benötigt für die Auszählung der Stimmen alle Identifikationsnummem:

> **Schritt B3:** Die Auszahlungsstelle sendet alle Identifikationsnummern an die Bewertungsstelle.

Damit kann das Distributionssystem den Inhalt für die User zur Verfügung stellen und es folgt der nächste Schritt.

> **Schritt B4:** Die Nutzer laden sich den gewünschten Inhalt herunter und erhalten zu jedem Inhalt die entsprechende Inhalts-ID.

Der Nutzer ist somit in der Lage für einen bestimmten Inhalt, mit Hilfe der ID, eine Stimme abzugeben, wenn er das möchte.

Die Bereitstellung von Inhalten für die Wettbewerbe bzw. Kampagnen erfolgt auf ähnliche Weise. Der Inhalt an sich wird wie eben beschrieben bereitgestellt, allerdings ist es hier notwendig jedem Wettbewerb eine eigene *Campaign-ID* zuzuweisen und eine Liste des teilnehmenden Inhalts zu veröffentlichen.

> **Schritt B5:** Die Nutzer laden sich spezielle Wettbewerbsinhalte, samt der dazugehörigen Campaign-ID herunter.

Anhand der Campaign-ID kann jeder Nutzer nun Stimmen für spezielle Wettbewerbe abgeben, welche dann auch gesondert gezählt werden können.

Die Schritte in dieser Phase sind, sofern natürlich mindestens ein Inhalt bereits verfügbar ist, nicht an eine Reihenfolge gebunden. Sie können, je nach Limitierung der Stimmen, beliebig oft wiederholt werden.

**Stimmabgabe:**

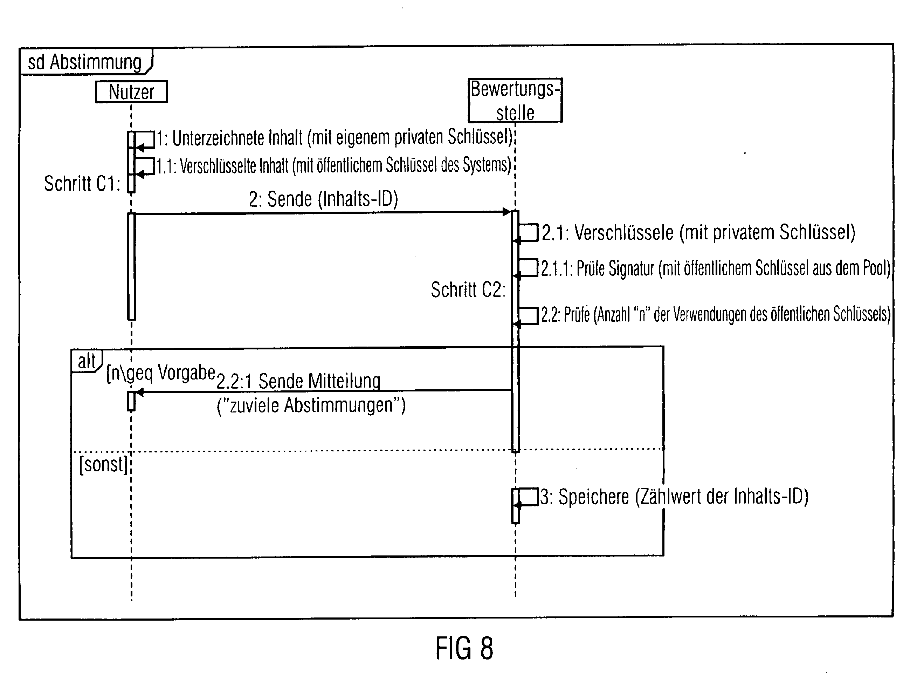

Hat sich ein Nutzer dazu entschieden eine Stimme abzugeben, so tut er dies mittels der erhaltenen Inhalts-ID und optional mittels der Campaign-ID (vgl. Fig. 8).

> **Schritt C1:** Der Nutzer signiert die ID's mit seinem privaten Schlüssel und verschlüsselt sie mit dem öffentlichen Schlüssel der Bewertungsstelle und sendet dann die ID an die Bewertungsstelle.

Dabei ist der private Schlüssel wieder der private Schlüssel zu dem Passwort, welches zur Anmeldung verwendet wurde. Handelt es sich um einen anderen Schlüssel (beispielsweise aus einem Zertifikat o.ä.) wird die abgegebene Stimme nicht akzeptiert.

Um die Stimme prüfen zu können muss die Bewertungsstelle den nächsten Schritt ausführen:

> **Schritt C2:** Die Bewertungsstelle vergleicht die Nutzersignatur mit den entsprechenden gespeicherten öffentlichen Schlüsseln der Nutzer.

Ist der verwendete Schlüssel im Pool enthalten, so prüft die Bewertungsstelle, wie oft diese Schlüssel bereits für eine normale Stimmabgabe oder eine Stimmabgabe in einem Wettbewerb verwendet wurde. Liegt die Anzahl innerhalb des vom System vorgegebenen Limits, so wird die Stimmabgabe akzeptiert. Die Bewertungsstelle registriert dabei die entsprechende gesendete Inhalts-ID und gegebenenfalls die Campaign-ID und speichert die Anzahl aller auf diese ID entfallenen Stimmen.

Die Schritte dieser Phase sind an diese Reihenfolge gebunden und können so oft wiederholt werden, solange der Nutzer das Stimmenlimit nicht erreicht hat.

**Stimmauszählung und Auszahlung:**

Nach einer gewissen Zeit (bei Kampagnen, nach deren Ablauf) müssen die Stimmen ausgezählt werden. Dazu führt die Bewertungsstelle folgenden Schritt aus:

*Schritt D1:*Die Bewertungsstelle sendet alle ID's und die Anzahl der darauf entfallenen Stimmen an die Auszahlungsstelle.

Diese führt dann die Auszählung durch.

*Schritt D2:*Die Auszahlungsstelle ordnet die Stimmen den Künstlern, Anbietern und Wettbewerben zu.

Wie eingangs erwähnt, zählt die Auszahlungsstelle alle Stimmen, die auf einen Künstler oder Anbieter entfallen, zusammen und erhält damit eine Statistik, welcher Künstler und welcher Anbieter wie viele Stimmen erhalten hat.

Entsprechend dieser Statistik bekommt jeder Künstler und jeder Anbieter einen Anteil an einem Geldbestand.

*Schritt D3:*Die Auszahlungsstelle zahlt Künstler und Anbieter, den abgegebenen Stimmen entsprechend, aus.

Man kann sich natürlich auch leicht abgewandelte Szenarien vorstellen, so z. B., dass die Künstler keine Auszahlung über die Anzahl der Stimmen, sondern anhand einer allgemeinen Beliebtheit erhalten. Dazu müsste man die Stimmabgabe abwandeln und jede Stimme mehrstufig gestalten. Das heißt, die Stimme enthält zusätzlich die Information, wie sehr einem Nutzer der entsprechende Inhalt gefallen hat.

**Vorteile und Nachteile:**

Vorteile:

- Die Dezentralisierung der einzelnen Dienste bietet eine große Anonymität der User und der Künstler, bzw. Anbieter. So ist es z. B. dem System nicht ohne weiteres möglich, Nutzerstatistiken anzufertigen und falls doch, können diese zumindest keinem speziellen User zugewiesen werden.
- Die Anmeldung über ein Zero-Knowledge-Protokoll ist anonym (bzw. pseudonym).
- Die Verwendung des gleichen Anmeldeschlüssels für jeden Nutzer bietet dem System bei jeder Anmeldung die Sicherheit, einen legitimen User zu authentifizieren, sowie die Limitierung der Aktionen zu überwachen. Der Nutzer hat dabei den Vorteil, nicht bei jeder Anmeldung einen neuen Schlüssel erzeugen zu müssen.

Nachteile:

- Die Verwendung von nur einem Schlüssel pro Nutzer bietet der Bewertungsstelle die Möglichkeit Statistiken über den Nutzer aufzustellen, auch wenn sie nicht weiß welcher Nutzer dahinter steckt und wem dessen Präferenzen gelten.
- Ebenso kann es vorkommen, dass es bei böswilliger Kooperation der einzelnen Dienste des Systems möglich ist, Statistiken für die einzelnen Inhalte, respektive Künstler, bzw. Anbieter aufzustellen. Allerdings können diese durch die anonymisierte Anmeldung keinem Nutzer zugeordnet werden. Aus diesem Grund sollten technische Sicherungsmaßnahmen ergriffen werden, um eine solche Kooperation zu erschweren.
- Sollte die Kommunikation nicht über einen Anonymisierungsdienst erfolgen, so sind unter bestimmten Umständen Rückschlüsse auf den Nutzer möglich.

*Vorstellung eines möglichen Oblivious Transfer -Protokolls*

*Oblivious Transfer* -Protokolle (OT) ermöglichen es einer Partei, dem Sender, einen Teil seiner gegebenen Informationen an eine andere Partei, den Empfänger, zu senden. Und das in einer Weise, die beide beschützt: Für den Sender ist gesichert, dass der Empfänger nicht mehr Informationen erhält, als die, zu denen er berechtigt ist. Gleichzeitig ist für den Empfänger gesichert, dass der Sender nicht erfährt, welchen Teil er empfangen hat. *Oblivious Transfer* ist eine entscheidende Komponente in vielen Anwendungen der Kryptographie. Allerdings ist es rechentechnisch sehr aufwendig und kann oft der *Flaschenhals* in vielen Anwendungen sein.

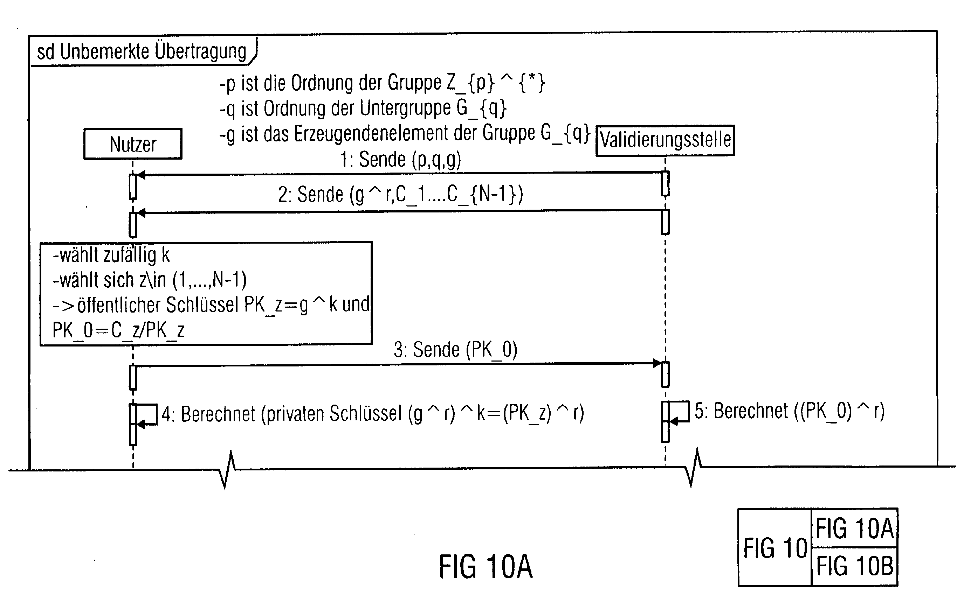

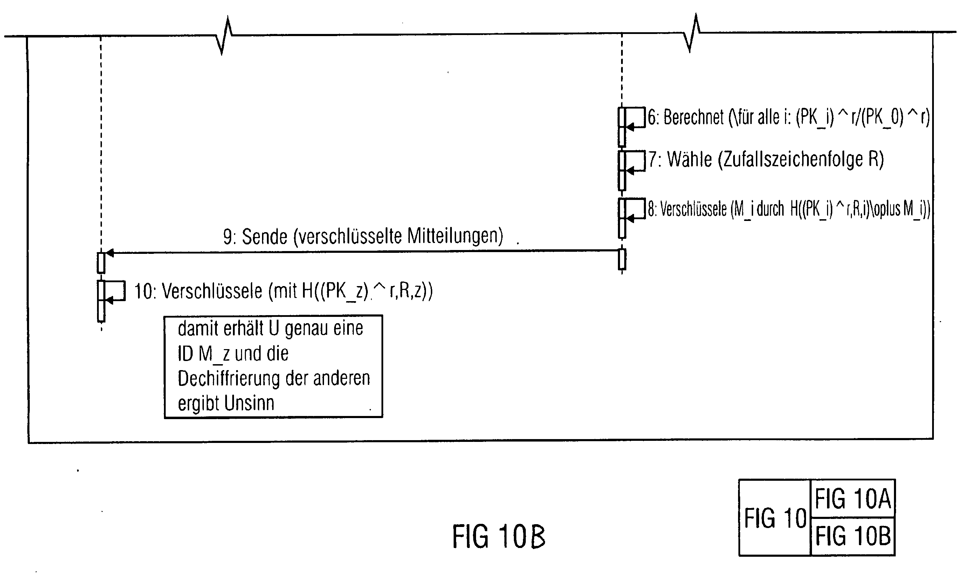

Es existieren verschiedene Möglichkeiten um ein OT-Protokoll, wie es in obigen Ausführungsbeispielen verwendet wird, zu konstruieren. Oft wird das *Zufallsorakel*-Modell benutzt, oder wie in [NP01] die *Diffie-Hellman Annahme* bzgl. *Berechenbarkeit* und bzgl. *Entscheidbarkeit,* welche jetzt kurz erläutert werden, wobei auf Fig. 10 Bezug genommen wird, das ein für die obigen Ausführungsbeispiele mögliches OT-Protokll zeigt.

**Annahmen und Modelle**

Die Sicherheitsanalyse der Protokolle basiert auf der Diffie-Hellman Annahme, einmal im berechenbarkeitstheoretischen Sinne und dann im Sinne eines Entscheidungsproblems und dem "'Zufallsorakel"'-Modell.

**Diffie-Hellman Annahme (DHA)**

Wir nehmen an, dass wir über eine probabilistische Methode zur Generierung der Gruppe $Z_q$ und des Generators g verfügen.

**Definition** *(Berechenbarkeits-DHA) Die* **berechenbarkeitstheoretische Version** *der Annahme besagt, dass jede probabilistische Polynomialzeitmaschine zu gegebenem*

$$g^a, g^b \in \mathbb{Z}_q \qquad\qquad (23)$$

nur eine vernachlässigbare Wahrscheinlichkeit besitzt $g^{ab}$ korrekt zu berechnen. Wobei die Wahrscheinlichkeit von der Gruppe und g , sowie der Wahl von $g^a$ und $g^b$ abhängt. In [Sho97] gibt es verschiedene boosting Algorithmen.

**Definition** (*Entscheidbarkeits-DHA) Die* **Entscheidbarkeitsversion** *besagt, dass es schwer ist zwischen*

$$(g^a, g^b, g^{ab}) \text{und} (g^a, g^b, g^c) \qquad\qquad (24)$$

zu unterscheiden, wobei a,b,c zufällig gewählt sind.

**"'Zufallsorakel"'- Modell**

**Definition** (*Modell des Zufallsorakels*) Einige der hier genannten Oblivious Transfer Protokolle verwenden eine Funktion *H* , die in der Analysis als Zufallsorakel bezeichnet wird. Ein Zufallsorakel ist ein Modell einer idealen kryptografischen Hashfunktion. Ideal heißt dabei, dass der Hashwert nur mit Hilfe des Zufallsorakels ermittelt werden kann. Dies gilt auch, wenn schon andere Paare von Eingaben und Hashwerten des Orakels bekannt sind. Trotzdem gibt das Orakel zu ein und derselben Eingabe immer den gleichen Hashwert zurück ([BR93]). Die Funktion *H* ist als echte Zufallsfunktion gewählt und jedem Teilnehmer zugänglich (natürlich ist *H* in der Anwendung an sich als Hashfunktion, wie SHA-1, implementiert). Die Sicherheit basiert darauf, dass ein Angreifer in begrenzter Zeit nur eine kleine Anzahl an Werten der Funktion auswerten kann.

**Protokoll**

**Naor/Pinkas' $OT_1^N$-Protokoll**

Das jetzt folgende Protokoll wurde in [NP01] vorgestellt. Dieses Protokoll kann bei obigen Ausführungsbeispielen verwendet werden.

**Definition** (*$OT_1^N$-Protokoll*)

*Gegeben seien:* Zwei große Primzahlen *p* und *q* mit *q* | (*p* - 1), um auf den Gruppen ($Z_p$,.) und einer Untergruppe

($G_{p,.}$) der Ordnung q und dem erzeugenden Element g zu arbeiten (d. h. die Gruppe ($G_{p,.}$) besteht aus Potenzen von g modulo q). Die im Folgenden verwendeten Punktoperationen sind in der Gruppe modulo p anzunehmen. Des Weiteren sei eine Hashfunktion $H$ als Zufallsorakel gegeben(siehe Zufallsorakel-Modell [CGH98]).

*Initialisierung:* Der Sender, in unserem Fall, die Registrierungsstelle V, wählt gleichverteilte Zufallszahlen

$$r \in \mathbb{Z}_q, C_1,\ldots,C_{N-1}. \in \mathbb{Z}_q.$$

Für die öffentlichen Schlüssel $PK_i$ soll später gelten

$$PK_0 \cdot PK_i = C_i.$$

Die Werte $g^r$ und $C_1,\ldots,C_{N-1}$ werden veröffentlicht. R berechnet dann

$$(C_i)^r \bmod q, \text{für} 1 \le i \le N-1.$$

*Transfer:* R hat als Eingabe seine N Geheimnisse $M_0,\ldots,M_{N-1}$ und die Eingabe von U ist ein Index $\sigma \in \{0,\ldots,N-1\}$ zur Auswahl des gewünschten Geheimnisses $M_\sigma$. Der Empfänger, hier wieder der Nutzer U, wählt eine Zufallszahl k und berechnet den public Key

$$PK_\sigma = g^k \text{ und} \tag{28}$$

$$PK_0 = C_\sigma \cdot \left(PK_\sigma\right)^{-1}. \tag{29}$$

U sendet $PK_0$ an R und berechnet zum Entschlüsseln

$$(g^r)^k = (PK_\sigma)^r. \tag{30}$$

V berechnet $(PK_0)^r$ und für jedes i:

$$(PK_i)^r = (C_i)^r \cdot \left((PK_0)^r\right)^{-1}. $$

V wählt einen zufälligen String $R$ (um bei Mehrmalsausführungen des Protokolls keine Daten doppelt zu versenden) und verschlüsselt alle $M_i$ durch

$$H((PK_i)^r, R, i) \oplus M_i \tag{31}$$

und sendet die Chiffren und $R$ an U. U selbst kann dann zum Entschlüsseln von $M_\sigma$

$$H((PK_\sigma)^r, R, \sigma) \tag{32}$$

benutzen. Ein Sequenzdiagramm des Protokolls ist in Fig. 10 zu sehen.

**Bemerkung** (Effizienz) Das Potenzieren wird als die teuerste Operation angesehen. Für dieses Protokoll sind zwei Potenzierungen auf der Seite des Empfängers und $O(N)$ beim Sender erforderlich. Bei Bedarf kann ein Protokoll konstruiert werden, das für einen selbst gewählten Parameter K nur $\dfrac{\log N}{\log K}$ Potenzierungen beim Empfänger und

$2\dfrac{\log N}{\log K}$ durch den Sender erfordert (siehe [NP01]).

Es besteht die Möglichkeit, einen $OT_1^{2l}$ auf $l$ Ausführungen von $OT_1^2$ zu reduzieren oder umgekehrt, um Rechenzeit auf Kosten von Kommunikationszeit zu sparen oder umgekehrt. Hiermit soll es möglich sein, Private-Information-Retrieval in Symmetric-Private-Information-Retrieval-Protokolle umzuwandeln (d. h. nicht nur die Privatsphäre des Empfängers wird gewahrt, sondern der Sender wird gleichzeitig davor geschützt, dass dem Empfänger zu viel Information zukommt), ohne die Anzahl der Runden zu erhöhen.

In [NP01] findet sich außerdem ein Vorschlag, um das Zufallsorakel $H$ zu ersetzen, indem eine $El$ Gamal-basierte Verschlüsselung gewählt wird.

Entscheidend bei $OT_1^N$ ist, dass U genau eine der N Informationen erhält die die Anmeldestelle A zur Verfügung gestellt hat und über die anderen Informationen keinerlei Wissen erlangen kann. Außerdem ist V, dank der Verschlüsselungen mit privaten und öffentlichen Schlüsseln innerhalb des $OT_1^N$, nicht in der Lage herauszufinden, welche Information U gewählt hat. Damit wird sichergestellt, dass A hinterher nicht bei R nachfragen kann, welcher User zu einem bestimmten Schlüssel gehört, da R es selbst nicht weiß. Da dies aber eine von A generierte Information ist, ist es A möglich zu entscheiden, ob ein User von R legitimiert wurde. Darüber hinaus hat A keine Möglichkeit etwas über U zu erfahren.

**Bemerkung** (Rechenaufwand) Die Initialisierung besteht aus $N$ Exponentiationen vom Sender. Nach der Initialisierung führt der Sender in jedem Transfer nur eine einzige Exponentiation aus, zuzüglich $N$-1 Multiplikationen und $N$ Aufrufe von $H$ .

Der Empfänger kann den Schlüssel zum Dechiffrieren vorberechnen, bevor er die verschlüsselten Elemente vom Sender empfängt.

Der Kommunikationsaufwand von Sender zu Empfänger ist von der Größe von $N$ Strings.

Umsetzung der Ausführungsbeispiele: Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Ein Ausführungsbeispiel der Erfindung schafft eine Registrierungsstelle 14 zur Ausgabe eines Pseudonym-Tokens für eine Nutzerentität 24, die ausgebildet ist, um einen Identitätsnachweis der Nutzerentität 24 zu prüfen 54; 84, und in dem Fall einer erfolgreichen Prüfung des Identitätsnachweises der Nutzerentität 24 ein Pseudonym-Token aus einem Anteil unverbrauchter Pseudonym-Tokens aus einer Vielzahl von Pseudonym-Tokens an die Nutzerentität 24 mittels eines Oblivious-Transfer-Protokolls auszugeben und, wenn das Pseudonym-Token durch eine Anmeldestelle als verbraucht markiert wird, so dass sich der Anteil unverbrauchter Pseudonym-Tokens um das Pseudonym-Token verkleinert, bei einer nächsten Ausgabe eines Pseudonym-Tokens selbiges aus dem verkleinerten Anteil unverbrauchter Pseudonym-Tokens aus der Vielzahl von Pseudonym-Tokens mittels des Oblivious-Transfer-Protokolls auszugeben.

Bei einem bevorzugten Ausführungsbeispiel ist die Registrierungsstelle 14 so ausgebildet, dass die Prüfung des Identitätsnachweises 54; 84 das Durchführen kryptographischer Protokolle umfasst, bei der sich die Nutzerentität 24 gegenüber der Registrierungsstelle 14 mittels einer elektronischen Schaltung 26, die der Nutzerentität 24 eindeutig zugeordnet ist, authentifiziert.

Bei einem weiteren bevorzugten Ausführungsbeispiel ist die Registrierungsstelle 14 ausgebildet, um die Vielzahl von Pseudonym-Tokens von einer Anmeldestelle 16 über eine Firewall 20, 22 zu erhalten.

Bei einem weiteren bevorzugten Ausführungsbeispiel ist die Registrierungsstelle 14 ausgebildet, um auf eine Aufforderung einer Anmeldestelle 16 hin die Vielzahl von Pseudonym-Tokens zu erstellen und an die Anmeldestelle 16 über eine Firewall 20, 22 zu senden.

Ein weiteres Ausführungsbeispiel der Erfindung schafft eine Anmeldestelle 16, die ausgebildet ist, um eine für ein Oblivious-Transfer-Protokoll geeignete Vielzahl von Pseudonym-Tokens entweder zu erstellen und an eine Registrierungsstelle 14 weiterzuleiten oder von der Registrierungsstelle 14 anzufordern und zu empfangen, im Rahmen eines Authentifizierungsvorgangs einer Nutzerentität mit einem vorbestimmten Pseudonym-Token zu überprüfen, ob das vorbestimmte Pseudonym-Token zu einem Anteil von unverbrauchten Pseudonym-Tokens der Vielzahl von Pseudonym-Tokens gehört, und falls die Überprüfung ergibt, dass das vorbestimmte Pseudonym-Token zu dem Anteil unverbrauchter Pseudonym-Tokens nicht gehört, den Authentifizierungsvorgang nicht abzuschließen, und, falls die Überprüfung ergibt, dass das vorbestimmte Pseudonym-Token zu dem Anteil unverbrauchter Pseudonym-Tokens gehört, den Authentifizierungsvorgang abzuschließen und das Pseudonym-Token als verbraucht zu markieren, so dass sich ein Anteil unverbrauchter Pseudonym-Tokens aus der Vielzahl von Pseudonym-Tokens verkleinert.

Bei einem bevorzugten Ausführungsbeispiel weist die Anmeldestelle einen Proxy und/oder eine Firewall 22 auf und ist ausgebildet, um über den Proxy und/oder die Firewall 22 die Vielzahl von Pseudonym-Tokens an die Registrierungsstelle 14 weiterzuleiten.

**Literatur**

[Aug95] Gavin Lowe August. An attack on the needham-schroeder public-key authentication protocol. Information Processing Letters, 56:131-133, 1995.

[BAN89] M. Burrows, M. Abadi, and R.M. Needham. A logical of authentification. Proceeding of the Royal Society of London, 426:233-271, 1989.

[BM90] M. Bellare and S. Micali. Non-interactive oblivious transfer and applications. Proc. Adv. in Cryptology - Crypto '89, LNCS 435:547-557, 1990.

[B003] Bo Gyeong Kang et al. A model 61 for Privacy Preserving Metering Service. Second International Conference on Electrical Engineering. iEEE, Piscataway, NJ, USA. 25 March 2008.

[BR93] Mihir Bellare and Philip Rogaway. Random oracles are practical: A paradigm for designing e_cient protocols. Proceedings of the 1st ACM Conference on Computer, and Communications Security, pages 62-73, November 1993.

[BSW06] Albrecht Beutelspacher, Jörg Schwenk, and Klaus-Dieter Wolfenstetter. Moderne Verfahren der Kryptographie. Vieweg Wiesbaden, 2006.

[CGH98] R. Canetti, O. Goldreich, and S. Halevi. The random oracle methodology. Proc. 30th ACM Symposium on Theory of Computing, 30:209-218, 1998.

[Eck01] C. Eckert. IT-Sicherheit (Konzept - Verfahren - Protokolle). Oldenbourg Verlag München Wien, 2001.

[E1G85] T. ElGamal. A public key cryptosystem and a signature scheme based on diskrete logarithms. IEEE Trans. on Information Theory, IT-31:469-472, 1985.

[FS86] A. Fiat and A. Shamir. How to proof yourself: Practical solutions to identification and signature problems. CRYPTO '86, LNCS 263:186-194, 1986.

[HFPS99] R. Housley, W. Ford, W. Polk, and D. Solo. Internet x.509 public key infrastructure certificate and crl profil. RFC, 2459, 1999.

[IM90] C. l'Anson and C. Mitchell. Security defects ccitt recommendation x.509 - the directory authentication framework. Computer Communications Review, 20(2):30-34, 1990.

[Low95] Gavin Lowe. An attack on the needham-schroeder public-key authentication protocol. Information Processing Letters, 56:131 - 133, 1995.

[Lys07] Anna Lysyanskaya. Authentication without identification. Security & Privacy, IEEE, 5-3:69-71, 2007.

[NP01] Moni Naor and Benny Pinkas. E_cient oblivious transfer protocols. Proceedings of the twelfth annual ACM-SIAM symposium on Discrete algorithms, 12:448 - 457, 2001.

[NS78] Roger Needham and Michael Schroeder. Using encryption for authentication on large networks of computers. Communications of the ACM, 21(12):993 - 999, December 1978.

[0088] Kazuo Ohta and Tatsuaki Okamoto. A modification of the fiat-shamir scheme. Lecture Notes in Computer Science, 403:232-243, 1988.

[PKI] http://www.packtpub.com/article/public-key-infrastructure-pki-otherconceptscryptography-cissp.

[PXY] http://www.uni-duesseldorf.de/Proxy/Artikel.shtml.

[RSA78] R.L. Rivest, A. Shamir, and L. Adleman. A method for obtaining digital signatures and public key cryptosystems. Communications of the ACM, 21(2):120-126, February 1978.

[Sho97] V. Shoup. Lower bounds for discrete logarithms and related problems. Proc. Eurocrypt '97, LNCS 1233:256-266, 1997.

[TOR] http://www.torproject.org/index.html.de.

[US 2006/0031301] United States Patent Application Publication 2006/0031301. Herz Frederick 5 M [US] et al. 9 February 2006.

**Patentansprüche**

1. System (10) zur pseudonymisierten Authentifizierung von Nutzerentitäten in einem Computernetzwerk (4), das ausgebildet ist, um

   einen Identitätsnachweis einer Nutzerentität (24) zu prüfen (54; 84),
   in dem Falle einer erfolgreichen Prüfung des Identitätsnachweises der Nutzerentität (24), ein Pseudonym-Token aus einem Anteil unverbrauchter Pseudonym-Tokens aus einer Vielzahl von Pseudonym-Tokens an die Nutzerentität (24) mittels eines Oblivious-Transfer-Protokolls auszugeben (56; 86);
   einen Authentifizierungsvorgang der Nutzerentität mit dem Pseudonym-Token mit der Nutzerentität durchzuführen; und
   auf den Authentifizierungsvorgang der Nutzerentität (24) mit dem Pseudonym-Token hin, das Pseudonym-Token als verbraucht zu markieren, so dass sich der Anteil unverbrauchter Pseudonym-Tokens um das Pseudonym-Token verkleinert
   wobei das System folgende Merkmale aufweist:

   eine Registrierungsstelle (14), die ausgebildet ist, um die Prüfung des Identitätsnachweises und die Ausgabe des Pseudonym-Tokens durchzuführen; und
   eine Anmeldestelle (16), die ausgebildet ist, um den Authentifizierungsvorgang der Nutzerentität mit der Nutzerentität durchzuführen und das Pseudonym-Token als verbraucht zu markieren, und zwar
   im Rahmen des Authentifizierungsvorgangs der Nutzerentität mit dem vorbestimmten Pseudonym-Token zu überprüfen, ob das vorbestimmte Pseudonym-Token zu dem Anteil von unverbrauchten Pseudonym-Tokens der Vielzahl von Pseudonym-Tokens gehört, und
   falls die Überprüfung ergibt, dass das vorbestimmte Pseudonym-Token zu dem Anteil unverbrauchter Pseudonym-Tokens nicht gehört, den Authentifizierungsvorgang nicht abzuschließen, und, falls die Überprüfung ergibt, dass das vorbestimmte Pseudonym-Token zu dem Anteil unverbrauchter Pseudonym-Tokens gehört, den Authentifizierungsvorgang abzuschließen und das Pseudonym-Token als verbraucht zu markieren, so dass sich der Anteil unverbrauchter Pseudonym-Tokens um das Pseudonym-Token verkleinert, wobei die Registirierungsstelle ausgebildet ist, bei einer nächsten Ausgabe eines Pseudonym-Tokens selbiges aus dem verkleinerten Anteil unverbrauchter Pseudonym-Tokens aus der Vielzahl von Pseudonym-Tokens mittels des Oblivious-Transfer-Protokolls auszugeben.

2. System gemäß Anspruch 1 wobei die Anmeldestelle ausgebildet ist, um zum Abschluss des Authentifizierungsvorgangs mit der Nutzerentität Zugangsdaten für zukünftige Anmeldevorgänge zu vereinbaren.

3. Registrierungsstelle (14) zur Ausgabe eines Pseudonym-Tokens für eine Nutzerentität in einem Computernetzwerk (24), die ausgebildet ist, um
einen Identitätsnachweis der Nutzerentität (24) zu prüfen (54; 84), und
in dem Fall einer erfolgreichen Prüfung des Identitätsnachweises der Nutzerentität (24) ein Pseudonym-Token aus einem Anteil unverbrauchter Pseudonym-Tokens aus einer Vielzahl von Pseudonym-Tokens an die Nutzerentität (24) mittels eines Oblivious-Transfer-Protokolls auszugeben und, wenn das Pseudonym-Token durch eine Anmeldestelle als verbraucht markiert wird, so dass sich der Anteil unverbrauchter Pseudonym-Tokens um das Pseudonym-Token verkleinert, bei einer nächsten Ausgabe eines Pseudonym-Tokens selbiges aus dem verkleinerten Anteil unverbrauchter Pseudonym-Tokens aus der Vielzahl von Pseudonym-Tokens mittels des Oblivious-Transfer-Protokolls auszugeben.

4. Registrierungsstelle (14) gemäß Anspruch 3 oder 4, die so ausgebildet ist, dass
die Prüfung des Identitätsnachweises (54; 84) ein Nachschlagen in einer Nutzerdatenbank umfasst, in welcher eindeutig voneinander unterscheidbare Einträge zu einer Vielzahl von zugelassenen Nutzerentitäten gespeichert sind, und das Überprüfen, ob die Nutzerentität (24) zu der Vielzahl von zugelassenen Nutzerentitäten gehört, in welchem Fall die Prüfung des Identitätnachweises erfolgreich ist, und
in dem Fall, dass die Überprüfung ergibt, dass die Nutzerentität nicht zu der Vielzahl von zugelassenen Nutzerentitäten gehört, die Prüfung des Identitätnachweises als fehlgeschlagen gilt.

5. Registrierungsstelle gemäß Anspruch 3 oder 4, die ausgebildet ist, um auf eine Aufforderung einer Anmeldestelle (16) hin die Vielzahl von Pseudonym-Tokens zu erstellen und an die Anmeldestelle (16) über eine Firewall (20, 22) zu senden, und die ausgebildet ist, um bei der Erstellung der Vielzahl von Pseudonym-Tokens die Vielzahl von Pseudonym-Tokens einzeln mit einer jeweiligen Signatur der Registrierungsstelle zu versehen, so dass die Pseudonym-Tokens für die Anmeldestelle überprüfbar sind.

6. Registrierungsstelle gemäß Anspruch 3 oder 4, die ausgebildet ist, um auf eine Aufforderung einer Anmeldestelle (16) hin die Vielzahl von Pseudonym-Tokens zu erstellen und an die Anmeldestelle (16) über eine Firewall (20, 22) zu senden, und die ausgebildet ist, um auf eine Anfrage der Anmeldestelle (16) hin ein vorbestimmtes, in der Aufforderung enthaltenes Pseudonym-Token einer Echtheitsprüfung zu unterziehen und gemäß dem Ergebnis der Echtheitsüberprüfung der Anmeldestelle zu antworten.

7. Anmeldestelle (16), die ausgebildet ist, um in einem Computernetzwerk
eine für ein Oblivious-Transfer-Protokoll geeignete Vielzahl von Pseudonym-Tokens entweder zu erstellen und an eine Registrierungsstelle (14) weiterzuleiten oder von der Registrierungsstelle (14) anzufordern und zu empfangen, im Rahmen eines Authentifizierungsvorgangs einer Nutzerentität mit einem vorbestimmten Pseudonym-Token zu überprüfen, ob das vorbestimmte Pseudonym-Token zu einem Anteil von unverbrauchten Pseudonym-Tokens der Vielzahl von Pseudonym-Tokens gehört, und
falls die Überprüfung ergibt, dass das vorbestimmte Pseudonym-Token zu dem Anteil unverbrauchter Pseudonym-Tokens nicht gehört, den Authentifizierungsvorgang nicht abzuschließen, und, falls die Überprüfung ergibt, dass das vorbestimmte Pseudonym-Token zu dem Anteil unverbrauchter Pseudonym-Tokens gehört, den Authentifizierungsvorgang abzuschließen und das Pseudonym-Token als verbraucht zu markieren, so dass sich ein Anteil unverbrauchter Pseudonym-Tokens aus der Vielzahl von Pseudonym-Tokens verkleinert.

8. Anmeldestelle (16) gemäß Anspruch 7, bei der die Anmeldestelle ausgebildet ist, um mittels eines Zero-Knowledge-Protokolls zu überprüfen, ob das vorbestimmte Pseudonym-Token zu dem Anteil unverbrauchter Pseudonym-Tokens der Vielzahl von Pseudonym-Tokens gehört.

9. Anmeldestelle gemäß Anspruch 7 oder 8, bei der die Anmeldestelle ausgebildet ist, um zum Abschluss des Authentifizierungsvorgangs mit der Nutzerentität Zugangsdaten für zukünftige Anmeldevorgänge zu vereinbaren.

10. Anmeldestelle gemäß einem der Ansprüche 7 bis 9, bei der die Vielzahl von Pseudonym-Tokens einzeln mit einer jeweiligen Signatur der Registrierungsstelle (14) versehen sind und die Anmeldestelle ausgebildet ist, um im Rahmen des Authentifizierungsvorgangs das vorbestimmte Pseudonym-Token daraufhin zu überprüfen, ob es mit der jeweiligen Signatur der Registrierungsstelle (14) versehen ist, und, falls dies nicht der Fall ist, den Authentifizierungsvorgang nicht abzuschließen.

11. Anmeldestelle gemäß einem der Ansprüche 7 bis 9, bei der die Anmeldestelle ausgebildet ist, um im Rahmen des Authentifizierungsvorgangs die Registrierungsstelle (14) aufzufordern, das vorbestimmte Pseudonym-Token einer Echtheitsprüfung zu unterziehen und in dem Fall, dass eine von der Registrierungsstelle (14) gemäß einem Ergebnis der Echtheitsüberprüfung erhaltene Antwort ergibt, das der vorbestimmte Pseudonym-Token nicht echt ist, den Authentifizierungsvorgang nicht abzuschließen.

12. Verfahren zur pseudonymisierten Authentifizierung von Nutzerentitäten in einem Computernetzwerk (24), mit Prüfung eines Identitätsnachweises (54; 84) einer Nutzerentität (24),
in dem Falle einer erfolgreichen Prüfung des Identitätsnachweises der Nutzerentität (24), Ausgabe (56; 86) eines Pseudonym-Tokens aus einem Anteil unverbrauchter Pseudonym-Tokens aus einer Vielzahl von Pseudonym-Tokens an die Nutzerentität (24) mittels eines Oblivious-Transfer-Protokolls;
Durchführung eines Authentifizierungsvorgang der Nutzerentität mit dem Pseudonym-Token mit der Nutzerentität; und
auf den Authentifizierungsvorgang der Nutzerentität (24) mit dem Pseudonym-Token hin, Markieren des Pseudonym-Tokens als verbraucht, so dass sich der Anteil unverbrauchter Pseudonym-Tokens um das Pseudonym-Token verkleinert,
wobei die Prüfung des Identitätsnachweises und die Ausgabe des Pseudonym-Tokens in einer Registrierungsstelle (14) durchgeführt werden; und
wobei der Authentifizierungsvorgang der Nutzerentität mit der Nutzerentität und das Markieren des Pseudonym-Tokens als verbraucht, so dass sich der Anteil unverbrauchter Pseudonym-Tokens um das Pseudonym-Token verkleinert, in einer Anmeldestelle (16) durchgeführt werden,
wobei im Rahmen des Authentifizierungsvorgangs der Nutzerentität mit dem vorbestimmten Pseudonym-Token überprüft wird, ob das vorbestimmte Pseudonym-Token zu dem Anteil von unverbrauchten Pseudonym-Tokens der Vielzahl von Pseudonym-Tokens gehört,
wobei, falls die Überprüfung ergibt, dass das vorbestimmte Pseudonym-Token zu dem Anteil unverbrauchter Pseudonym-Tokens nicht gehört, den Authentifizierungsvorgang nicht abgeschlossen wird, und, falls die Überprüfung ergibt, dass das vorbestimmte Pseudonym-Token zu dem Anteil unverbrauchter Pseudonym-Tokens gehört, der Authentifizierungsvorgang abgeschlossen und das Pseudonym-Token als verbraucht markiert wird,
wobei bei einer nächsten Ausgabe eines Pseudonym-Tokens in der Registirierungsstelle selbiges aus dem verkleinerten Anteil unverbrauchter Pseudonym-Tokens aus der Vielzahl von Pseudonym-Tokens mittels des Oblivious-Transfer-Protokolls ausgegeben wird.

13. Verfahren zur Ausgabe eines Pseudonym-Tokens für eine Nutzerentität in einem Computernetzwerk (24), mit Prüfung eines Identitätsnachweises (54; 84) der Nutzerentität (24), und
in dem Fall einer erfolgreichen Prüfung des Identitätsnachweises der Nutzerentität (24), Ausgeben eines Pseudonym-Tokens aus einem Anteil unverbrauchter Pseudonym-Tokens aus einer Vielzahl von Pseudonym-Tokens an die Nutzerentität (24) mittels eines Oblivious-Transfer-Protokolls und, wenn das Pseudonym-Token durch eine Anmeldestelle als verbraucht markiert wird, so dass sich der Anteil unverbrauchter Pseudonym-Tokens um das Pseudonym-Token verkleinert, bei einer nächsten Ausgabe eines Pseudonym-Tokens selbiges aus dem verkleinerten Anteil unverbrauchter Pseudonym-Tokens aus der Vielzahl von Pseudonym-Tokens mittels des Oblivious-Transfer-Protokolls auszugeben.

14. Authentifizierungsverfahren in einem Computernetzwerk, mit
Erstellen einer für ein Oblivious-Transfer-Protokoll geeigneter Vielzahl von Pseudonym-Tokens mit Weiterleitung derselben an eine Registrierungsstelle (14) oder Anfordern einer, für ein Oblivious-Transfer-Protokoll geeigneten, Vielzahl von Pseudonym-Tokens von der Registrierungsstelle (14) mit Empfang derselben von der Registrierungsstelle (14),
Überprüfen im Rahmen eines Authentifizierungsvorgangs einer Nutzerentität mit einem vorbestimmten Pseudonym-Token, ob das vorbestimmte Pseudonym-Token zu einem Anteil von unverbrauchten Pseudonym-Tokens der Vielzahl von Pseudonym-Tokens gehört, und

falls die Überprüfung ergibt, dass das vorbestimmte Pseudonym-Token zu dem Anteil unverbrauchter Pseudonym-Tokens nicht gehört, nicht Abschließen des Authentifizierungsvorgangs, und, falls die Überprüfung ergibt, dass das vorbestimmte Pseudonym-Token zu dem Anteil unverbrauchter Pseudonym-Tokens gehört, Abschließen des Authentifizierungsvorgangs und Markieren des Pseudonym-Tokens als verbraucht, so dass sich ein Anteil unverbrauchter Pseudonym-Tokens aus der Vielzahl von Pseudonym-Tokens verkleinert.

15. Computerprogramm mit einem Programmcode zur Durchführung des Verfahrens nach einem der Ansprüche 12 bis 14, wenn das Programm auf einem Computer abläuft.

**Claims**

1. A system (10) for pseudonymized authentication of user entities (24) in a computer network, implemented to verify (54; 84) a proof of identity of a user entity (24),
   output (56; 86), in the case of successful verification of the proof of identity of the user entity (24), a pseudonym token of a portion of unused pseudonym tokens from a plurality of pseudonym tokens to the user entity (24) by means of an Oblivious Transfer protocol;
   perform an authentication process of the user entity with the pseudonym token with the user entity; and
   in response to the authentication process of the user entity (24) with the pseudonym token, mark the pseudonym token as used, so that the portion of unused pseudonym tokens is reduced by the pseudonym token,
   the system comprising:

   a registration location (14) implemented to perform the verification of the proof of identity and the output of the pseudonym token; and
   a log-on location (16) implemented to perform the authentication process of the user entity with the user entity and to mark the pseudonym token as used, namely
   to verify within the authentication process of the user entity with the predetermined pseudonym token whether the predetermined pseudonym token belongs to the portion of unused pseudonym tokens from the plurality of pseudonym tokens, and
   if the result of the verification is that the predetermined pseudonym token does not belong to the portion of unused pseudonym tokens, not to complete the authentication process and, if the result of the verification is that the predetermined pseudonym token belongs to the portion of unused pseudonym tokens, to complete the authentication process and mark the pseudonym token as used, so that the portion of unused pseudonym tokens is reduced by the pseudonym token,
   wherein the registration location is implemented to output, during a next output of a pseudonym token, the same from the reduced portion of unused pseudonym tokens from the plurality of pseudonym tokens by means of the Oblivious Transfer protocol.

2. System according to claim 1, wherein the log-on location is implemented to specify access data for future log-on locations with the user entity for completing the authentication process.

3. Registration location (14) for outputting a pseudonym token for a user entity in a computer network (24), implemented to
   verify (54; 84) a proof of identity of the user entity (24), and
   output, in the case of successful verification of the proof of identity of the user entity (24), a pseudonym token of a portion of unused pseudonym tokens from a plurality of pseudonym tokens to the user entity (24) by means of an Oblivious Transfer protocol and, when the pseudonym token is marked as used by a log-on location, so that the portion of unused pseudonym tokens is reduced by the pseudonym token, to output, during a next output of a pseudonym token, the same from the reduced portion of unused pseudonym tokens from the plurality of pseudonym tokens by means of the Oblivious Transfer protocol.

4. Registration location (14) according to claims 3 or 4, implemented such that
   verifying the proof of identity (54; 84) comprises looking up in a user database where clearly differentiable entries for a plurality of authorized user entities are stored, and verifying whether the user entity (24) belongs to the plurality of authorized user entities, in which case the verification of the proof of identity is successful, and
   in the case that the result of the verification is that the user entity does not belong to the plurality of authorized user entities, the verification of the proof of identity is considered to have failed.

5. Registration location (14) according to claims 3 or 4, implemented to generate the plurality of pseudonym tokens upon request by a log-on location (16) and transmit them to the log-on location (16) via a firewall (20, 22), and implemented to provide, when generating the plurality of pseudonym tokens, the plurality of pseudonym tokens individually with a respective signature of the registration location, so that the pseudonym tokens can be verified by the log-on location.

6. Registration location (14) according to claims 3 or 4, implemented to generate the plurality of pseudonym tokens upon request by a log-on location (16) and transmit them to the log-on location (16) via a firewall (20, 22), and implemented to subject, upon request by a log-on location (16), a predetermined pseudonym token contained in the request to a verification of authenticity and to respond to the log-on location according to the result of the verification of authenticity.

7. A log-on location (16), implemented to, in a computer network,
either generate a plurality of pseudonym tokens suitable for an Oblivious Transfer protocol and pass them on to a registration location (14) or request and receive the same from the registration location (14),
verify within an authentication process of a user entity with a predetermined pseudonym token whether the predetermined pseudonym token belongs to a portion of unused pseudonym tokens from the plurality of pseudonym tokens, and
if the result of the verification is that the predetermined pseudonym token does not belong to the portion of unused pseudonym tokens, not to complete the authentication process and, if the result of the verification is that the predetermined pseudonym token belongs to the portion of unused pseudonym tokens, to complete the authentication process and mark the pseudonym token as used, so that a portion of unused pseudonym tokens from the plurality of pseudonym tokens is reduced.

8. Log-on location (16) according to claim 7, wherein the log-on location is implemented to verify, by means of a Zero-Knowledge Protocol, whether the predetermined pseudonym token belongs to the portion of unused pseudonym tokens from the plurality of pseudonym tokens.

9. Log-on location according to claims 7 or 8, wherein the log-on location is implemented to specify access data for future log-on locations with the user entity for completing the authentication process.

10. Log-on location according to one of claims 7 to 9, wherein the plurality of pseudonym tokens are individually provided with a respective signature of the registration location (14) and the log-on location is implemented to verify the predetermined pseudonym token within the authentication process as to whether the same is provided with the respective signature of the registration location (14) and, if this is not the case, not to complete the authentication process.

11. Log-on location according to one of claims 7 to 9, wherein the log-on location is implemented to request the registration location (14) within the authentication process to subject the predetermined pseudonym token to a verification of authenticity, and in the case that a response received by the registration location (14) according to a result of the verification of authenticity shows that the predetermined pseudonym token is not genuine, not to complete the authentication process.

12. Method for pseudonymized authentication of user entities in a computer network (24), comprising
verifying a proof of identity (54; 84) of a user entity (24),
outputting (56; 86), in the case of a successful verification of the proof of identity of the user entity (24), a pseudonym token of a portion of unused pseudonym tokens from a plurality of pseudonym tokens to the user entity (24) by means of an Oblivious Transfer protocol;
performing an authentication process of the user entity with the pseudonym token with the user entity; and
in response to the authentication process of the user entity (24) with the pseudonym token, marking the pseudonym token as used, so that the portion of unused pseudonym tokens is reduced by the pseudonym token,
wherein the verification of the proof of identity and the output of the pseudonym token are performed in a registration location (14); and
wherein the authentication process of the user entity with the user entity and marking the pseudonym token as used, so that the portion of unused pseudonym tokens is reduced by the pseudonym token, are performed in a log-on location (16),
wherein it is verified within the authentication process of the user entity with the predetermined pseudonym token whether the predetermined pseudonym token belongs to the portion of unused pseudonym tokens from the plurality of pseudonym tokens,

wherein, if the result of the verification is that the predetermined pseudonym token does not belong to the portion of unused pseudonym tokens, the authentication process is not completed and, if the result of the verification is that the predetermined pseudonym token belongs to the portion of unused pseudonym tokens, the authentication process is completed and the pseudonym token is marked as used,

wherein during a next output of a pseudonym token in the registration location, the same is output from the reduced portion of unused pseudonym tokens from the plurality of pseudonym tokens by means of the Oblivious Transfer protocol.

13. Method for outputting a pseudonym token for a user entity in a computer network (24), comprising

verifying a proof of identity (54; 84) of the user entity (24), and

outputting, in the case of a successful verification of the proof of identity of the user entity (24), a pseudonym token of a portion of unused pseudonym tokens from a plurality of pseudonym tokens to the user entity (24) by means of an Oblivious Transfer Protocol and, when the pseudonym token is marked as used by a log-on location, so that the portion of unused pseudonym tokens is reduced by the pseudonym token, outputting, during a next output of a pseudonym token, the same from the reduced portion of unused pseudonym tokens from the plurality of pseudonym tokens by means of the Oblivious Transfer protocol.

14. Authentication method in a computer network, comprising

generating a plurality of pseudonym tokens suitable for an Oblivious Transfer protocol and passing them on to a registration location (14) or requesting a plurality of pseudonym tokens suitable for an Oblivious Transfer protocol from the registration location (14) and receiving the same from the registration location (14),

verifying, within an authentication process of a user entity with a predetermined pseudonym token whether the predetermined pseudonym token belongs to a portion of unused pseudonym tokens from the plurality of pseudonym tokens, and

if the result of the verification is that the predetermined pseudonym token does not belong to the portion of unused pseudonym tokens, not completing the authentication process and, if the result of the verification is that the predetermined pseudonym token belongs to the portion of unused pseudonym tokens, completing the authentication process and marking the pseudonym token as used, so that a portion of unused pseudonym tokens from the plurality of pseudonym tokens is reduced.

15. Computer program having a program code for performing the method according to one of claims 12 to 14 when the program runs on a computer.

**Revendications**

1. Système (10) d'authentification pseudonymisée d'entités d'utilisateur dans un réseau d'ordinateurs (24) qui est conçu pour

vérifier (54; 84) une preuve d'identité d'une entité d'utilisateur (24),

en cas de vérification fructueuse de la preuve d'identité de l'entité d'utilisateur (24), sortir vers l'entité d'utilisateur (24) un jeton de pseudonyme d'une part de jetons de pseudonyme non utilisés parmi une pluralité de jetons de pseudonyme, au moyen d'un protocole de transfert oublieux (= oblivious transfer) (56; 86);

réaliser avec l'entité d'utilisateur une opération d'authentification de l'entité d'utilisateur au jeton de pseudonyme; et

après l'opération d'authentification de l'entité d'utilisateur (24) au jeton de pseudonyme, marquer le jeton de pseudonyme comme utilisé, de sorte que la part de jetons de pseudonyme non utilisés soit réduite du jeton de pseudonyme,

le système présentant les caractéristiques suivantes:

un poste d'enregistrement (14) qui est conçu pour réaliser la vérification de la preuve d'identité et la sortie du jeton de pseudonyme; et

un poste d'entrée en communication (16) qui est conçu pour réaliser avec l'entité d'utilisateur l'opération d'authentification de l'entité d'utilisateur et pour marquer le jeton de pseudonyme comme utilisé, et ce

pour vérifier, dans le cadre de l'opération d'authentification de l'entité d'utilisateur au jeton de pseudonyme prédéterminé, si le jeton de pseudonyme prédéterminé appartient à la part de jetons de pseudonyme non utilisés parmi la pluralité de jetons de pseudonyme, et

si la vérification a pour résultat que le jeton de pseudonyme prédéterminé n'appartient pas à la part de jetons de pseudonyme non utilisés, pour ne pas terminer l'opération d'authentification et, si la vérification a pour résultat que le jeton de pseudonyme prédéterminé appartient à la part de jetons de pseudonyme non utilisés, pour terminer l'opération d'authentification et marquer le jeton de pseudonyme comme utilisé, de sorte que la part de jetons de pseudonyme non utilisés soit réduite du jeton de pseudonyme,

dans lequel le poste d'enregistrement est conçu pour sortir, lors d'une sortie suivante d'un jeton de pseudonyme, ce dernier de la part réduite de jetons de pseudonyme non utilisés parmi la pluralité de jetons de pseudonyme au moyen du protocole de transfert oublieux.

2.  Système selon la revendication 1, dans lequel le poste d'entrée en communication est réalisé pour convenir avec l'entité d'authentification, à la fin de l'opération d'authentification, des données d'accès pour des opérations d'entrée en communication futures.

3.  Poste d'enregistrement (14) pour sortir un jeton de pseudonyme pour une entité d'utilisateur dans un réseau d'ordinateurs (24), lequel est conçu pour

vérifier (54; 84) une preuve d'identité de l'entité d'utilisateur (24), et

en cas de vérification fructueuse de la preuve d'identité de l'entité d'utilisateur (24), sortir vers l'entité d'utilisateur (24) un jeton de pseudonyme d'une part de jetons de pseudonyme non utilisés parmi une pluralité de jetons de pseudonyme, au moyen d'un protocole de transfert oublieux et, lorsque le jeton de pseudonyme est marqué comme utilisé par le poste d'entrée en communication, de sorte que la part de jetons de pseudonyme non utilisés soit réduite du jeton de pseudonyme, sortir, lors d'une sortie suivante d'un jeton de pseudonyme, ce dernier de la part réduite de jetons de pseudonyme non utilisés parmi la pluralité de jetons de pseudonyme à l'aide du protocole de transfert oublieux.

4.  Poste d'enregistrement (14) selon la revendication 3 ou 4, conçu de sorte que

la vérification de la preuve d'identité (54; 84) comporte une consultation d'une banque de données d'utilisateur dans laquelle sont mémorisées des entrées différant de manière univoque l'une de l'autre relatives à une pluralité d'entités d'utilisateur admise, et la vérification de si l'entité d'utilisateur (24) appartient à la pluralité d'entités d'utilisateur admises, auquel cas la vérification de la preuve d'identité est fructueuse, et

au cas où la vérification a pour résultat que l'entité d'utilisateur n'appartient pas à la pluralité d'entités d'utilisateur admises, la vérification de la preuve d'identité est considérée comme non réussie.

5.  Poste d'enregistrement selon la revendication 3 ou 4, conçu pour établir, à une demande d'un poste d'entrée en communication (16), la pluralité de jetons de pseudonyme et pour les envoyer au poste d'entrée en communication (16) via un pare-feu (20, 22) et conçu pour munir, lors de l'établissement de la pluralité de jetons de pseudonyme, la pluralité de jetons de pseudonyme individuellement d'une signature respective du poste d'enregistrement, de sorte que les jetons de pseudonyme puissent être vérifiés par le poste d'entrée en communication.

6.  Poste d'enregistrement selon la revendication 3 ou 4, conçu pour établir, à une demande d'un poste d'entrée en communication (16), la pluralité de jetons de pseudonyme et pour les envoyer au poste d'entrée en communication (16) via un pare-feu (20, 22), et conçu pour soumettre, à une demande du poste d'entrée en communication (16), un jeton de pseudonyme prédéterminé contenu dans la demande à une vérification d'authenticité et pour répondre au poste d'entrée en communication selon le résultat de la vérification d'authenticité.

7.  Poste d'entrée en communication (16), conçu pour, dans un réseau d'ordinateurs,

soit établir et transmettre à un poste d'enregistrement (14), soit demander au poste d'enregistrement (14) et recevoir une pluralité de jetons de pseudonyme convenant pour un protocole de transfert oublieux,

dans le cadre d'une opération d'authentification d'une entité d'utilisateur à jeton de pseudonyme prédéterminé, vérifier si le jeton de pseudonyme prédéterminé appartient à une part de jetons de pseudonyme non utilisés parmi la pluralité de jetons de pseudonyme, et

si la vérification a pour résultat que le jeton de pseudonyme prédéterminé n'appartient pas à la part de jetons de pseudonyme non utilisés, ne pas terminer l'opération d'authentification et, si la vérification a pour résultat que le jeton de pseudonyme prédéterminé appartient à la part de jetons de pseudonyme non utilisés, terminer l'opération d'authentification et marquer comme utilisé le jeton de pseudonyme, de sorte qu'une part de jetons de pseudonyme non utilisés parmi la pluralité de jetons de pseudonyme soit réduite.

8.  Poste d'entrée en communication (16) selon la revendication 7, dans lequel le poste d'entrée en communication est conçu pour vérifier à l'aide d'un protocole de connaissance zéro (= zero knowledge) si le jeton de pseudonyme prédéterminé appartient à la part de jetons de pseudonyme non utilisés parmi la pluralité de jetons de pseudonyme.

**9.** Poste d'entrée en communication selon la revendication 7 ou 8, dans lequel le poste d'entrée en communication est conçu pour convenir avec l'entité d'utilisateur, à la fin de l'opération d'authentification, des données d'accès pour des opérations d'entrée en communication futures.

**10.** Poste d'entrée en communication selon l'une des revendications 7 à 9, dans lequel la pluralité de jetons de pseudonyme sont munis individuellement d'une signature respective du poste d'enregistrement (14) et le poste d'entrée en communication est conçu pour vérifier, dans le cadre de l'opération d'authentification, le jeton de pseudonyme prédéterminé, pour savoir s'il est muni de la signature respective du poste d'enregistrement (14) et, si cela n'est pas le cas, ne pas terminer l'opération d'authentification.

**11.** Poste d'entrée en communication selon l'une des revendications 7 à 9, dans lequel le poste d'entrée en communication est conçu pour demander au poste d'enregistrement (14), dans le cadre de l'opération d'authentification, de soumettre le jeton de pseudonyme prédéterminé à une vérification d'authenticité et, au cas où une réponse obtenue du poste d'enregistrement (14) selon un résultat de la vérification d'authenticité a pour résultat que le jeton de pseudonyme prédéterminé n'est pas authentique, ne pas terminer l'opération d'authentification.

**12.** Procédé d'authentification pseudonymisée d'entités d'utilisateur dans un réseau d'ordinateurs (24), avec vérification d'une preuve d'identité (54; 84) d'une entité d'utilisateur (24),
en cas de vérification fructueuse de la preuve d'identité de l'entité d'utilisateur (24), sortie (56; 86) vers l'entité d'utilisateur (24) d'un jeton de pseudonyme d'une part de jeton de pseudonyme non utilisés parmi une pluralité de jetons de pseudonyme, au moyen d'un protocole de transfert oublieux;
réalisation avec l'entité d'utilisateur d'une opération d'authentification de l'entité d'utilisateur au jeton de pseudonyme; et
après l'opération d'authentification de l'entité d'utilisateur (24) au jeton de pseudonyme, marquer le jeton de pseudonyme comme utilisé, de sorte que la part de jetons de pseudonyme non utilisés soit réduite du jetons de pseudonyme,
dans lequel la vérification de la preuve d'identité et la sortie du jeton de pseudonyme sont réalisés dans un poste d'enregistrement (14); et
dans lequel l'opération d'authentification de l'entité d'utilisateur avec l'entité d'utilisateur et le marquage du jeton de pseudonyme comme utilisé, de sorte que la part de jetons de pseudonyme non utilisés soit réduite du jetons de pseudonyme sont réalisés dans un poste d'entrée en communication (16),
dans lequel il est vérifié, dans le cadre de l'opération d'authentification de l'entité d'utilisateur au jeton de pseudonyme prédéterminé, si le jeton de pseudonyme prédéterminé appartient à la part de jetons de pseudonyme non utilisés parmi la pluralité de jetons de pseudonyme,
dans lequel, si la vérification a pour résultat que le jeton de pseudonyme prédéterminé n'appartient pas à la part de jetons de pseudonyme non utilisés, l'opération d'authentification n'est pas terminée et, si la vérification a pour résultat que le jeton de pseudonyme prédétermine appartient à la part de jetons de pseudonyme non utilisés, l'opération d'authentification est terminée et le jeton de pseudonyme est marqué comme utilisé,
dans lequel, lors d'une sortie suivante d'un jeton de pseudonyme dans le poste d'enregistrement, ce dernier est sorti de la part réduite de jetons de pseudonyme non utilisés parmi la pluralité de jetons de pseudonyme au moyen du protocole de transfert oublieux.

**13.** Procédé pour sortir un jeton de pseudonyme pour une entité d'utilisateurs dans un réseau d'ordinateurs (24), avec vérification d'une preuve d'identité (54; 84) de l'entité d'utilisateur (24), et
en cas de vérification fructueuse de la preuve d'identité de l'entité d'utilisateur (24), sortir vers l'entité d'utilisateur (24) un jeton de pseudonyme d'une part de jetons de pseudonyme non utilisés parmi une pluralité de jetons de pseudonyme, à l'aide d'un protocole de transfert oublieux et, lorsque le jeton pseudonyme est marqué comme utilisé par un poste d'entrée en communication, de sorte que la part de jetons de pseudonyme non utilisés soit réduite du jeton de pseudonyme, lors d'une sortie suivante d'un jeton de pseudonyme, sortir ce dernier de la part réduite de jetons de pseudonyme non utilisés parmi la pluralité de jetons de pseudonyme à l'aide du protocole de transfert oublieux.

**14.** Procédé d'authentification dans un réseau d'ordinateurs, avec
établir une pluralité de jetons de pseudonyme convenant pour un protocole de transfert oublieux avec transmission de celle-ci à un poste d'enregistrement (14) ou demander au poste d'enregistrement (14) une pluralité de jetons de pseudonyme convenant pour un protocole de transfert oublieux, avec réception de celle-ci du poste d'enregistrement (14),
vérifier, dans le cadre d'une opération d'authentification, une entité d'utilisateur au jeton de pseudonyme prédéterminé, si le jeton de pseudonyme prédétermine appartient à une part de jetons de pseudonyme non utilisés parmi la pluralité de jetons de pseudonyme, et

si la vérification a pour résultat que le jeton de pseudonyme prédéterminé n'appartient pas à la part de jetons de pseudonyme non utilisés, ne pas terminer l'opération d'authentification et, si la vérification a pour résultat que le jeton de pseudonyme prédétermine appartient à la part de jetons de pseudonyme non utilisés, terminer l'opération d'authentification et marquer le jeton de pseudonyme comme utilisé, de sorte qu'une part de jetons de pseudonyme non utilisés parmi la pluralité de jetons de pseudonyme soit réduite.

15. Programme d'ordinateur avec un code de programme pour réaliser le procédé selon l'une des revendications 12 à 14 lorsque le programme est exécuté sur un ordinateur.

FIG 1

EP 2 438 707 B1

R A B

Pseudonymtokenerstellung — 50

Pseudonymtoken — 52

B identifiziert sich ggb. R — 54

R gibt mittels OT-Protokoll ein Pseudonymtoken an B aus

56

B meldet sich bei A mit — 58
dem Pseudonymtoken an

Pseudonymtokenüberprüfung
und ggf- markierung — 60

Vereinbarung zukünftiger
Zugangsdaten

62

t

# FIG 2

R                                    A                                    B

Anfertigung einer
← Pseudonymtokenerstellung
                                                    80

┌──────────────────────────┐
│ Pseudonymtokenerstellung │── 82
└──────────────────────────┘

                                                                    84
← B identifiziert sich ggb. R ─────────────────────────────

← R gibt per OT-Protokoll ein Pseudonymtoken an B aus →
  86

                                                            88
            ← B meldet sich bei A mit
              dem Pseudonymtoken an

                            90
← Rückfrage ──────────

┌──────────────────────────┐
│ Pseudonymtokenüberprüfung │── 92
│ und ggf- markierung        │
└──────────────────────────┘

            94
── Antwort ──────→

            Vereinbarung zukünftiger
        ← Zugangsdaten →
                96

t

# FIG 3

**FIG 4**

sd Vorbereitungsphase

-A wählt: r (zufällig), C_1,...,C_{N-1} (zufällig), p,q als Primzahlen und damit eine Gruppe \mathbb{Z_p^*} und wählt ein g als Erzeugendenelement einer Untergruppe G_q, sowie eine Hashfunktion H
-A wählt N Id's M_0,...,M{N-1} aus Z_q
-A berechnet $(C\_i)^r \bmod q$ für $1 <= i <= N-1$ und $g^r$
-A signiert und verschlüsselt folgende Informationen mit dem öffentlichen Schlüssel von V:
    -M_0,...,M_{N-1},C_1,...,C_{N-1},p,q,r,H,g,$g^r$
und veröffentlicht diese Informationen          Schritt V1:

Nutzer

Validierungsstelle/Registrierungsstelle

Anmeldestelle

1: Erhalte (A's Informationen) Schritt V2:

2: Verschlüssele (A's Informationen)

Schritt V3:
-V wählt ein L aus Z_q und signiert und verschlüsselt den Wert mit A'S öffentlichen Schlüssel und veröffentlicht diesen Wert

Schritt V4:    3: Hole (V's veröffentlichen Wert)

Schritt V5:
-A entschlüsselt den Wert und erhält L
-A berechnet für alle M_i:
$T\_i = (M\_i)^L$

EP 2 438 707 B1

EP 2 438 707 B1

sd Authentifikation

in den ID's ist der Wert L aus Z_n enthalten,der für OhtaOkamoto benötigt wird

Nutzer

Validierungsstelle/Registrierungsstelle

Anmeldestelle

Vorbereitungsphase

1: Wähle (p,q als Primzahlen und Hashfunktion H)

2: Wähle (N ID's M_0,...M_{N-1})

Schritt V1*

3: Sende (p,q,H,M_0....M_{N-1})

Schritt V2*

4: Berechnet (Werte $(M\_i)^\wedge L = T\_i$)

5: Wähle_zufällig (r,C_1,....,C_{N-1})

6: Berechnet voraus $((C\_i)^\wedge r \bmod q)$

Schritt V3*

FIG 5A

| FIG 5 | FIG 5A |
| | FIG 5B |
| | FIG 5C |

EP 2 438 707 B1

7: Registriere
Fordere an (Zertifikat)

Schritt R1

8: Sende (Zertifikat)

8.1: Prüfe (Zertifikat)

alt [Zertifikat validiert]

ref

Unbemerkte Übertragung
Schritt R2

Registrierung

[sonst]

FIG 5B

| FIG 5 | FIG 5A |
| | FIG 5B |
| | FIG 5C |

FIG 5C

EP 2 438 707 B1

| FIG 5 | FIG 5A |
| | FIG 5B |
| | FIG 5C |

EP 2 438 707 B1

**sd Authentifikation**

| Nutzer | Validierungsstelle/Registrierungsstelle | Anmeldestelle |

Vorbereitungsphase

1: Wähle (p,q als Primzahlen und Hashfunktion H)

2: Wähle (N ID's M_0,...M_{N-1})

Schritt V1*:
3: Sende (p,q,H,M_0....M_{N-1})

Schritt V2*:

4: Wähle_zufällig (r,C_1,....,C_{N-1})

6: Berechnet voraus $((C_i)^{\wedge} r \bmod q$

Schritt V3*:

**FIG 6A**

| FIG 6 | FIG 6A |
| | FIG 6B |
| | FIG 6C |

EP 2 438 707 B1

6: Registriere()

Fordere an (Zertifikat)

7.1: Prüfe (Zertifikat)

Schritt R1:

7: Sende (Zertifikat)

8: Verschlüssele (alle M_i mit
ihrem privaten Schlüssel)

alt

[Zertifikat validiert]

ref

Unbemerkte Übertragung
Schritt R2

Registrierung

[sonst]

Registrierung
anhalten

FIG 6B

| FIG 6 | FIG 6A |
| | FIG 6B |
| | FIG 6C |

EP 2 438 707 B1

Anmeldung

Schritt A1: 9: Sende (gewählte M_I (unterzeichnet durch V und verschlüsselt mit A's öffentlichem Schlüssel->T_i))

Verbindung über Proxy

10: Verschlüssele (T_i und prüfe V's Signatur)

11: Prüfe (T_i)

11.1: Speichere (M_i wie verwendet)

alt [Schlüssel ok]   12: Sende (Anmeldung gewährt)

ref   OhtaOkamoto_1(Zufallseingabe)
Schritt A2:

Verbindung über Proxy

13: Speichere privaten Schlüssel (erneute Anmeldung mit neuem Schlüssel)

[sonst]   14: Sende (Anmeldung verweigert)

16: Sende (alle gespeicherten öffentlichen Schlüssel, die für Anmeldung verwendet werden)

15: Speichere öffentlichen Schlüssel (Pool)

17: Lösche (entsprechende private Schlüssel aus dem Pool)

FIG 6C

| FIG 6 | FIG 6A |
| | FIG 6B |
| | FIG 6C |

sd Einkommen_Verteilung

Nutzer | Anmeldestelle | Künstler/Bereitsteller | Bewertungsstelle | Anzahlungsstelle | Distributionssystem

ref Schritt A1: Anmeden

1: Registriere() Schritt A2:

Nehme Registrierung an (Künstler-ID zuweisen)

2: Sende öffentlichen Schlüssel

Anmeldung

3: Sende (Inhalt) Schritt B1

3.1: Hänge an (Inhalts-ID)

4: Sende (Inhalt einschließlich Inhalts-ID) Schritt B2:

Schritt B3: 5: Sende (Inhalts-ID) Schritt B4/B5

6: Lade Anforderung herunter (Inhalt)

Sende (Inhalt einschließlich Inhalts-ID)

Inhaltsbereitstellung und -verteilung

FIG 7A

FIG 7
| FIG 7A |
| FIG 7B |

EP 2 438 707 B1

7: Stimme ab für Inhalts-ID

ref

Schritte C1 und C2
Stimme ab

Stimmabgabe

Stimmauszählung,
Auszahlung

Schritt D1:
8: Sende (Zählwert von
Stimmen pro Inhalts-ID)

8.1: Zähle aus
(bezüglich Zählwert)
Schritt D2:

9: Zahle aus (bezüglich Zählwert)

Schritt D3:

FIG 7B

| FIG 7 | FIG 7A |
|-------|--------|
|       | FIG 7B |

**sd Abstimmung**

| Nutzer | | Bewertungs-stelle |

1: Unterzeichnete Inhalt (mit eigenem privaten Schlüssel)

1.1: Verschlüsselte Inhalt (mit öffentlichem Schlüssel des Systems)

Schritt C1:

2: Sende (Inhalts-ID)

2.1: Verschlüssele (mit privatem Schlüssel)

2.1.1: Prüfe Signatur (mit öffentlichem Schlüssel aus dem Pool)

Schritt C2:

2.2: Prüfe (Anzahl "n" der Verwendungen des öffentlichen Schlüssels)

**alt** [n\geq Vorgabe

2.2:1 Sende Mitteilung
("zuviele Abstimmungen")

[sonst]

3: Speichere (Zählwert der Inhalts-ID)

FIG 8

**sd OhtaOkamoto_1**

**Nutzer** — **Anmeldestelle**

-Wähle: $p,q\in\mathbb{P}$ und berechnet $n=pq$ und wählt $k\in\mathbb{N}$
-Wähle: zufällig $S_{i}$, $L,\in\mathbb{Z_{n}}$, $i=1,...,k$
->Privater Schlüssel$=(S_{1}...S_{k},n,L)$
berechnet öffentlichen Schlüssel: $I_{i}=[S_{i})^{L}$
- Veröffentliche $(I_1,...,I_k,n,L)$

**Schleife [0,t]**

1: Wähle $(R\in\mathbb{Z_{n}})$

2: Sende $(X=R^{L}, k,I=(I_{1}...I_{k}))$

2.1: Wähle $((e_{1},...,e_{k})\in\mathbb{Z_{n}^k})$

Sende $((e_{41}...e{k}))$

3: Berechne $(Y=R*\prod_{i=1}^k(S_{i}^{e_{i}}\bmod n))$

4: Sende $(Y)$

4.1: Prüfe Gleichung $(Y^{L}=X*\prod_{i=1}^k(I_{i}^{E_{i}}\bmod n))$

**FIG 9A**

| FIG 9 | FIG 9A |
| | FIG 9B |

EP 2 438 707 B1

FIG 9B

FIG 9B

EP 2 438 707 B1

**sd Unbemerkte Übertragung**

-p ist die Ordnung der Gruppe $Z\_\{p\}^{\{*\}}$
-q ist Ordnung der Untergruppe $G\_\{q\}$
-g ist das Erzeugendenelement der Gruppe $G\_\{q\}$

**Nutzer**

**Validierungsstelle**

1: Sende (p,q,g)

2: Sende $(g^r, C\_1....C\_\{N-1\})$

-wählt zufällig k
-wählt sich z\in (1,...,N-1)
->öffentlicher Schlüssel $PK\_z = g^k$ und $PK\_0 = C\_z/PK\_z$

3: Sende (PK_0)

4: Berechnet (privaten Schlüssel $(g^r)^k = (PK\_z)^r$)

5: Berechnet $((PK\_0)^r)$

FIG 10A

| FIG 10 | FIG 10A |
|--------|---------|
|        | FIG 10B |

6: Berechnet (\für alle i: $(PK\_i)^\wedge r/(PK\_0)^\wedge r$)

7: Wähle (Zufallszeichenfolge R)

8: Verschlüssele ($M\_i$ durch $H((PK\_i)^\wedge r,R,i)\backslash oplus\ M\_i)$)

9: Sende (verschlüsselte Mitteilungen)

10: Verschlüssele (mit $H((PK\_z)^\wedge r,R,z)$)

damit erhält U genau eine
ID M_z und die
Dechiffrierung der anderen
ergibt Unsinn

FIG 10B

| FIG 10 | FIG 10A |
|--------|---------|
|        | FIG 10B |

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060031301 A

**In der Beschreibung aufgeführte Nicht-Patentliteratur**

- An attack on the needham-schroeder public-key authentication protocol. *Information Processing Letters,* 1995, vol. 56, 131-133
- **M. BURROWS ; M. ABADI ; R.M. NEEDHAM.** A logical of authentification. *Proceeding of the Royal Society of London,* 1989, vol. 426, 233-271
- **M. BELLARE ; S. MICALI.** Non-interactive oblivious transfer and applications. *Proc. Adv. in Cryptology - Crypto '89,* 1990, vol. 435, 547-557
- **BO GYEONG KANG et al.** A model 61 for Privacy Preserving Metering Service. *Second International Conference on Electrical Engineering,* 25. Marz 2008
- **MIHIR BELLARE ; PHILIP ROGAWAY.** Random oracles are practical: A paradigm for designing e_cient protocols. *Proceedings of the 1st ACM Conference on Computer, and Communications Security,* November 1993, 62-73
- **ALBRECHT BEUTELSPACHER ; JÖRG SCHWENK ; KLAUS-DIETER WOLFENSTETTER.** Moderne Verfahren der Kryptographie. Vieweg Wiesbaden, 2006
- **R. CANETTI ; O. GOLDREICH ; S. HALEVI.** The random oracle methodology. *Proc. 30th ACM Symposium on Theory of Computing,* 1998, vol. 30, 209-218
- **C. ECKERT ; IT-SICHERHEIT.** Konzept - Verfahren - Protokolle. Oldenbourg Verlag München Wien, 2001
- **T. ELGAMAL.** A public key cryptosystem and a signature scheme based on diskrete logarithms. *IEEE Trans. on Information Theory,* 1985, vol. IT-31, 469-472
- How to proof yourself: Practical solutions to identification and signature problems. **A. FIAT ; A. SHAMIR.** CRYPTO '86. LNCS, 1986, vol. 263, 186-194
- **R. HOUSLEY ; W. FORD ; W. POLK ; D. SOLO.** Internet x.509 public key infrastructure certificate and crl profil. *RFC,* 1999, 2459
- **C. L'ANSON ; C. MITCHELL.** Security defects ccitt recommendation x.509 - the directory authentication framework. *Computer Communications Review,* 1990, vol. 20 (2), 30-34
- **GAVIN LOWE.** An attack on the needham-schroeder public-key authentication protocol. *Information Processing Letters,* 1995, vol. 56, 131-133
- **ANNA LYSYANSKAYA.** Authentication without identification. *Security & Privacy,* 2007, vol. 5-3, 69-71
- **MONI NAOR ; BENNY PINKAS.** E_cient oblivious transfer protocols. *Proceedings of the twelfth annual ACM-SIAM symposium on Discrete algorithms,* 2001, vol. 12, 448-457
- **ROGER NEEDHAM ; MICHAEL SCHROEDER.** Using encryption for authentication on large networks of computers. *Communications of the ACM,* Dezember 1978, vol. 21 (12), 993-999
- **KAZUO OHTA ; TATSUAKI OKAMOTO.** A modification of the fiat-shamir scheme. *Lecture Notes in Computer Science,* 1988, vol. 403, 232-243
- **R.L. RIVEST ; A. SHAMIR ; L. ADLEMAN.** A method for obtaining digital signatures and public key cryptosystems. *Communications of the ACM,* Februar 1978, vol. 21 (2), 120-126
- Lower bounds for discrete logarithms and related problems. **V. SHOUP.** Proc. Eurocrypt '97. LNCS, 1997, vol. 1233, 256-266